# EUROPEAN PATENT APPLICATION

(11) **EP 1 764 697 A1**
(43) Date of publication of application: **21.03.2007**
(21) Application number: 05728495.2
(22) Date of filing: 08.04.2005
(51) Int. Cl.: G06F 12/14, G11B 20/10, H04N 5/91

(54) **TERMINAL DEVICE AND COPYRIGHT PROTECTION SYSTEM**

(30) Priority: 14.04.2004 JP 2004118594
(71) Applicant: MATSUSHITA ELECTRIC INDUSTRIAL CO., LTD., Osaka 571-8501 (JP)
(72) Inventor: YOKOTA, Kaoru Mat. Elec. Ind. Co., Ltd., IPROC, Chuo-ku, Osaka 540-6319 (JP); OHMORI, Motoji Mat. Elec. Ind. Co., Ltd., IPROC, Chuo-ku, Osaka 540-6319 (JP); NAKANO, Toshihisa Mat. Elec. Ind. Co., Ltd., IPROC, Chuo-ku, Osaka 540-6319 (JP); HARADA, Shunji Mat. Elec. Ind. Co., Ltd., IPROC, Chuo-ku, Osaka 540-6319 (JP); ITO, Yoshikatsu Mat. Elec. Ind. Co., Ltd., IPROC, Chuo-ku, Osaka 540-6319 (JP); TAKAHASHI, Jun Mat. Elec. Ind. Co., Ltd., IPROC, Chuo-ku, Osaka 540-6319 (JP)
(74) Representative: Grünecker, Kinkeldey, Stockmair & Schwanhäusser Anwaltssozietät
(86) International application number: PCT/JP2005/006906
(87) International publication number: WO 2005/101215

(57) **Abstract**

To provide a terminal device with which, even if content that has undergone conversion is moved to another device, the content before the conversion can be used when moving the content from the device which is a move destination of the content back to a move source of the content. The terminal device stores the content in advance, applies an irreversible conversion which causes a decrease in quality to the content to generate converted content, and writes the converted content to a storage medium. The terminal device encrypts a block in the content using an encryption key to generate an encrypted block, replaces the block in the content with the encrypted block, and writes the encryption key to the storage medium.

## Description

### Technical Field

The present invention relates to a terminal device and a copyright protection system including a portable medium for preventing unauthorized use of content, and especially relates to techniques for enhancing user-friendliness while preventing unauthorized use.

### Background Art

With the launch of BS digital broadcasting and terrestrial digital broadcasting, digital content such as movies has become widely distributed in recent years. Since digital content (hereafter "content") is easy to be replicated, there is an increasing concern about piracy acts using the Internet and other media and other unauthorized acts such as redistribution of duplicated content. This spurs development of techniques for preventing such unauthorized acts (for content protection).

As a copy protection measure for a digital broadcast program, a control signal "Copy Once", which indicates recording is permitted only once, is attached to the digital broadcast program, and the digital broadcast program with this "Copy Once" control signal is encrypted and broadcast. Such a digital broadcast program accompanied by the "Copy Once" control signal can be recorded using a recording/reproduction device that is compatible with CPRM (Content Protection for Recordable Media). The recorded digital broadcast program cannot be copied to another device, and can only be moved to another compatible device.
Patent document 1: Japanese Patent Application Publication No. 2003-228522.
Non-patent document 1: Shinichi Ikeno & Kenji Koyama Modern Cryptosystem [Gendai Angouriron], I.E.I.C.E.
Non-patent document 2: Eiji Okamoto Introduction to Theory of Cryptography [Angou Riron Nyumon], Kyoritsu Shuppan.

### Disclosure of the Invention

### Problems the Invention is going to Solve

However, since the digital broadcast program is high-image-quality content containing a large amount of data, when the move destination is a device having only a small storage capacity such as a memory card, the recording/reproduction device needs to compress the high-image-quality content by image conversion so as to reduce its data size, before moving it to the memory card.
This being so, when the content is moved from the move-destination memory card back to the recording/reproduction device, the original high-image-quality content has already been lost as a result of the image conversion. Hence the recording/reproduction device can no longer use the high-image-quality content.

The present invention was conceived to solve the above problem, and aims to provide a terminal device, a content protection system, a content movement method, and a content movement program with which, even if content that has undergone image conversion is moved to another device, the content before the image conversion can be used when the content is moved from the move-destination device back to the move-source device.

### Means of Solving the Problems

The stated aim can be achieved a terminal device for moving content to a portable storage medium, including: an original content storage unit operable to store original content composed of a plurality of blocks; a converted content generation unit operable to perform an irreversible conversion on the original content, to generate converted content; a converted content write unit operable to write the converted content to the storage medium; an encryption unit operable to encrypt any of the plurality of blocks of the original content using an encryption key to generate an encrypted block, and replace the block in the original content storage unit with the encrypted block; a key write unit operable to write the encryption key to the storage medium; and a key deletion unit operable to delete the encryption key used for the encryption from the terminal device.

### Effects of the Invention

According to this construction, the terminal device encrypts a block in the original content stored in the terminal device using the encryption key and writes the encryption key to the storage medium. This makes it possible to prevent the user from using the original content.
Also, the terminal device stores the original content with the encrypted block in the original content storage unit. Accordingly, even after the converted content is moved to the storage medium, the original content before the conversion can be restored by obtaining the encryption key from the storage medium.

Here, the original content storage unit may store the original content in a form of encrypted content with the plurality of blocks being in an encrypted form, wherein the converted content generation unit decrypts the encrypted content to generate the original content, and performs the irreversible conversion on the generated original content to generate the converted content, and the encryption unit encrypts the block in the encrypted form using the encryption key to generate a double encrypted block, and replaces the block in the encrypted form in the original content storage unit with the generated double encrypted block.

According to this construction, the terminal device double encrypts the block. This enhances the security of the original content.
Here, the encryption unit may encrypt the plurality of blocks in the encrypted form to generate a plurality of double encrypted blocks, and replace the plurality of blocks in the encrypted form in the original content storage unit respectively with the generated plurality of double encrypted blocks.

According to this construction, the terminal device double encrypts all of the plurality of blocks.
Here, the encryption unit may generate a plurality of different encryption keys in a one-to-one correspondence with the plurality of blocks in the encrypted form, and encrypt the plurality of blocks in the encrypted form respectively using the plurality of encryption keys to generate the plurality of double encrypted blocks, wherein the key write unit writes the plurality of encryption keys generated by the encryption unit, to the storage medium.

According to this construction, the terminal device encrypts each of the plurality of blocks in the encrypted form using a different encryption key to generate the double encrypted block. As a result, a malicious third party cannot obtain the original content, unless it acquires a key used for encrypting the original content and all encryption keys corresponding to the plurality of blocks in the encrypted form. This enhances the security of the content.

Here, the encryption unit may generate a predetermined number of encryption keys, and encrypt the plurality of blocks in the encrypted form using the predetermined number of encryption keys in turn to generate the plurality of double encrypted blocks, the predetermined number being less than a number of the plurality of blocks, wherein the key write unit writes the predetermined number of encryption keys generated by the encryption unit, to the storage medium.
According to this construction, the terminal device generates the double encrypted block for each of the plurality of blocks in the encrypted form using the predetermined number of encryption keys in turn, and writes the predetermined number of encryption keys to the storage medium. In this way, the number of encryption keys to be written to the storage medium can be reduced.

Here, the plurality of blocks in the encrypted form may be stored in the original content storage unit in a reproduction order, wherein the encryption unit includes: a function storage unit operable to store a one-way function in advance; a first key generation unit operable to generate key data; a second key generation unit operable to generate a plurality of ordinal encryption keys in a one-to-one correspondence with the plurality of blocks in the encrypted form, each of the plurality of ordinal encryption keys being generated by applying the one-way function to the key data a number of times which depends on a position of a corresponding block in the encrypted form in the reproduction order; an encrypted block generation unit operable to encrypt the plurality of blocks in the encrypted form respectively using the plurality of ordinal encryption keys generated by the second key generation unit, to generate the plurality of double encrypted blocks; and a block replacement unit operable to replace the plurality of blocks in the encrypted form in the original content storage unit respectively with the plurality of double encrypted blocks generated by the encrypted block generation unit, and the key write unit writes the key data generated by the first key generation unit, to the storage medium.

According to this construction, the terminal device writes only the key data to the storage medium as the encryption key. In this way, the number of encryption keys to be written to the storage medium can be reduced.
Here, the converted content write unit may encrypt the converted content to generate encrypted converted content, and, instead of writing the converted content to the storage medium, write the encrypted converted content and decryption key information for decrypting the encrypted converted content to the storage medium.

According to this construction, the terminal device writes the encrypted converted content to the storage medium. This enhances the security of the converted content.
Here, the converted content write unit may generate the encrypted converted content and write the encrypted converted content, by encrypting each of the plurality of blocks which have been converted in the generation of the converted content to generate an encrypted converted block, and writing the encrypted converted block to the storage medium.

According to this construction, the terminal device generates the encrypted converted block for each of the plurality of blocks which have been converted in the generation of the converted content, and writes the encrypted converted block to the storage medium. Thus, even if the terminal device fails at writing one encrypted converted block, the terminal device can resume the operation from that encrypted converted block.
Here, the terminal device, after writing the encrypted converted content and the decryption key information to the storage medium and replacing the block in the encrypted form in the original content storage unit with the double encrypted block, may further include: a converted content deletion unit operable to perform control relating to deletion of the encrypted converted content and the decryption key information from the storage medium; and a decryption unit operable to, after the converted content deletion unit performs the control relating to the deletion, read the encryption key from the storage medium, decrypt the double encrypted block using the read encryption key as a decryption key to generate the block in the encrypted form, and replace the double encrypted block in the original content storage unit with the generated block in the encrypted form.

According to this construction, the terminal device performs the control relating to the deletion of the encrypted converted content and the decryption key information, and then decrypts the double encrypted block to generate the block in the encrypted form and replaces the double encrypted block in the original content storage unit with the generated block in the encrypted form. This makes it possible to recover the pre-converted original content.

Here, the terminal device may further include: a reproduction unit operable to reproduce the original content, wherein the decryption unit decrypts the plurality of blocks in the encrypted form to generate the original content, and outputs the generated original content to the reproduction unit.
According to this construction, the terminal device decrypts all of the plurality of blocks in the encrypted form to generate the original content, with it being possible to reproduce the original content.

Here, the original content storage unit may store the original content in a form of encrypted content with the plurality of blocks being in an encrypted form, wherein the plurality of blocks in the encrypted form are stored in the original content storage unit in a reproduction order, the converted content generation unit decrypts the encrypted content to generate the original content, and performs the irreversible conversion on the generated original content to generate the converted content, and the encryption unit encrypts a set of blocks in the encrypted form which are consecutive in the reproduction order using the encryption key to generate a set of double encrypted blocks, and replaces the set of blocks in the encrypted form in the original content storage unit with the generated set of double encrypted blocks, the set of blocks having a total reproduction time length within a predetermined time.

According to this construction, the terminal device encrypts the set of blocks in the encrypted form whose reproduction time length is within the predetermined time, using the encryption key to generate the set of double encrypted blocks. The terminal device then replaces the set of blocks in the encrypted form in the original content storage unit with the set of double encrypted blocks. The amount of data subjected to double encryption here is greater than when only one block is subj ected to double encryption. This contributes to higher security.

Here, the original content may contain a plurality of frames generated by compression-coding a moving image,
wherein each frame is made up of at least one block, the plurality of blocks in the encrypted form have been generated by encryption using a device key unique to the terminal device, the terminal device further includes: a block decryption unit operable to decrypt the set of blocks in the encrypted form which are consecutive in the reproduction order using the device key as a decryption key to generate the set of blocks, the set of blocks having the reproduction time length within the predetermined time, and the encryption unit generates the set of double encrypted blocks by, from among one or more frames contained in the set of blocks, encrypting an independent frame that does not depend on a remaining frame using the device key and the encryption key in the stated order, and encrypting the remaining frame using the device key, and replaces the set of blocks in the encrypted form in the original content storage unit with the generated set of double encrypted blocks.

According to this construction, the terminal device double encrypts the independent frame, and single encrypts the remaining frame using only the device key. This alleviates a processing load for double encryption.
Here, the terminal device for moving content to a portable storage medium may include: an original content storage unit operable to store original content composed of a plurality of blocks including a decryption block; a non-original content storage unit operable to store non-original content generated by encrypting converted content which is generated by performing an irreversible conversion on the original content; a decryption block obtaining unit operable to obtain, from the original content, a converted decryption block included in the converted content and used for decrypting the non-original content; a converted content generation unit operable to decrypt the non-original content using the obtained converted decryption block, to generate the converted content; a converted content write unit operable to write the converted content generated by the converted content generation unit, to the storage medium; an encryption unit operable to encrypt any of the plurality of blocks of the original content using an encryption key to generate an encrypted block, and replace the block in the original content storage unit with the encrypted block; a key write unit operable to write the encryption key to the storage medium; and a key deletion unit operable to delete the encryption key used for the encryption from the terminal device.

According to this construction, the terminal device encrypts a block in the original content stored in the terminal device using the encryption key and writes the encryption key to the storage medium. This makes it possible to prevent the user from using the original content.
Also, the terminal device stores the original content with the encrypted block in the original content storage unit. Accordingly, even after the converted content is moved to the storage medium, the original content before the conversion can be restored by obtaining the encryption key from the storage medium.

Also, the terminal device stores the non-original content generated by encrypting the converted content, in advance. This saves the need to perform the irreversible conversion on the original content when moving the content to the storage medium. As a result, a processing load for content movement can be lightened.
Here, the non-original content may be generated by encrypting the converted content using the converted decryption block as an encryption key, wherein the converted decryption block is deleted from the terminal device after the generation of the non-original content, and the decryption block obtaining unit performs the irreversible conversion on the original content to generate the converted content, and obtains the converted decryption block from the generated converted content.

According to this construction, when decrypting the non-original content, the terminal device generates the converted decryption block from the original content. This saves the need to store a decryption key for decrypting the non-original content in advance.
Here, the original content storage unit may store the original content in a form of encrypted content with the plurality of blocks being in an encrypted form, wherein the decryption block obtaining unit, instead of performing the irreversible conversion on the original content to generate the converted content and obtaining the converted decryption block, decrypts the decryption block in the encrypted form, and performs the irreversible conversion on the decrypted decryption block to generate the converted decryption block, and the encryption unit encrypts the block in the encrypted form using the encryption key to generate a double encrypted block, and replaces the block in the encrypted form in the original content storage unit with the double encrypted block.

According to this construction, the terminal device double encrypts the block. This enhances the security of the original content.
Here, the encryption unit may encrypt the plurality of blocks in the encrypted form to generate a plurality of double encrypted blocks, and replaces the plurality of blocks in the encrypted form in the original content storage unit respectively with the generated plurality of double encrypted blocks.

According to this construction, the terminal device double encrypts all of the plurality of blocks.
Here, the encryption unit may generate a plurality of different encryption keys in a one-to-one correspondence with the plurality of blocks in the encrypted form, and encrypt the plurality of blocks in the encrypted form respectively using the plurality of encryption keys to generate the plurality of double encrypted blocks, wherein the key write unit writes the plurality of encryption keys generated by the encryption unit, to the storage medium.

According to this construction, the terminal device encrypts each of the plurality of blocks in the encrypted form using a different encryption key to generate the double encrypted block. As a result, a malicious third party cannot obtain the original content, unless it acquires a key used for encrypting the original content and all encryption keys corresponding to the plurality of blocks in the encrypted form. This enhances the security of the content.

Here, the encryption unit may generate a predetermined number of encryption keys, and encrypt the plurality of blocks in the encrypted form using the predetermined number of encryption keys in turn to generate the plurality of double encrypted blocks, the predetermined number being less than a number of the plurality of blocks, wherein the key write unit writes the predetermined number of encryption keys generated by the encryption unit, to the storage medium.
According to this construction, the terminal device generates the double encrypted block for each of the plurality of blocks in the encrypted form using the predetermined number of encryption keys in turn, and writes the predetermined number of encryption keys to the storage medium. In this way, the number of encryption keys to be written to the storage medium can be reduced.

Here, the plurality of blocks in the encrypted form may be stored in the original content storage unit in a reproduction order, wherein the encryption unit includes: a function storage unit operable to store a one-way function in advance; a first key generation unit operable to generate key data; a second key generation unit operable to generate a plurality of ordinal encryption keys in a one-to-one correspondence with the plurality of blocks in the encrypted form, each of the plurality of ordinal encryption keys being generated by applying the one-way function to the key data a number of times which depends on a position of a corresponding block in the encrypted form in the reproduction order; an encrypted block generation unit operable to encrypt the plurality of blocks in the encrypted form respectively using the plurality of ordinal encryption keys generated by the second key generation unit, to generate the plurality of double encrypted blocks; and a block replacement unit operable to replace the plurality of blocks in the encrypted form in the original content storage unit respectively with the plurality of double encrypted blocks generated by the encrypted block generation unit, and the key write unit writes the key data generated by the first key generation unit, to the storage medium.

According to this construction, the terminal device writes only the key data to the storage medium as the encryption key. In this way, the number of encryption keys to be written to the storage medium can be reduced.
Here, the converted content write unit may encrypt the converted content to generate encrypted converted content, and write the encrypted converted content and decryption key information for decrypting the encrypted converted content, to the storage medium.

According to this construction, the terminal device writes the encrypted converted content to the storage medium. This enhances the security of the converted content.
Here, the non-original content storage unit may store the non-original content which is generated by converting the plurality of blocks and then encrypting the converted plurality of blocks using the converted decryption block as an encryption key, wherein the converted content write unit includes: a first generation unit operable to decrypt the plurality of encrypted converted blocks to generate the plurality of converted blocks; a second generation unit operable to encrypt the plurality of converted blocks generated by the first generation unit, to generate a plurality of re-encrypted converted blocks; and a write unit operable to write the plurality of re-encrypted converted blocks generated by the second generation unit to the storage medium.

According to this construction, the terminal device generates an encrypted converted block for each of the plurality of blocks which have been converted in the generation of the converted content, and writes the encrypted converted block to the storage medium. Thus, even if the terminal device fails at writing one encrypted converted block, the terminal device can resume the operation from that encrypted converted block.
Here, the terminal device, after writing the encrypted converted content and the decryption key information to the storage medium and replacing the block in the encrypted form in the original content storage unit with the double encrypted block, may further include: a converted content deletion unit operable to perform control relating to deletion of the encrypted converted content and the decryption key information from the storage medium; and a decryption unit operable to, after the converted content deletion unit performs the control relating to the deletion, read the encryption key from the storage medium, decrypt the double encrypted block using the read encryption key as a decryption key to generate the block in the encrypted form, and replace the double encrypted block in the original content storage unit with the generated block in the encrypted form.

According to this construction, the terminal device performs the control relating to the deletion of the encrypted converted content and the decryption key information, and then decrypts the double encrypted block to generate the block in the encrypted form and replaces the double encrypted block in the original content storage unit with the generated block in the encrypted form. This makes it possible to recover the pre-converted original content.

Here, the terminal device may further include: a reproduction unit operable to reproduce the original content,
wherein the decryption unit decrypts the plurality of blocks in the encrypted form to generate the original content, and outputs the generated original content to the reproduction unit.
According to this construction, the terminal device decrypts all of the plurality of blocks in the encrypted form to generate the original content, with it being possible to reproduce the original content.

Here, the original content storage unit may store the original content in a form of encrypted content with the plurality of blocks being in an encrypted form, wherein the plurality of blocks in the encrypted form are stored in the original content storage unit in a reproduction order, the encryption unit encrypts a set of blocks in the encrypted form which are consecutive in the reproduction order using the encryption key to generate a set of double encrypted blocks, and replaces the set of blocks in the encrypted form in the original content storage unit with the generated set of double encrypted blocks, the set of blocks having a total reproduction time length within a predetermined time.

According to this construction, the terminal device encrypts the set of blocks in the encrypted form whose reproduction time length is within the predetermined time, using the encryption key to generate the set of double encrypted blocks. The terminal device then replaces the set of blocks in the encrypted form in the original content storage unit with the set of double encrypted blocks. The amount of data subjected to double encryption here is greater than when only one block is subj ected to double encryption. This contributes to higher security.

Here, the original content may contain a plurality of frames generated by compression-coding a moving image, wherein each frame is made up of at least one block, the plurality of blocks in the encrypted form have been generated by encryption using a device key unique to the terminal device, the terminal device further includes: a block decryption unit operable to decrypt the set of blocks in the encrypted form which are consecutive in the reproduction order using the device key as a decryption key to generate the set of blocks, the set of blocks having the reproduction time length within the predetermined time, and the encryption unit generates the set of double encrypted blocks by, from among one or more frames contained in the set of blocks, encrypting an independent frame that does not depend on a remaining frame using the device key and the encryption key in the stated order, and encrypting the remaining frame using the device key, and replaces the set of blocks in the encrypted form in the original content storage unit with the generated set of double encrypted blocks.

According to this construction, the terminal device double encrypts the independent frame, and single encrypts the remaining frame using only the device key. This alleviates a processing load for double encryption.
The stated aim can also be achieved by a copyright protection system for moving content from a terminal device to a portable storage medium, the terminal device including: an original content storage unit operable to store original content composed of a plurality of blocks; a converted content generation unit operable to perform an irreversible conversion on the original content, to generate converted content; a converted content write unit operable to write the converted content to the storage medium; an encryption unit operable to encrypt any of the plurality of blocks of the original content using an encryption key to generate an encrypted block, and replace the block in the original content storage unit with the encrypted block; a key write unit operable to write the encryption key to the storage medium; and a key deletion unit operable to delete the encryption key used for the encryption from the terminal device, and the storage medium including: a content storage unit operable to store the converted content.

According to this construction, the terminal device in the copyright protection system encrypts a block in the original content stored in the terminal device using the encryption key and writes the encryption key to the storage medium. This makes it possible to prevent the user from using the original content.
Also, the terminal device in the copyright protection system stores the original content with the encrypted block in the original content storage unit. Accordingly, evenafter the converted content is moved to the storage medium, the original content before the conversion can be restored by obtaining the encryption key from the storage medium.

### Brief Description of the Drawings

FIG. 1 shows an entire copyright protection system 1.
FIG. 2 is a block diagram showing a construction of a recording/reproduction device 10.
FIG. 3 shows information stored in an encrypted content storage unit 104.
FIG. 4 shows a change from encrypted content EC2₁ to double encrypted content EEC2₁.
FIG. 5 is a block diagram showing a construction of a portable medium 20.
FIG. 6 shows information stored in a writable area 204.
FIG. 7 is a block diagram showing a construction of a mobile information terminal 30.
FIG. 8 is a flowchart showing an overall operation of the copyright protection system 1.
FIG. 9 is a flowchart showing a first movement operation.
FIG. 10 is a flowchart showing a content movement operation.
FIG. 11 is a flowchart showing a content portion movement operation.
FIG. 12 is a flowchart showing a second movement operation.
FIG. 13 is a flowchart showing a content decryption operation.
FIG. 14 shows an entire copyright protection system 2.
FIG. 15 is a block diagram showing a construction of a recording/reproduction device 50.
FIG. 16 shows information stored in a conversion data storage unit 508.
FIG. 17 is a flowchart showing an overall operation of the copyright protection system 2.
FIG. 18 is a flowchart showing a content recording operation in the copyright protection system 2.
FIG. 19 is a flowchart showing a first movement operation in the copyright protection system 2.
FIG. 20 is a flowchart showing a content movement operation in the copyright protection system 2, continuing to FIG. 21.
FIG. 21 is a flowchart showing the content movement operation in the copyright protection system 2, continuing from FIG. 20.
FIG. 22 is a flowchart showing a content portion movement operation in the copyright protection system 2.
FIG. 23 is a block diagram showing a construction of a recording/reproduction device 50a.
FIG. 24 is a flowchart showing a recording operation performed by the recording/reproduction device 50a.
FIG. 25 is a flowchart showing a movement operation performed by the recording/reproduction device 50a.
FIG. 26 is a flowchart showing a conversion operation performed by the recording/reproduction device 50a.
FIG. 27 is a flowchart showing an operation of generating encrypted content EC4 and storing it to the portable medium 20 by the recording/reproduction device 50a.
FIG. 28 shows an entire copyright protection system 3.
FIG. 29 shows information stored in a writable area 204b.

### Description of Reference Numerals

- 1 .....: copyright protection system
- 10 .....: recording/reproduction device
- 11 .....: content provision device
- 12 .....: monitor
- 13 .....: speaker
- 20 .....: portable medium
- 30 .....: mobile information terminal
- 50 .....: recording/reproduction device
- 101 .....: content reception unit
- 102 .....: device recording key storage unit
- 103 .....: first encryption unit
- 104 .....: encrypted content storage unit
- 105 .....: reproduction unit
- 106 .....: medium recording key generation unit
- 107 .....: medium recording key storage unit
- 108 .....: first decryption unit
- 109 .....: encrypted content read unit
- 110 .....: conversion unit
- 111 .....: second encryption unit
- 112 .....: double encryption key generation unit
- 113 .....: double encryption key storage unit
- 114 .....: double encryption unit
- 115 .....: double encrypted content write unit
- 116 .....: second decryption unit
- 117 .....: write/read unit
- 118 .....: input unit
- 201 .....: input/output unit
- 202 .....: control unit
- 203 .....: storage unit
- 204 .....: writable area
- 205 .....: read only area
- 210 .....: encrypted content storage area
- 211 .....: medium recording key storage area
- 212 .....: double encryption key storage area
- 213 .....: content ID storage area
- 220 .....: portable medium ID storage area
- 221 .....: MKB storage area
- 301 .....: device key storage unit
- 302 .....: input/output unit
- 303 .....: control unit
- 304 .....: display unit
- 305 .....: key operation unit
- 306 .....: communication unit
- 307 .....: antenna
- 308 .....: microphone
- 309 .....: speaker

### Best Mode for Carrying out the Invention

### 1. First Embodiment

The following describes a copyright protection system 1 as a first embodiment of the present invention, with reference to drawings.

### 1.1. Overview of the Copyright Protection System 1

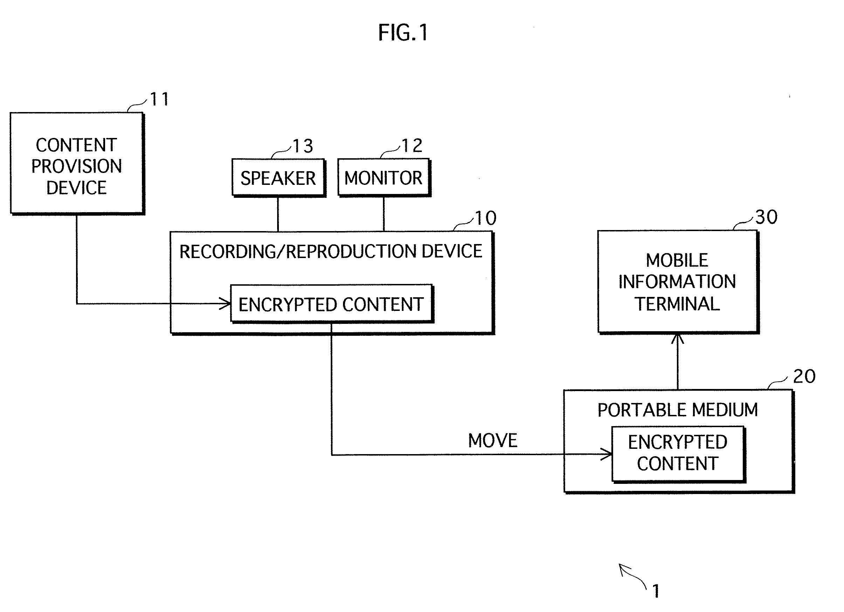

The copyright protection system 1 is roughly made up of a recording/reproduction device 10, a content provision device 11, a monitor 12, a speaker 13, a portable storage medium (hereafter "portable medium") 20, and a mobile information terminal 30, as shown in FIG. 1.

The content provision device 11 is equipped in a broadcast station, and provides content by broadcasting content which is a digital broadcast program.
The recording/reproduction device 10 receives the content broadcast from the content provision device 11, and records and reproduces the received content. The recording/reproduction device 10 also moves the recorded content to the portable medium 2 0, and further moves the content recorded on the portable medium 20 back to the recording/reproduction device 10 itself.

The mobile information terminal 30 reproduces the content moved to the portable medium 20.
The monitor 12 and the speaker 13 are connected to the recording/reproduction device 10.
When receiving the content from the content provision device 11 and recording it, the recording/reproduction device 10 encrypts the content and records the encrypted content in an internal HDD or the like. When moving the content, the recording/reproduction device 10 checks (authenticates) whether the portable medium 20 which is the move destination of the content is authorized, before the movement of the content. After completing the movement of the content, the recording/reproduction device 10 makes the content stored in the recording/reproduction device 10 itself, unusable. The authentication mentioned here can be performed according to a procedure prescribed by CPRM SD (Content Protection for Recordable Media Specification SD Memory Card Book). Alternatively, known techniques disclosed in non-patent documents 1 and 2 may be used for the authentication. Thus, the authentication can be realized using a known technique and so its detailed explanation has been omitted here.

### 1.2. Content Provision Device 11

The content provision device 11 is equipped in the broadcast station, and broadcasts the content which is a transport stream compression-coded according to MPEG (Moving Picture Experts Group phase) -2. The content broadcast from the content provision device 11 is received by an antenna in the recording/reproduction device 10.

### 1.3. Recording/reproduction Device 10

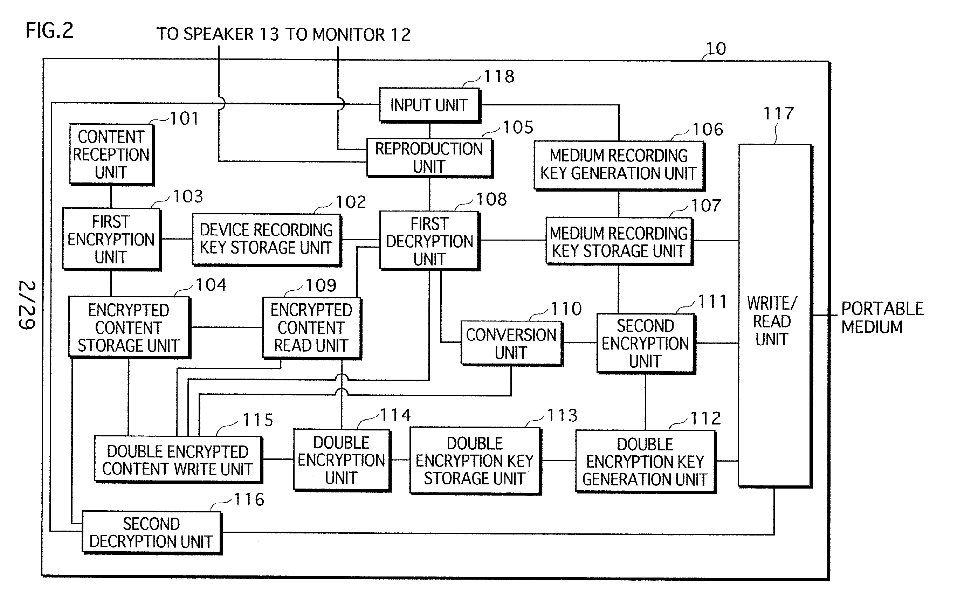

As shown in FIG. 2, the recording/reproduction device 10 includes a content reception unit 101, a device recording key storage unit 102, a first encryption unit 103, an encrypted content storage unit 104, a reproduction unit 105, a medium recording key generation unit 106, a medium recording key storage unit 107, a first decryption unit 108, an encrypted content read unit 109, a conversion unit 110, a second encryption unit 111, a double encryption key generation unit 112, a double encryption key storage unit 113, a double encryption unit 114, a double encrypted content write unit 115, a second decryption unit 116, a write/read unit 117, and an input unit 118.

The recording/reproduction device 10 is a computer system provided with a microprocessor, a ROM, a RAM, a hard disk unit, and the like. A computer program is stored on the ROM or the hard disk unit. Functions of the recording/reproduction device 10 can be realized by the microprocessor operating in accordance with this computer program.

As a specific example, the recording/reproduction device 10 is assumed here to be a hard disk recorder.

### (1) Content Reception Unit 101

The content reception unit 101 includes the antenna. The content reception unit 101 receives the content broadcast from the content provision device 11 via the antenna, and outputs the received content to the first encryption unit 103. The content received by the content reception unit 101 is high-image-quality content which has been compression-coded according to MPEG-2.

### (2) Device Recording Key Storage Unit 102

The device recording key storage unit 102 stores device recording key K1 in advance.
Device recording key K1 is used as an encryption key when the first encryption unit 103 encrypts the content which has been received by the content reception unit 101 from the content provision device 11, and as a decryption key when decrypting the encrypted content.

As one example, device recording key K1 is 128-bit data.

### (3) First Encryption Unit 103

The first encryption unit 103 receives the content from the content reception unit 101. This content received by the first encryption unit 103 is MPEG-2 content of a high image quality. Hereafter, MPEG-2 content is denoted by "C2", to distinguish it from MPEG-4 content described later.

The first encryption unit 103 sequentially reads blocks each of which has a data size (e.g. 128 bits) that corresponds to a reproduction time length within a predetermined time (e.g. within 45 seconds), starting with the beginning of content C2. Hereafter, these blocks are referred to as content portions. The read content portions are denoted by C2[1], C2[2], C2[3], ... , C2[N]. The reproduction time length of content portion C2[n] (n = 1, 2, ... , N, the same applies hereafter) is within the predetermined time (within 45 seconds).

Also, the first encryption unit 103 reads device recording key K1 from the device recording key storage unit 102, and applies encryption algorithm E1 to each content portion C2[n] using device recording key K1 as an encryption key, to generate encrypted content portion EC2[n]. Which is to say, EC2[n] = E1 (C2[n], K1). As one example, encryption algorithm E1 used by the first encryption unit 103 is AES (Advanced Encryption Standard). AES is a known technique and so its explanation has been omitted here. Here, the size of data to be encrypted is the data size corresponding to the reproduction time length within the predetermined time (e.g. within 45 seconds).

The first encryption unit 103 stores generated encrypted content portions EC2[1], EC2[2], ... , EC2[N] to the encrypted content storage unit 104.

### (4) Encrypted Content Storage Unit 104

The encrypted content storage unit 104 is actually a hard disk unit, and has an area for storing encrypted content.

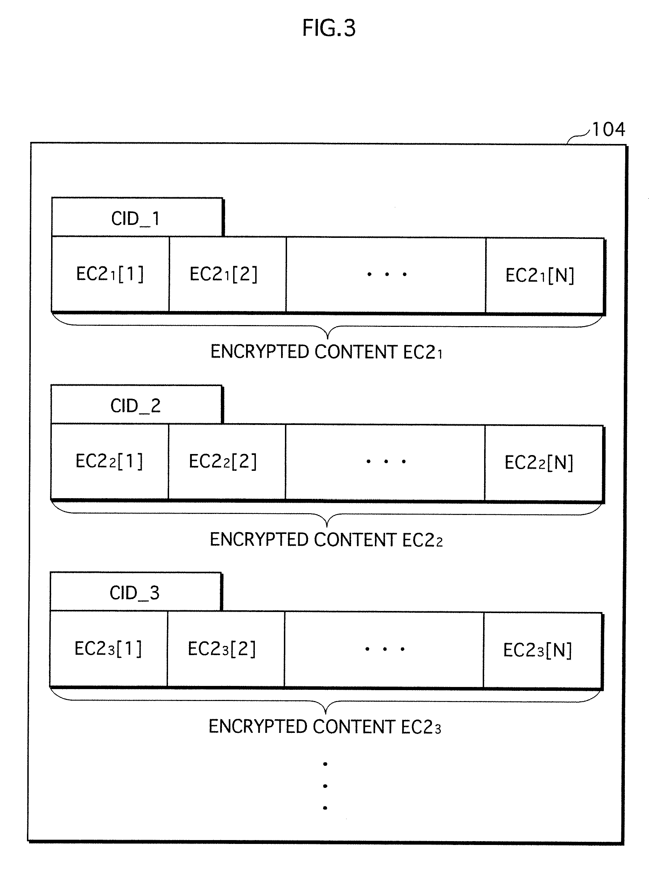

The encrypted content storage unit 104 receives encrypted content portion EC2[n] from the first encryption unit 103, and stores encrypted content portion EC2[n]. Data constituted by encrypted content portions EC2[1], EC2[2], ... , EC2[N] is hereafter denoted by encrypted content EC2.
As shown in FIG. 3, the encrypted content storage unit 104 stores a plurality of sets of encrypted content EC2₁, EC2₂, EC2₃, .... Here, each subscript is used to identify a different one of the plurality of sets of encrypted content. Each set of encrypted content EC2 is given a content ID for uniquely identifying the encrypted content. The encrypted content and its content ID are associated with each other in the encrypted content storage unit 104. In detail, a content ID of EC2₁ is "CID_1", a content ID of EC2₂ is "CID_2", and a content ID of EC2₃ is "CID_3".

### (5) Reproduction Unit 105

The reproduction unit 105 receives designation of content and an instruction to reproduce the designated content from the input unit 118, and outputs the received instruction to the first decryption unit 108.
The reproduction unit 105 is actually provided with an MPEG decoder and the like. The reproduction unit 105 receives content C2 decrypted by the first decryption unit 108, and decodes received content C2 to generate a video signal and an audio signal. The reproduction unit 105 outputs the video signal to the monitor 12, and the audio signal to the speaker 13.

### (6) Medium Recording Key Generation Unit 106

The medium recording key generation unit 106 is constituted by a random number generator and the like.
Upon receiving a move instruction including designation of content from the input unit 118, the medium recording key generation unit 106 generates medium recording keyK2. Medium recording key K2 is 128-bit data used for both encryption and decryption. The medium recording key generation unit 106 outputs generated medium recording key K2 and the received move instruction to the medium recording key storage unit 107.

After outputtingmedium recording key K2 and the received move instruction, the medium recording key generation unit 106 deletes generated medium recording key K2 from the medium recording key generation unit 106 itself.
The designation of the content included in the received move instruction is a content ID as one example.

### (7) Medium Recording Key Storage Unit 107

The medium recording key storage unit 107 has a key storage area for storing medium recording key K2, and holds device key DK1.

The medium recording key storage unit 107 receives medium recording key K2 and the move instruction from the medium recording key generation unit 106, and stores received K2 in the internal key storage area. Also, the medium recording key storage unit 107 writes the content ID included in the received move instruction to the portable medium 20 via the write/read unit 117.
The medium recording key storage unit 107 reads a medium ID for identifying the portable medium 20 and an MKB (Media Key Block) from the portable medium 20 via the write/read unit 117, and generates medium unique key K0 using the read medium ID, the read MKB, and device key DK1 stored in advance. The medium recording key storage unit 107 encrypts medium recording key K2 using generated medium unique key K0, to generate encrypted medium recording key EK2. The generation of medium unique key K0 and the generation of encrypted medium recording key EK2 here are conducted according to CPRM.

The medium recording key storage unit 107 writes encrypted medium recording key EK2 to the portable medium 20 via the write/read unit 117. After completing the writing of encrypted medium recording key EK2, the medium recording key storage unit 107 deletes encrypted medium recording key EK2 from the medium recording key storage unit 107 itself.
The medium recording key storage unit 107 outputs the received move instruction to the first decryption unit 108.
When receiving an instruction notifying of an encrypted content portion reading failure from the first decryption unit 108, the medium recording key storage unit 107 deletes medium recording key K2 stored in the key storage area.

### (8) First Decryption Unit 108

The first decryption unit 108 receives the move instruction from the medium recording key storage unit 107, and reads device recording key K1.
The first decryption unit 108 outputs a read instruction to read the designated encrypted content from the encrypted content storage unit 104, to the encrypted content read unit 109. This read instruction is, for example, the content ID included in the move instruction.

The first decryption unit 108 sequentially receives encrypted content portions EC2[1], EC2[2], ... , EC2[N] from the encrypted content read unit 109.
Having received encrypted content portion EC2[n] from the encrypted content read unit 109, the first decryption unit 108 applies decryption algorithm D1 to received EC2[n] using device recording key K1 as a decryption key, to generate content portion C2[n]. Which is to say, C2[n] = D1 (EC2[n], K1). Decryption algorithm D1 used here is an algorithm for converting ciphertext, which is generated by encryption according to encryption algorithm E1, to plaintext.

The first decryption unit 108 outputs generated content portion C2[n] to the conversion unit 110.
Upon receiving an instruction notifying of an encrypted content portion reading failure from the encrypted content read unit 109, the first decryption unit 108 outputs the received instruction to the medium recording key storage unit 107.
Also, when receiving a first deletion instruction to delete the storage contents from the double encrypted content write unit 115, the first decryption unit 108 deletes decryption result C2[n] from the first decryption unit 108 itself.

In this way, the first decryption unit 108 can sequentially output content portions C2[1], C2[2], ..., C2[N] to the conversion unit 110.
A specific example is given below. The first decryption unit 108 receives the content ID "CID_1" as the content designation, and outputs the content ID "CID_1" to the encrypted content read unit 109 as the read instruction. The first decryption unit 108 sequentially receives encrypted content portions EC2₁[1], EC2₁[2], ... , EC2₁[N] from the encrypted content read unit 109 and generates content portions C2₁[1], C2₁[2], ... , C2₁[N]. The first decryption unit 108 sequentially outputs generated content portions C2₁[1], C2₁[2], ... , C2₁[N] to the conversion unit 110.

Also, when reproducing content, the first decryption unit 108 receives an instruction from the reproduction unit 105, and decrypts encrypted content EC2 read from the encrypted content storage unit 104 via the encrypted content read unit 109 using device recording key K1. The first decryption unit 108 outputs decrypted content C2 to the reproduction unit 105.

### (9) Encrypted Content Read Unit 109

The encrypted content read unit 109 receives the read instruction from the first decryption unit 108, and reads the designated encrypted content. Also, the encrypted content read unit 109 temporarily stores the received read instruction. In more detail, the encrypted content read unit 109 receives the content ID from the first decryption unit 108, and sequentially reads encrypted content portions EC2[1], EC2[2], ... , EC2[N] whose content IDmatches the received content ID from the encrypted content storage unit 104. The encrypted content read unit 109 sequentially outputs EC2[1], EC2[2], ..., EC2[N] to the first decryption unit 108.

Also, upon receiving the first deletion instruction from the double encrypted content write unit 115, the encrypted content read unit 109 deletes read encrypted content portions EC2[n] from the encrypted content read unit 109 itself.
The following explains a specific operation.
The encrypted content read unit 109 has counter n.

Upon receipt of the read instruction from the first decryption unit 108, the encrypted content read unit 109 sets counter n to 1.
The encrypted content read unit 109 reads encrypted content portion EC2[n] which is the nth encrypted content portion of the designated encrypted content.
The encrypted content read unit 109 judges whether the reading of encrypted content portion EC2[n] is successful.

If the reading of encrypted content portion EC2[n] is judged as successful, the encrypted content read unit 109 temporarily stores read encrypted content portion EC2[n], and also outputs read encrypted content portion EC2[n] to the first decryption unit 108. The encrypted content read unit 109 then adds 1 to counter n. Subsequently, the encrypted content read unit 109 reads encrypted content portion EC2[n] and judges whether the reading is successful.

If the reading is judged as not successful, the encrypted content read unit 109 outputs an instruction notifying of a reading failure to the first decryption unit 108.
Suppose counter n is N + 1. Since there is no encrypted content portion EC2[N+1], the reading of the encrypted content portion will end up being a failure. In other words, when counter n is in a range of 1 to N, encrypted content portion EC2[n] exists, so that the encrypted content read unit 109 will succeed in reading the encrypted content portion. Thus, the encrypted content read unit 109 can sequentially read encrypted content portions EC2[1], EC2[2], ... , EC2[N].

As a specific example, the encrypted content read unit 109 sequentially reads EC2₁[1], EC2₁[2], ... , EC2₁[N] corresponding to the content ID "CID_1" from the encrypted content storage unit 104 and outputs read EC2₁[1], EC2₁[2], ..., EC2₁[N] to the first decryption unit 108.

### (10) Conversion Unit 110

The conversion unit 110 is actually constituted by a downconverter for converting MPEG-2 data to MPEG-4 data, and the like.

The conversion unit 110 receives content portions C2[1], C2[2], ... , C2[N] from the first decryption unit 108.
Having received content portion C2[n] from the first decryption unit 108, the conversion unit 110 compression-converts received content portion C2[n] to MPEG-4. Hereafter, each content portion converted to MPEG-4 is denoted by C4[n].

The conversion unit 110 outputs converted content portion C4[n] to the second encryption unit 111. Since the conversion from MPEG-2 to MPEG-4 can be realized by a known technique, its explanation has been omitted here.
When receiving the first deletion instruction from the double encrypted content write unit 115, the conversion unit 110 deletes converted content portions C4[n] from the conversion unit 110 itself.

In this way, the conversion unit 110 can sequentially output content portions C4[1], C4[2], ..., C4[N] to the second encryption unit 111.
As a specific example, the conversion unit 110 sequentially receives C2₁[1], C2₁[2], ... , C2₁[N] from the first decryption unit 108 and generates C4₁[1], C4₁[2], ..., C4₁[N]. The conversion unit 110 sequentially outputs generated content portions C4₁[1], C4₁[2], ... , C4₁[N] to the second encryption unit 111.

### (11) Second Encryption Unit 111

The second encryption unit 111 sequentially receives content portions C4[1], C4[2], ... , C4[N] from the conversion unit 110.
Having received content portion C4[n] from the conversion unit 110, the second encryption unit 111 reads medium recording key K2 stored in the medium recording key storage unit 107, and applies encryption algorithm E2 to content portion C4[n] using read medium recording key K2 as an encryption key, to generate encrypted content portion EC4[n]. Which is to say, EC4[n] = E2 (C4[n], K2). Encryption algorithm E2 used by the second encryption unit 111 is AES as one example.

The second encryption unit 111 writes encrypted content portion EC4[n] to the portable medium 20 via the write/read unit 117, and deletes encrypted content portion EC4[n] from the second encryption unit 111 itself. In this way, the second encrypted unit 111 can move encrypted content portion EC4[n] to the portable medium 20.
Also, the second encryption unit 111 outputs a genera tion instruction to generate a double encryption key for encrypting encrypted content portion EC2[n], to the double encryption key generation unit 114. The generation instruction is, for example, a value indicating the portion number of the encrypted content portion subjected to double encryption. When the encrypted content portion subjected to double encryption is EC2[1], the generation instruction is "1". When the encrypted content portion subjected to double encryption is EC2[2], the generation instruction is "2". When the encrypted content portion subjected to double encryption is EC2[n], the generation instruction is "n".

In this way, the second encryption unit 111 can sequentially write, i.e. move, encrypted content portions EC4[1], EC4[2], ... , EC4[N] to the portable medium 20.
As a specific example, the second encryption unit 111 sequentially receives content portions C4₁[1], C4₁[2], ... , C4₁[N] from the conversion unit 110 and generates encrypted content portions EC4₁[1], EC4₁[2], ... , EC4₁[N]. The second encryption unit 111 sequentially moves generated encrypted content portions EC4₁[1], EC4₁[2], ... , EC4₁[N] to the portable medium 20 via the write/read unit 117.

### (12) Double Encryption Key Generation Unit 112

The double encryption key generation unit 112 is constituted by a random number generator or the like.
The double encryption key generation unit 112 sequentially receives values 1, 2, ... , N which are each the generation instruction from the second encryption unit 111.
Having received the generation instruction (the value n), the double encryption key generation unit 112 generates double encryption key K3[n].

The double encryption key generation unit 112 writes generated double encryption key K3[n] to the portable medium 20 via the write/read unit 117. The double encryption key generation unit 112 also outputs generated double encryption key K3[n] to the double encryption key storage unit 113.
After outputting generated double encryption key K3[n] to the double encryption key storage unit 113, the double encryption key generation unit 112 deletes double encryption key K3[n] from the double encryption key generation unit 112 itself.

Here, double encryption keys K3[1], K3[2], ... , K3[N] may be different from each other, or some of double encryption keys K3[1], K3[2], ... , K3[N] may be equal to each other.

### (13) Double Encryption Key Storage Unit 113

The double encryption key storage unit 113 has a double encryption key storage area for storing double encryption key K3[n].

The double encryption key storage unit 113 sequentially receives double encryption keys K3[1], K3[2], ... , K3[N] from the double encryption key generation unit 112.
Having received double encryption key K3[n] from the double encryption key generation unit 112, the double encryption key storage unit 113 stores received double encryption key K3[n] to the double encryption key storage area.
The double encryption key storage unit 113 outputs an encryption instruction to the double encryption unit 114. The encryption instruction is, for example, a value indicating the portion number of the encrypted content portion subjected to double encryption.

### (14) Double Encryption Unit 114

The double encryption unit 114 sequentially receives values 1, 2, ... , N which are each the encryption instruction from the double encryption key storage unit 113.
Upon receiving the encryption instruction (the value n), the double encryption unit 114 reads double encryption key K3[n] stored in the double encryption key storage unit 113, and reads encrypted content portion EC2[n] and the read instruction from the encrypted content read unit 109.

The double encryption unit 114 applies encryption algorithm E3 to encrypted content portion EC2[n] using double encryption key K3[n] as an encryption key, to generate double encrypted content portion EEC2[n]. Which is to say, EEC2[n] = E3 (EC2[n], K3[n]). Encryption algorithm E3 used by the double encryption unit 114 is AES as one example.

After generating double encrypted content portion EEC2[n], the double encryption unit 114 deletes double encryption key K3[n] from the device. As a result, double encryption key K3[n] in the double encryption unit 114 and the double encryption key storage unit 113 is deleted.
The double encryption unit 114 outputs double encrypted content portion EEC2[n] and a write instruction including the read instruction read from the encrypted content read unit 109, to the double encrypted content write unit 115. For instance, the write instruction is information that includes the content ID and the value indicating the portion number of the encrypted content portion corresponding to the double encrypted content portion.

Upon receiving the first deletion instruction from the double encrypted content write unit 115, the double encryption unit 114 deletes encrypted content portion EC2[n] read from the encrypted content read unit 109.
In this way, the double encryption unit 114 can sequentially generate double encrypted content portions EEC2[1], EEC2[2], ... , EEC2[N] and outputs double encrypted content portions EEC2[1], EEC2[2], ... , EEC2[N] to the double encrypted content write unit 115.

### (15) Double Encrypted Content Write Unit 115

The double encrypted content write unit 115 sequentially receives double encrypted content portions EEC2[1], EEC2[2], ..., EEC2[N] together with the write instruction, from the double encryption unit 114.
Having received double encrypted content portion EEC2[n] from the double encryption unit 114, the double encrypted content write unit 115 stores received double encrypted content portion EEC2[n] to the encrypted content storage unit 104, by writing received EEC2[n] over EC2[n] which is stored in the encrypted content storage unit 104 and corresponds to the content ID and portion number included in the write instruction.

The double encrypted content write unit 115 then outputs the first deletion instruction to the first decryption unit 108, the encrypted content read unit 109, the conversion unit 110, and the double encryption unit 114.
Here, the encrypted content storage unit 104 stores double encrypted content EEC2 and the content ID in correspondence with each other.
In this way, the double encrypted content write unit 115 can sequentially store double encrypted content portions EEC2[1], EEC2[2], ..., EEC2[N] to the encrypted content storage unit 104.

Hereafter, data composed of double encrypted content portions EEC2[1], EEC2[2], ... , EEC2[N] is denoted by double encrypted content EEC2.
A specific example is given below, using encrypted content EC2₁.

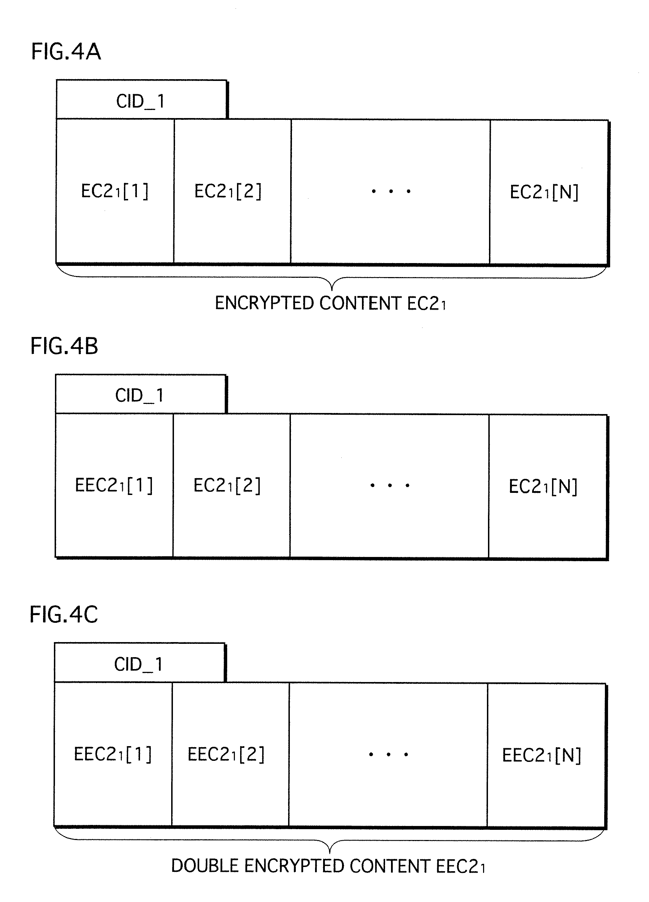

FIG. 4A shows a data structure of encrypted content EC2₁. This represents a state prior to the conversion to double encrypted content EEC2₁.

The double encrypted content write unit 115 receives double encrypted content portion EEC2₁[1] generated by encrypting encrypted content portion EC2₁[1] and the write instruction from the double encryption unit 114. Here, the write instruction includes the content ID "CID_1" and the value "1". The double encrypted content write unit 115 writes received EEC2₁ over EC2₁ which is stored in the encrypted content storage unit 104 and corresponds to the content ID "CID_1" and the value "1" included in the write instruction. FIG. 4B shows a state where EC2₁[1] has been replaced with EEC2₁[1].

Following this, the double encrypted content write unit 115 sequentially receives double encrypted content portions EEC2₁[2], ... , EEC2₁[N] together with the write instruction and writes double encrypted content portions EEC2₁[2], ... , EEC2₁[N] over EC2₁[2], ... , EC2₁[N] which are stored in the encrypted content storage unit 104 and correspond to the content ID "CID_1" and the values included in the write instruction. FIG. 4C shows a state where encrypted content EC2₁ stored in the encrypted content storage unit 104 has been replaced with double encrypted content EEC2₁.

### (16) Second Decryption Unit 116

The second decryption unit 116 receives an instruction to move back the content from the input unit 118, and reads the content ID from the portable medium 20 via the write/read unit 117. The moving back referred to here is to move the content from the portable medium 20 to the recording/reproduction device 10.

The second decryption unit 116 outputs a second deletion instruction to delete the content ID, the encrypted content portions, and the encrypted medium recording key, to the portable medium 20 via the write/read unit 117. In this way, the second decryption unit 116 can delete the content ID, encrypted content EC4, and encrypted medium recording key EK2 from the portable medium 20.
The second decryption unit 116 sequentially reads double encryption keys K3[1], K3[2], ... , K3[N] stored on the portable medium 20, via the write/read unit 117.

The second decryption unit 116 performs the following operation each time double encryption key K3[n] is read.
The second decryption unit 116 applies decryption algorithmD3 to EEC2[n] stored in the encrypted content storage unit 104 using read double encryption key K3[n] as a decryption key, to generate encrypted content portion EC2[n]. Which is to say, EC2[n] = D3 (EEC2[n], K3[n]). Decryption algorithm D3 is an algorithm for converting ciphertext, which is generated by encryption according to encryption algorithm E3, to plaintext.

The second decryption unit 116 stores generated encrypted content portion EC2[n] to the encrypted content storage unit 104, by writing EC2[n] over EEC2[n] which is stored in the encrypted content storage unit 104 and corresponds to the content ID read from the portable medium 20. The second decryption unit 116 also deletes double encrypted content portion EEC2[n] and double encryption key K3[n] from the second decryption unit 116 itself.

The second decryption unit 116 outputs a third deletion instruction to delete double encryption key K3[n] stored on the portable medium 20, to the portable medium 20 via the write/read unit 117. In this way, the second decryption unit 116 can delete K3[n] from the portable medium 20. The third deletion instruction contains a number indicating the double encryption key that is to be deleted. For example, when the third deletion instruction contains the number "1", the double encryption key to be deleted is K3[1]. When the third deletion instruction contains the number "n", the double encryption key to be deleted is K3[n].

In this way, double encrypted content EEC2 can be replaced with encrypted content EC2.
A specific operation of the second decryption unit 116 is explained below.
The second decryption unit 116 has counter n.
The second decryption unit 116 receives the move back instruction from the input unit 118, and reads the content ID from the portable medium 20.

The second decryption unit 116 deletes the content ID, encrypted content EC4, and encrypted medium recording key EK2 form the portable medium 20, by outputting the second deletion instruction to the portable medium 20. The second decryption unit 116 sets counter n to 1.
The second decryption unit 116 reads double encryption key K3[n] from the portable medium 20.
The second decryption unit 116 judges whether the reading of double encryption key K3[n] is successful.

If the reading is judged as successful, the second decryption unit 116 reads double encrypted content portion EEC2[n] corresponding to the read content ID from the encrypted content storage unit 104, and decrypts read double encrypted content portion EEC2[n] using double encryption key K3[n] as a decryption key, to generate encrypted content portion EC2[n]. The second decryption unit 116 stores generated encrypted content portion EC2[n] to the encrypted content storage unit 104, by writing EC2[n] over EEC2[n] which is stored in the encrypted content storage unit 104 and corresponds to the content ID read from the portable medium 20.

The second decryption unit 116 deletes double encrypted content portion EEC2[n] and double encryption key K3[n] form the second decryption unit 116 itself.
The second decryption unit 116 deletes K3[n] from the portable medium 20, by outputting the third deletion instruction to the portable medium 20 via the write/read unit 117.
The second decryption unit 116 adds 1 to counter n. The second decryption unit 116 then reads encrypted content portion EC2[n] and judges whether the reading is successful.

If the reading is judged as not successful, the second decryption unit 116 ends the operation.
A specific example is given below.
Upon receiving the move back instruction from the input unit 118, the second decryption unit 116 reads the content ID "CID_1" from the portable medium 20.
The second decryption unit 116 deletes the content ID "CID_1", encrypted content portions EC4₁[1], EC4₁[2], ... , EC4₁[N], and encrypted medium recording key EK2 stored on the portable medium 20.

The second decryption unit 116 sequentially reads double encryption keys K3[1], K3[2], ... , K3[N], generates encrypted content portions EC2₁[1], EC2₁[2], ..., EC2₁[N] using double encryption keys K3[1], K3[2], ... , K3[N], and stores encrypted content portions EC2₁[1], EC2₁[2], ... , EC2₁[N] to the encrypted content storage unit 104.

### (17) Write/read Unit 117

The write/read unit 117 is equipped with a memory card slot. In a state where the portable medium 20 is inserted in the memory card slot, the write/read unit 117 writes encrypted content portion EC4[n] received from the second encryption unit 111, the content ID and encrypted medium recording key EK2 received from the medium recording key storage unit 107, and double encryption key K3[n] received from the double encryption key generation unit 112, to the portable medium 20. Here, each time the write/read unit 117 receives encrypted content portion EC4[n] from the second encryption unit 111, the write/read unit 117 writes it to the portable medium 20. Also, each time the write/read unit 117 receives double encryption key K3[n] from the double encryption key generation unit 112, the write/read unit 117 writes it to the portable medium 20. The write/read unit 117 also outputs the second deletion instruction and the third deletion instruction received from the second decryption unit 116, to the portable medium 20.

The write/read unit 117 reads the content ID from the portable medium 20, and outputs the read content ID to the second decryption unit 116. The write/read unit 117 reads double encryption key K3[n] from the portable medium 20, and outputs read double encryption key K3[n] to the second decryption unit 116. Here, each time the write/read unit 117 reads double encryption key K3[n] from the portable medium 20, the write/read unit 117 outputs it to the second decryption unit 116. The write/read unit 117 further reads the MKB and the medium ID from the portable medium 20, and outputs the read MKB and medium ID to the medium recording key storage unit 107.

### (18) Input Unit 118

The input unit 118 receives an instruction made by a user input, and outputs the received instruction to the reproduction unit 105, the medium recording key generation unit 106, and the second decryption unit 116. As a specific example, the input unit 118 can be constituted by a remote control and a remote control light-receiving unit. Instructions received by the input unit 118 include the reproduction instruction, the move instruction, and the move back instruction.

The reproduction instruction indicates to decrypt the encrypted content stored in the encrypted content storage unit 104 and output the decrypted content to the monitor 12 and the speaker 13. The move instruction indicates to compression-convert the encrypted content stored in the encrypted content storage unit 104 and move the compression-converted content to the portable medium 20. The move back instruction indicates to move the content from the portable medium 20 to the recording/reproduction device 10.

### 1.4. Monitor 12 and Speaker 13

The monitor 12 and the speaker 13 are actually realized by a digital television connected to the recording/reproduction device 10. The monitor 12 receives the video signal from the reproduction unit 105, and outputs the received video signal. The speaker 13 receives the audio signal from the reproduction unit 105, and outputs the received audio signal.

### 1.5. Portable Medium 20

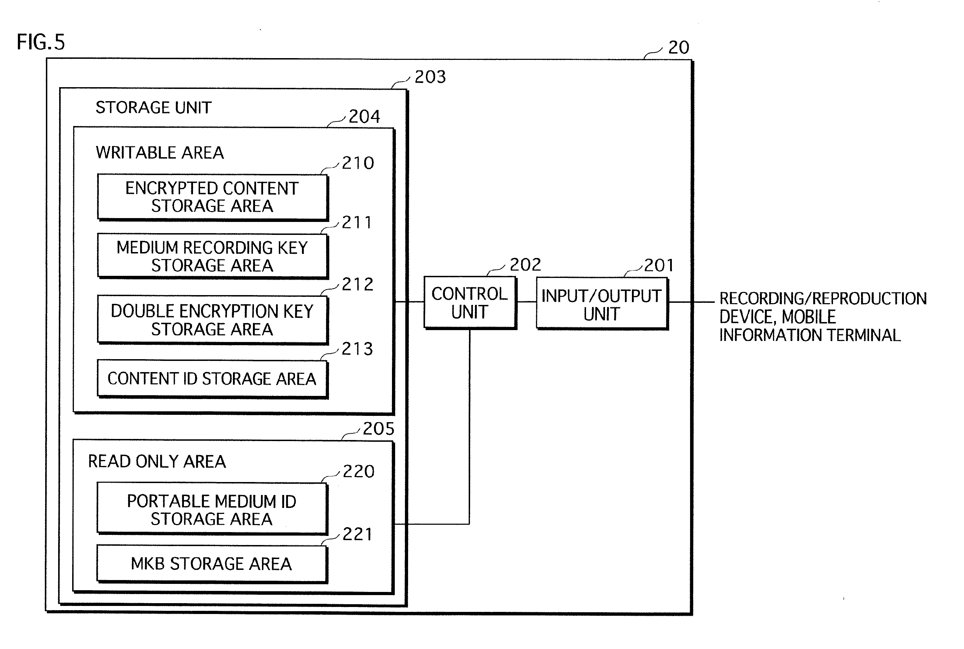

The portable medium 20 includes an input/output unit 201, a control unit 202, and a storage unit 203, as shown in FIG. 5. The storage unit 203 includes a writable area 204 and a read only area 205.
The writable area 204 includes an encrypted content storage area 210, a medium recording key storage area 211, a double encryption key storage area 212, and a content ID storage area 213, whereas the read only area 205 includes a portable medium ID storage area 220 and an MKB storage area 221. The writable area 204 is an area in which data can be read and written. The read only area 205 is an area in which data can be read but cannot be written.

The portable medium 20 is a card-type memory used in a state of being inserted in a memory card slot of the recording/reproduction device 10 or the mobile information terminal 30. One example of the portable medium 20 is an SD memory card.
The encrypted content is moved from the recording/reproduction device 10 to the portable medium 20, in a state where the portable medium 20 is inserted in the memory card slot of the recording/reproduction device 10. The moved encrypted content is stored in the encrypted content storage area 210. The encrypted content stored in the encrypted content storage area 210 can be reproduced using the mobile information terminal 30, in a state where the portable medium 20 is inserted in the memory card slot of the mobile information terminal 30. Also, the encrypted content stored in the encrypted content storage area 210 can be moved back to the recording/reproduction device 10, in a state where the portable medium 20 is inserted in the recording/reproduction device 10.

### (1) Input/output Unit 201

The input/output unit 201 is made up of a connector pin, an interface driver, and the like, and is an interface for conducting data input/output with a device in which the portable medium 20 is inserted.
The following separately explains an operation of the input/output unit 201 in the state where the portable medium 20 is inserted in the recording/reproduction device 10 and in the state where the portable medium 20 is inserted in the mobile information terminal 30.

### (a) When the Portable Medium 20 is Inserted in the Recording/reproduction Device 10

The input/output unit 201 receives the content ID, encrypted content portion EC4[n], encrypted medium recording key EK2, double encryption key K3[n], the second deletion instruction, and the third deletion instruction from the write/read unit 117 in the recording/reproduction device 10, and outputs the received data to the control unit 202. Here, each time the input/output unit 201 receives one encrypted content portion EC4[n] from the write/read unit 117, the input/output unit 201 outputs it to the control unit 202. Also, each time the input/output unit 201 receives one double encryption key K3[n] from the write/read unit 117, the input/output unit 201 outputs it to the control unit 202.

Also, the input/output unit 201 receives the content ID from the control unit 202, and outputs the received content ID to the write/read unit 117. The input/output unit 201 receives double encryption key K3[n] from the control unit 202, and outputs received double encryption key K3[n] to the write/read unit 117. Here, each time the input/output unit 201 receives one double encryption key K3[n] from the control unit 202, the input/output unit 201 outputs it to the write/read unit 117. The input/output unit 201 receives the MKB and the medium ID from the control unit 202, and outputs the received MKB and medium ID to the write/read unit 117.

### (b) When the Portable Medium 20 is Inserted in the Mobile Information Terminal 30

The input/output unit 201 receives encrypted medium recording key EK2 from the control unit 202, and outputs received encryptedmedium recording key EK2 to an input/output unit 302 in the mobile information terminal 30 described later. The input/output unit 201 receives encrypted content portion EC4[n] from the control unit 202, and outputs received encrypted content portion EC4[n] to the input/output unit 302 in the mobile information terminal 30. Here, each time the input/output unit 201 receives one encrypted content portion EC4[n] from the control unit 202, the input/output unit 201 outputs it to the input/output unit 302. The input/output unit 201 receives the MKB and the medium ID from the control unit 202, and outputs the received MKB and medium ID to the input/output unit 302.

### (2) Control Unit 202

The following separately explains an operation of the control unit 202 in the state where the portable medium 20 is inserted in the recording/reproduction device 10 and in the state where the portable medium 20 is inserted in the mobile information terminal 30.

### (a) When the Portable Medium 20 is Inserted in the Recording/reproduction Device 10

The control unit 202 writes various data received from the input/output unit 201, to corresponding areas in the storage unit 203. In more detail, each time the control unit 202 receives encrypted content portion EC4[n] from the input/output unit 201, the control unit 202 writes received encrypted content portion EC4[n] to the encrypted content storage area 210. Upon receiving encrypted medium recording key EK2, the control unit 202 writes received EK2 to the medium recording key storage area 211. Each time the control unit 202 receives double encryption key K3[n], the control unit 202 writes received double encryption key K3[n] to the double encryption key storage area 212. Upon receiving the content ID, the control unit 202 writes the received content ID to the content ID storage area 213. Upon receiving the second deletion instruction from the input/output unit 201, the control unit 202 deletes the content ID, encrypted content portions EC4[1], EC4[2], ... , EC4[N], and encrypted medium recording key EK2 stored in the writable area 204. Upon receiving the third deletion instruction from the input/output unit 201, the control unit 202 deletes double encryption key K3[n] which is stored in the writable area 204 and corresponds to the number included in the third deletion instruction.

The control unit 202 reads the medium ID stored in the portable medium ID storage area 220 and the MKB stored in the MKB storage area 221, and outputs the read medium ID and MKB to the input/output unit 201.
Also, when moving content to the recording/reproduction device 10, the control unit 202 operates in the following manner.
The control unit 202 reads the content ID from the content ID storage area 213, and outputs the read content ID to the input/output unit 201. The control unit 202 deletes encrypted content portions EC4[1], EC4[2], ... , EC4[N] stored in the encrypted content storage area 210 and encrypted medium recording key EK2 stored in the medium recording key storage area 211. Having deleted encrypted content portions EC4[1], EC4[2], ... , EC4[N] and encrypted medium recording key EK2, the control unit 202 sequentially reads double encryption keys K3[n] from the double encryption key storage area 212 and outputs them to the input/output unit 201.

### (b) When the Portable Medium 20 is Inserted in the Mobile information terminal 30

The control unit 202 reads encrypted medium recording key EK2 stored in the medium recording key storage area 211, and outputs read encrypted medium recording key EK2 to the input/output unit 201.
The control unit 202 reads the medium ID stored in the portable medium ID storage area 220 and the MKB stored in the MKB storage area 221, and outputs the read medium ID and MKB to the input/output unit 201.

The control unit 202 sequentially reads encrypted content portions EC4[n] stored in the encrypted content storage area 210 and outputs them to the input/output unit 201.

### (3) Storage Unit 203

The following explains the encrypted content storage area 210, the medium recording key storage area 211, the double encryption key storage area 212, the content ID storage area 213, the portable medium ID storage area 220, and the MKB storage area 221 in the storage unit 203.

The encrypted content storage area 210 stores encrypted content portion EC4[n] received from the recording/reproduction device 10 via the control unit 202 and the input/output unit 201.
The medium recording key storage area 211 stores encrypted medium recording key EK2 received from the recording/reproduction device 10 via the control unit 202 and the input/output unit 201.
The double encryption key storage area 212 stores double encryption key K3[n] received from the recording/reproduction device 10 via the control unit 202 and the input/output unit 201.

The content ID storage area 213 stores the content ID received from the recording/reproduction device 10 via the control unit 202 and the input/output unit 201.
The portable medium ID storage area 220 stores the medium ID in advance.
The MKB storage area 221 stores the MKB in advance.

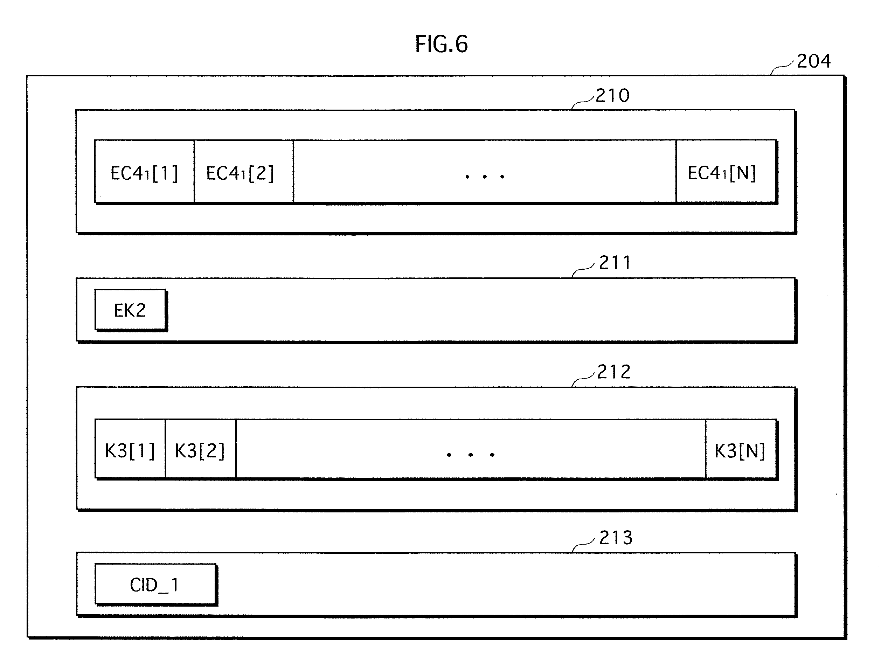

FIG. 6 shows a specific example of a data structure stored in the encrypted content storage area 210, the medium recording key storage area 211, the double encryption key storage area 212, and the content ID storage area 213. This example concerns a case where encrypted content EC2₁ is moved. Encrypted content portions EC4₁[1], EC4₁[2], ... , EC4₁[N] received from the recording/reproduction device 10 via the control unit 202 and the input/output unit 201 are stored in the encrypted content storage area 210. Encrypted medium recording key EK2 received via the control unit 202 and the input/output unit 201 is stored in the medium recording key storage area 211. Double encryption keys K3[1], K3[2], ... , K3 [N] received from the recording/reproduction device 10 via the control unit 202 and the input/output unit 201 are stored in the double encryption key storage area 212. The content ID "CID_1" is stored in the content ID storage area 213.

### 1.6. Mobile Information Terminal 30

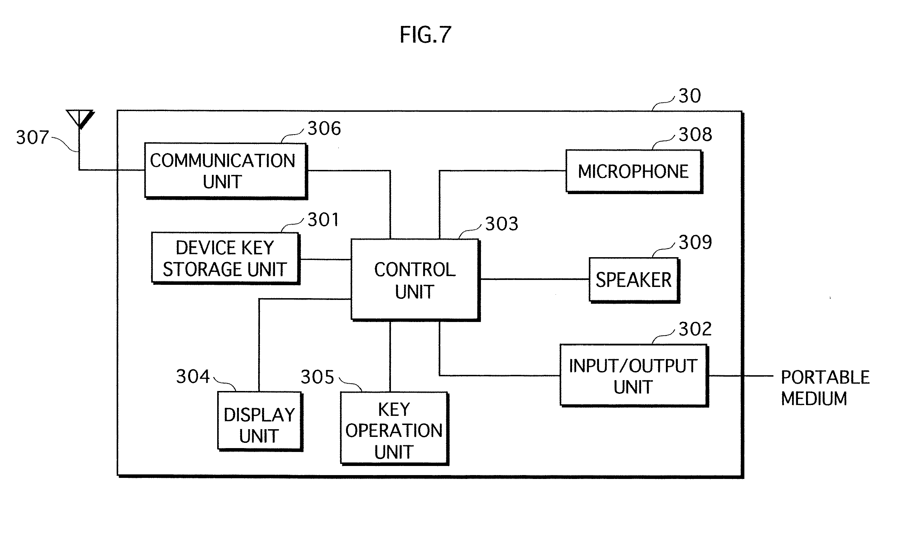

As shown in FIG. 7, the mobile information terminal 30 includes a device key storage unit 301, an input/output unit 302, a control unit 303, a display unit 304, a key operation unit 305, a communication unit 306, an antenna 307, a microphone 308, andaspeaker309. As one example, the mobile information terminal 30 is a mobile phone that performs communications using a radio wave.

The mobile information terminal 30 is a computer system provided with a microprocessor, a ROM, a RAM, a hard disk unit, and the like. A computer program is stored on the ROM or the hard disk unit. Functions of the mobile information terminal 30 can be realized by the microprocessor operating in accordance with this computer program.

The device key storage unit 301 stores device key DK1 unique to the mobile information terminal 30, in advance.
The input/output unit 302 is constituted by a memory card slot and the like. In a state where the portable medium 20 is inserted in the memory card slot, the input/output unit 302 reads encrypted medium recording key EK2 stored in the medium recording key storage area 211 in the portable medium 20, and outputs read encrypted medium recording key EK2 to the control unit 303. Also, in a state where the portable medium 20 is inserted in the memory card slot, the input/output unit 302 sequentially reads encrypted content portions EC4[1], EC4[2], ... , EC4[N] stored in the encrypted content storage area 210 in the portable medium 20 and outputs read encrypted content portions EC4[1], EC4[2], ..., EC4[N] to the control unit 303.

The control unit 303 receives encryptedmedium recording key EK2 from the input/output unit 302, and reads device key DK1 from the device key storage unit 301 and the medium ID and the MKB from the portable medium 20. The control unit 303 generates medium unique key K0 for decrypting encrypted medium recording key EK2, using device key DK1, the medium ID, and the MKB. The control unit 303 decrypts encrypted medium recording key EK2 using generated medium unique key K0, to generate medium recording key K2. Here, the generation of medium unique key K0 and the decryption of encrypted medium recording key EK2 are conducted based on CPRM.

The control unit 303 applies decryption algorithm D2 to encrypted content portion EC4[n] using medium recording key K2 as a decryption key, to generate content portion C4[n]. Which is to say, C4[n] = D2 (EC4[n], K2). Decryption algorithm D2 used by the control unit 303 is an algorithm for converting ciphertext, which is generated by encryption according to encryption algorithm E2, to plaintext.

The control unit 303 sequentially decodes generated content portions C4[n], to generate a video signal and an audio signal. The control unit 303 outputs the video signal to the display unit 304, and the audio signal to the speaker 309.
As a specific example, it is supposed here that the control unit 303 sequentially decrypts encrypted content portions EC4₁[1], EC4₁[2], ... , EC4₁[N] to thereby generate C4₁[1], C4₁[2], ... , C4₁[N]. The control unit 303 sequentially decodes generated content portions C4₁[1], C4₁[2], ... , C4₁[N] to generate the video signal and the audio signal.

The key operation unit 305, the communication unit 306, the antenna 307, the microphone 308, and the speaker 309 have general functions of a mobile phone such as telephone calls and e-mail transmission/reception. These construction elements can be realized by known techniques and so their explanation has been omitted here.

### 1.7. Overall Operation of the Copyright Protection System 1

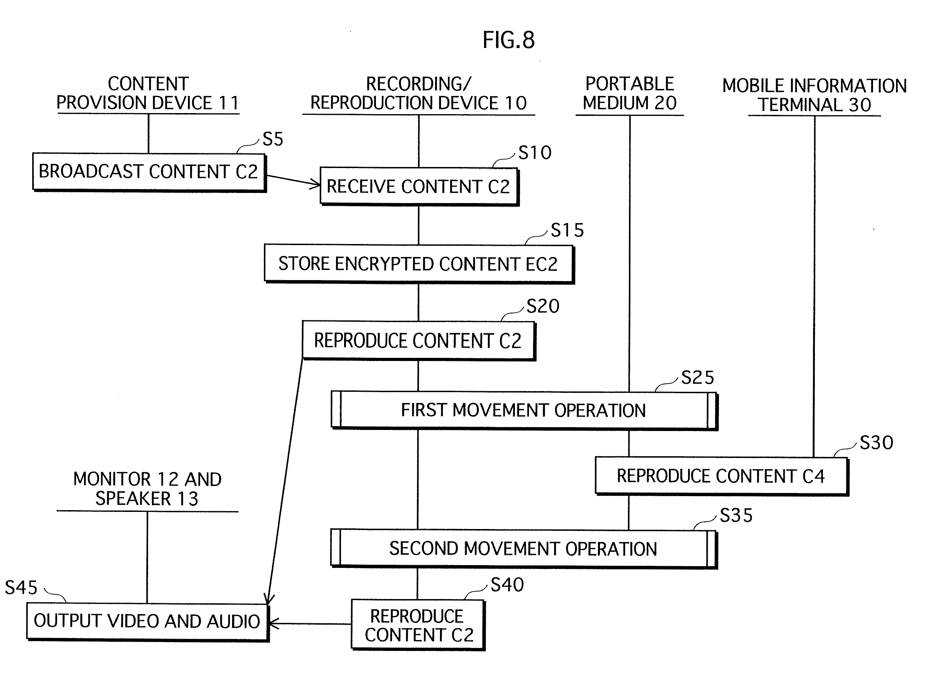

An overall operation of the copyright protection system 1 is explained below, with reference to a flowchart of FIG. 8.

The content provision device 11 broadcasts content C2 (step S5). The recording/reproduction device 10 receives content C2 (step S10).
The recording/reproduction device 10 encrypts content C2 using device recording key K1 as an encryption key to generate encrypted content EC2, and stores encrypted content EC2 (step S15).
Upon receiving the reproduction instruction for content C2, the recording/reproduction device 10 decrypts stored encrypted content EC2 using device recording key K1 as a decryption key, to generate content C2. The recording/reproduction device 10 decodes generated content C2 to generate a video signal and an audio signal, and outputs the video signal to the monitor 12 and the audio signal to the speaker 13 to reproduce content C2 (step S20).

The monitor 12 receives the video signal from the recording/reproduction device 10, and outputs video based on the received video signal. The speaker 13 receives the audio signal from the recording/reproduction device 10, and outputs audio based on the received audio signal (step S45).
Upon receiving the move instruction in a state where the portable medium 20 is inserted in the memory card slot of the recording/reproduction device 10, the recording/reproduction device 10 performs a first movement operation to move the stored content to the portable medium 20 inserted in the memory card slot (step S25). As a result, encrypted content portions EC4[n] (n = 1, 2, ... , N, the same applies hereafter), which are generated by encrypting content portions C4[n] generated by compression-coding content portions C2[n] according to MPEG-4 using medium recording key K2, encrypted medium recording key EK2, double encryption key K3[n], and the content ID are stored on the portable medium 20.

In a state where the portable medium 20 is inserted in the memory card slot of the mobile information terminal 30, the mobile information terminal 30 generates medium unique key K0, and decrypts encrypted medium recording key EK2 stored on the portable medium 20 using generated medium unique key K0, to generate medium recording key K2. The mobile information terminal 30 sequentially decrypts encrypted content portions EC4[n] using generated medium recording key K2 as a decryption key, to generate content portions C4[n]. The mobile information terminal 30 sequentially decodes generated content portions C4[n], to generate a video signal and an audio signal. The mobile information terminal 30 outputs video and audio based on the generated video signal and audio signal, thereby reproducing content C4 (step S30).

Upon receiving the move back instruction in a state where the portable medium 20 is inserted in the memory card slot of the recording/reproduction device 10, the recording/reproduction device 10 performs a second movement operation, to move the content stored on the portable medium 20 to the recording/reproduction device 10 (step S35). At this time, encrypted content potions EC2[n] (n = 1, 2, ..., N, the same applies hereafter), which are generated by encrypting content portions C2[n] compression-coded according to MPEG-2 using device recording key K1, are stored in the recording/reproduction device 10.

Upon receiving the reproduction instruction for content C2, the recording/reproduction device 10 decrypts stored encrypted content EC2 using device recording key K1 as a decryption key, to generate content C2. The recording/reproduction device 10 decodes generated content C2 to generate a video signal and an audio signal, and outputs the video signal to the monitor 12 and the audio signal to the speaker 13, thereby reproducing content C2 (step S40). The monitor 12 and the speaker 13 output video and audio based on the video signal and audio signal received from the recording/reproduction device 10, respectively (step S45).

### 1.8. First Movement Operation

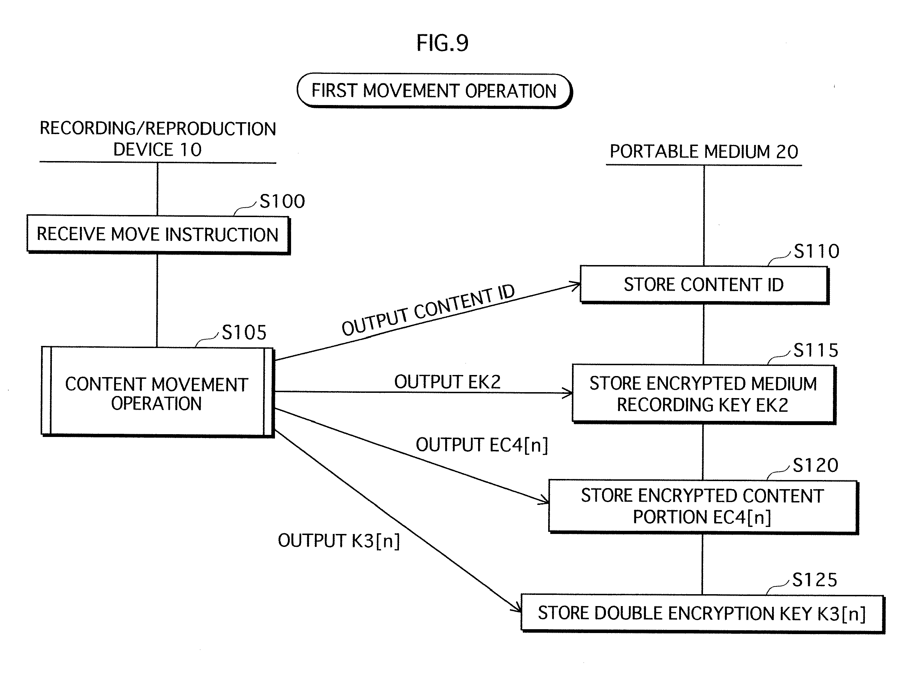

The first movement operation performed in step S25 in FIG. 8 is explained below, with reference to a flowchart of FIG. 9.
Upon receiving the move instruction in the input unit 118 in a state where the portable medium 20 is inserted in the memory card slot of the recording/reproduction device 10 (step S100), the recording/reproduction device 10 performs a content movement operation to move the stored content to the portable medium 20 (step S105). In the content movement operation, the recording/reproduction device 10 outputs the content ID, encrypted medium recording key EK2, encrypted content portion EC4[n] (n = 1, 2, ..., N, the same applies hereafter), and double encryption key K3[n] to the portable medium 20.

The portable medium 20 receives the content ID from the recording/reproduction device 10, and stores the received content ID to the content ID storage area 213 (step S110).
The portable medium 20 receives encrypted medium recording key EK2 from the recording/reproduction device 10, and stores received encrypted medium recording key EK2 to the medium recording key storage area 211 (step S115).

The portable medium 20 receives encrypted content portion EC4[n] from the recording/reproduction device 10, and writes received encrypted content portion EC4[n] to the encrypted content storage area 210 (step S120).
The portable medium 20 receives double encryption key K3[n] from the recording/reproduction device 10, and writes received double encryption key K3[n] to the double encryption key storage area 212 (step S125).

### 1.9. Content Movement Operation

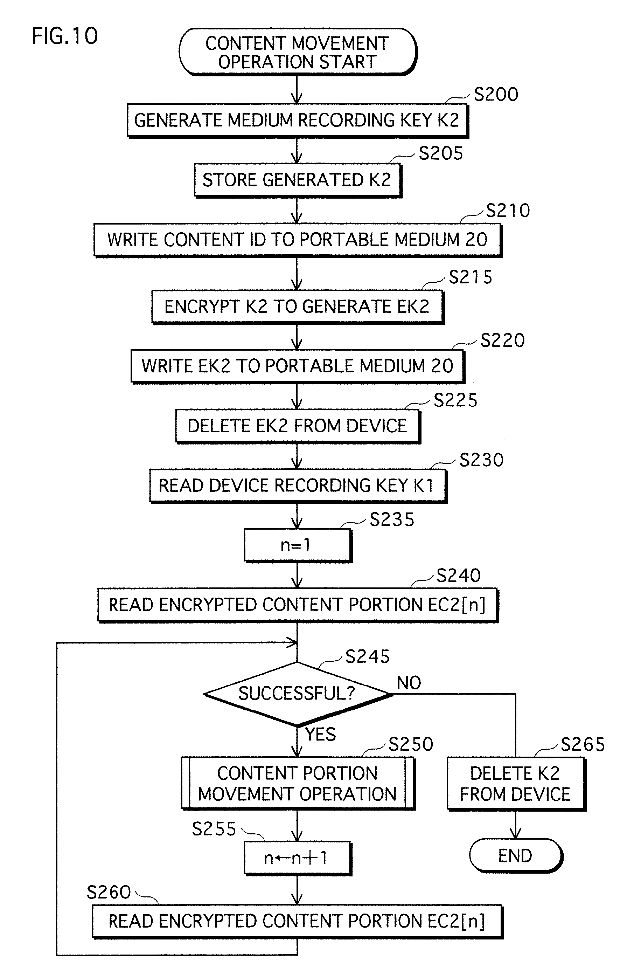

The content movement operation performed in step S105 in FIG. 9 is explained below, with reference to a flowchart of FIG. 10.
The medium recording key generation unit 106 in the recording/reproduction device 10 receives the move instruction including the designation of the content from the input unit 118, and generates medium recording key K2 (step S200).

The medium recording key storage unit 107 in the recording/reproduction device 10 receives medium recording key K2 and the move instruction from the medium recording key generation unit 106, and stores received K2 to the internal keystoragearea (step S205). Themediumrecordingkeystorage unit 107 also writes the content ID included in the received move instruction to the portable medium 20 via the write/read unit 117 (step S210). At this time, the portable medium 20 performs step S110 shown in FIG. 9.

The medium recording key storage unit 107 reads the medium ID for identifying the portable medium 20 and the MKB from the portable medium 20 via the write/read unit 117, and generates medium unique key K0 using the read medium ID and MKB and device key DK1 storedbeforehand. Themediumrecording key storage unit 107 encrypts medium recording key K2 using generated medium unique key K0, to generate encrypted medium recording key EK2 (step S215).

The medium recording key storage unit 107 writes generated encrypted medium recording key EK2 to the portable medium 20 via the write/read unit 117 (step S220). At this time, the portable medium 20 performs step S115 shown in FIG. 9.
Having written encrypted medium recording key EK2 to the portable medium 20, the medium recording key storage unit 107 deletes generated medium recording key EK2 (step S225).

The first decryption unit 108 in the recording/reproduction device 10 receives the move instruction from the medium recording key storage unit 107, and reads device recording key K1 (step S230).
The first decryption unit 108 outputs a read instruction to read the designated encrypted content from the encrypted content storage unit 104, to the encrypted content read unit 109. The encrypted content read unit 109 receives the read instruction from the first decryption unit 108, and sets counter n to 1 (step S235).

The encrypted content read unit 109 reads encrypted content portion EC2[n] which is the nth encrypted content portion of the encrypted content designated by the read instruction (step S240).
The encrypted content read unit 109 judges whether the reading of encrypted content portion EC2[n] is successful (step S245).
If the reading is judged as successful (step S245: YES), the encrypted content read unit 109 temporarily stores read encrypted content portion EC2[n], and also performs a content portion movement operation to move encrypted content portion EC4[n], which is generated from read encrypted content portion EC2[n], to the portable medium (step S250).

The encrypted content read unit 109 then adds 1 to counter n (step S255). The encrypted content read unit 109 reads encrypted content portion EC2[n] (step S260) and performs step S245 onward.
If the reading is judged as not successful (step S245: NO), the encrypted content read unit 109 outputs an instruction notifying of a reading failure to the first decryption unit 108. Upon receiving the instruction notifying of the reading failure from the encrypted content read unit 109, the first decryption unit 108 outputs the received instruction to the medium recording key storage unit 107. Upon receiving the instruction notifying of the reading failure from the first decryption unit 108, the medium recording key storage unit 107 deletes medium recording key K2 stored in the key storage area (step S265).

### 1.10. Content Portion Movement Operation

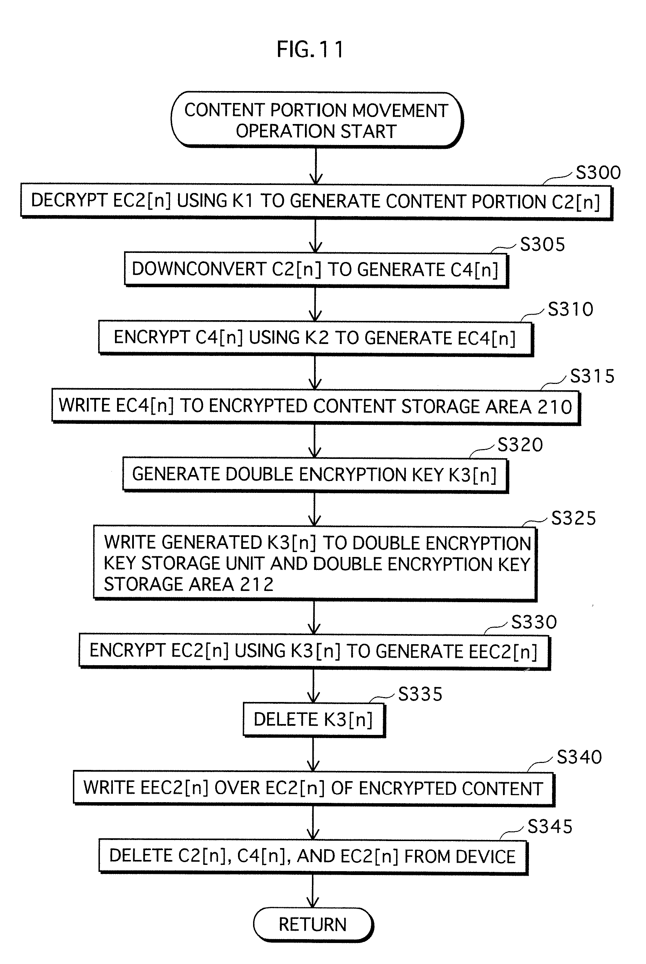

The content portion movement operation performed in step S250 in FIG. 10 is explained below, with reference to a flowchart of FIG. 11.
The first decryption unit 108 in the recording/reproduction device 10 receives encrypted content portion EC2[n] from the encrypted content read unit 109, and decrypts received EC2[n] using device recording key K1 read in step S230 in FIG. 10 as a decryption key, to generate content portion C2[n] (step S300).

The conversion unit 110 in the recording/reproduction device 10 receives content portion C2[n] from the first decryption unit 108, and compression-converts received content portion C2[n] to MPEG-4 through downconversion, thereby generating content portion C4[n] (step S305).
The second encryption unit 111 in the recording/reproduction device 10 receives content portion C4[n] from the conversion unit 110, reads medium recording key K2 stored in the medium recording key storage unit 107, and encrypts content portion C4[n] using read medium recording key K2 as an encryption key to generate encrypted content portion EC4[n] (step S310).

The second encryption unit 111 writes encrypted content portion EC4[n] to the portable medium 20 via the write/read unit 117 (step S315). At this time, the portable medium 20 performs step S120 shown in FIG. 9. The second encryption unit 111 deletes encrypted content portion EC4[n] from the second encryption unit 111 itself.
The second encryption unit 111 outputs the generation instruction to generate the double encryption key for encrypting encrypted content portion EC2[n], to the double encryption key generation unit 112. The double encryption key generation unit 112 receives the generation instruction (the value n), and generates double encryption key K3[n] (step S320).

The double encryption key generation unit 112 outputs generated double encryption key K3[n] to the double encryption key storage unit 113. The double encryption key storage unit 113 receives double encryption key K3[n] from the double encryption key generation unit 112, and stores received double encryption key K3[n] to the double encryption key storage area (step S325). Also, the double encryption key generation unit 112 writes generated double encryption key K3[n] to the double encryption key storage area 212 in the portable medium 20. At this time, the portable medium 20 performs step S125 shown in FIG. 9.

The double encryption unit 114 in the recording/reproduction device 10 receives the encryption instruction (the value n) from the double encryption key storage unit 113, reads double encryption key K3[n] stored in the double encryption key storage unit 113, and reads encrypted content portion EC2[n] and the read instruction from the encrypted content read unit 109. The double encryption unit 114 encrypts encrypted content portion EC2[n] using double encryption key K3[n] as an encryption key, to generate double encrypted content portion EEC2[n] (step S330). The double encryption unit 114 then deletes double encryption key K3[n] (step S335).

The double encrypted content write unit 115 in the recording/reproduction device 10 receives the write instruction and double encrypted content portion EEC2[n] from the double encryption unit 114. The double encrypted content write unit 115 stores received EEC2[n] to the encrypted content storage unit 104, by writing received EEC2[n] over EC2[n] which is stored in the encrypted content storage unit 104 and corresponds to the content ID and portion number included in the write instruction (step S340).

The double encrypted content write unit 115 outputs the first deletion instruction to the first decryption unit 108, the encrypted content read unit 109, the conversion unit 110, and the double encryption unit 114. The first decryption unit 108 receives the first deletion instruction to delete the storage contents from the double encrypted content write unit 115, and deletes decrypted C2[n]. The encrypted content read unit 109 receives the first deletion instruction from the double encrypted content write unit 115, and deletes encrypted content portion EC2[n] read from the encrypted content storage unit 104. The conversion unit 110 receives the first deletion instruction from the double encrypted content write unit 115, and deletes converted content portion C4[n]. The double encryption unit 114 receives the first deletion instruction from the double encrypted content write unit 115, and deletes encrypted content portion EC2[n] read from the encrypted content read unit 109 (step S345).

### 1.11. Second Movement Operation

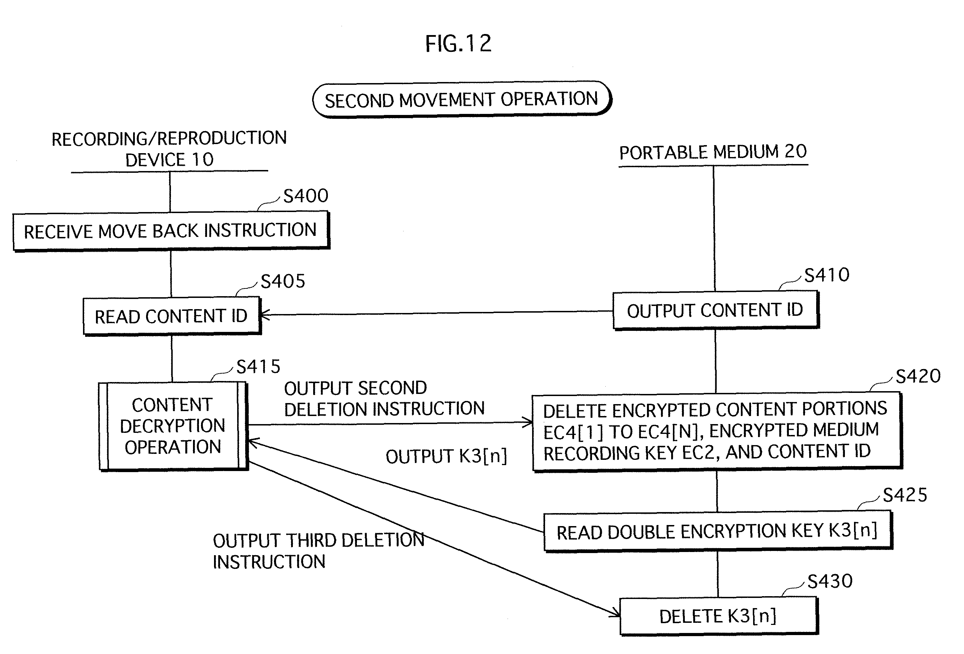

The second movement operation performed in step S35 in FIG. 8 is explained below, with reference to a flowchart of FIG. 12.
Upon receiving the move back instruction in the input unit 118 in a state where the portable medium 20 is inserted in the memory card slot of the recording/reproduction device 10 (step S400), the recording/reproduction device 10 reads the content ID from the portable medium 20 (step S405). At this time, the portable medium 20 reads the content ID and outputs the read content ID to the recording/reproduction device 10 (step S410).

The recording/reproduction device 10 performs a content decryption operation (step S415). In the content decryption operation, the recording/reproduction device 10 outputs the second deletion instruction and the third deletion instruction to the portable medium 20, and receives double encryption key K3[n] (n = 1, 2, ... , N, the same applies hereafter) from the portable medium 20.
The portable medium 20 receives the second deletion instruction from the recording/reproduction device 10, and deletes encrypted content portions EC4[1], EC4[2], ... , EC4[N], encrypted medium recording key EK2, and the content ID (step S420).

The portable medium sequentially reads double encryption keys K3[n] and outputs read double encryption keys K3[n] to the recording/reproduction device 10 (step S425).
The portable medium 20 receives the third deletion instruction from the recording/reproduction device 10, and deletes double encryption keys K3[n] (step S430).

### 1.12. Content Decryption Operation

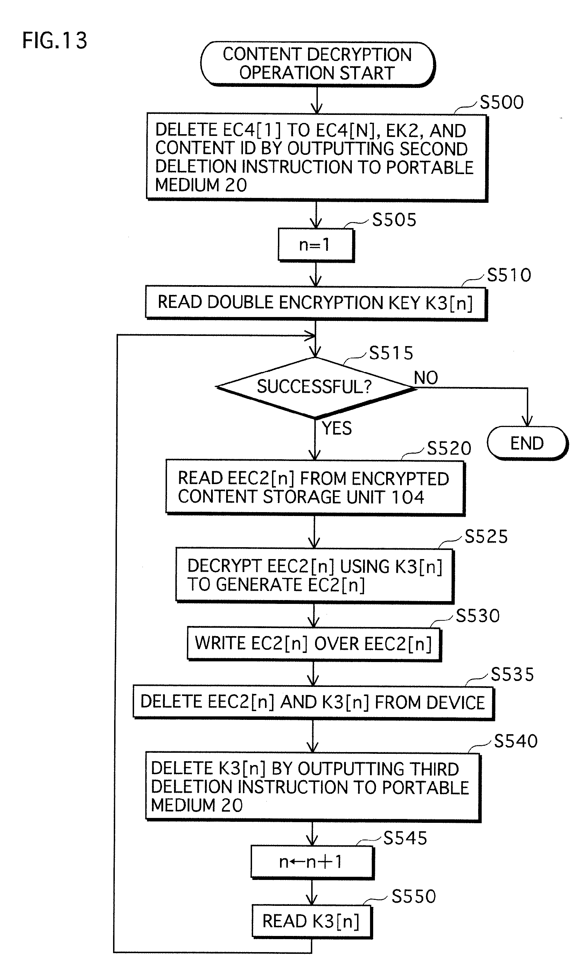

The content decryption operation performed in step S415 in FIG. 12 is explained below, with reference to a flowchart of FIG. 13.

The second decryption unit 116 in the recording/reproduction device 10 outputs the second deletion instruction to the portable medium 20 (step S500), and sets counter n to 1 (step S505). At this time, the portable medium 20 performs step S420 shown in FIG. 12.
The second decryption unit 116 reads double encryption key K3[n] from the portable medium 20 (step S510). At this time, the portable medium 20 performs step S425 shown in FIG. 12.

The second decryption unit 116 judges whether the reading of double encryption key K3[n] is successful (step S515).
If the reading is judged as successful (step S515: YES), the second decryption unit 116 reads double encrypted content portion EEC2[n] corresponding to the read content ID from the encrypted content storage unit 104 (step S520), and decrypts read double encrypted content portion EEC2[n] using double encryption key K3[n] as a decryption key, to generate encrypted content portion EC2[n] (step S525).

The second decryption unit 116 stores generated encrypted content portion EC2[n] to the encrypted content storage unit 104, by writing EC2[n] over EEC2[n] which is stored in the encrypted content storage unit 104 and corresponds to the content ID read from the portable medium 20 (step S530).
The second decryption unit 116 deletes double encrypted content portion EEC2[n] and double encryption key K3[n] from the second decryption unit 116 itself (step S535).

The second decryption unit 116 outputs the third deletion instruction to the portable medium 20 (step S540). At this time, the portable medium 20 performs step S430 shown in FIG. 12.
The second decryption unit 116 adds 1 to counter n (step S545). The second decryption unit 116 reads encrypted content portion EC2[n] (step S550) and performs step S515 onward.

If the reading is judged as not successful (step S515: NO), the second decryption unit 116 ends the operation.

### 1.13. Modifications to the First Embodiment

(1) The above embodiment describes the case where the recording/reproduction device 10 encrypts all encrypted content portions EC2[n] to double encrypted content portions EEC2[n] to thereby generate double encrypted content EEC2, but this is not a limit for the present invention.

For instance, at least one of the N encrypted content portions may be encrypted using a double encryption key. As one example, only encrypted content portion EC2[1] may be encrypted using double encryption key K3. Also, encrypted content portions having even portion numbers out of the N encrypted content portions may be encrypted. Alternatively, encrypted content portions having odd portion numbers out of the N encrypted content portions may be encrypted.

(2) The above embodiment describes the case where the recording/reproduction device 10 generates N double encryption keys K3[n] for N encrypted content portions EC2[n] and stores N double encryption keys K3[n] to the portable medium 20, but the present invention is not limited to this.
The recording/reproduction device 10 may generate a predetermined number (e.g. 5) of double encryption keys K3[1], K3[2], ... , K3[5] which are fewer than the encrypted content portions, and store the generated 5 double encryption keys to the portable medium 20. The predetermined number here may be any number from 1 to less than the number of encrypted content portions, or any number from 2 to less than the number of encrypted content portions.

In this case, the recording/reproduction device 10 uses the 5 double encryption keys in turn. For example, the recording/reproduction device 10 uses K3[1] when encrypting EC2[1], K3[2] when encrypting EC2[2], ...., K3 [5] when encrypting EC2[5], K3[1] when encrypting EC2[6], and K3[2] when encrypting EC2[7]. Subsequently, the recording/reproduction device 10 uses K3[m] (m = 1, 2, ..., 5) in turn.

(3) As an alternative, the recording/reproduction device 10 may generate one double encryption key K3[1] and store generated double encryption key K3[1] to the portable medium 20. In this case, the recording/reproduction device 10 encrypts each encrypted content portion EC2[n] in the following manner.

### <Double Encryption Key Generation Unit 112>

The double encryption key generation unit 112 receives the generation instruction including the value "1", and generates double encryption key K3[1]. The double encryption key generation unit 112 writes generated double encryption key K3[1] to the portable medium 20 via the write/read unit 117. The double encryption key generation unit 112 also outputs generated double encryption key K3[1] to the double encryption key storage unit 113. After outputting double encryption key K3[1] to the double encryption key storage unit 113, the double encryption key generation unit 112 deletes generated double encryption key K3[1] from the double encryption key generation unit 112 itself.

The double encryption key generation unit 112 receives the generation instruction including the value "m" (m = 2, 3, ... , N), and outputs an instruction notifying of the receipt of the generation instruction to the double encryption key storage unit 113.

### <Double Encryption Key Storage Unit 113>

The double encryption key storage unit 113 receives double encryption key K3[1] and the instruction notifying of the receipt of the generation instruction, from the double encryption key generation unit 112.

Having received double encryption key K3[1] from the double encryption key generation unit 112, the double encryption key storage unit 113 stores received double encryption key K3[1] to the double encryption key storage area.
The double encryption key storage unit 113 outputs the encryption instruction to the double encryption unit 114. One example of the encryption instruction is a value indicating the portion number of the encrypted content portion subjected to double encryption.
Upon receiving the first deletion instruction from the double encrypted content write unit 115, the double encryption key storage unit 113 deletes double encryption key K3[1].

### <Double Encryption Unit 114>

The double encryption unit 114 has one-way function F and a temporary storage area for temporarily storing a double encryption key.
The double encryption unit 114 sequentially receives the values 1, 2, ..., N which are each the encryption instruction, from the double encryption key storage unit 113.

Upon receiving the encryption instruction with the value "1", the double encryption unit 114 reads double encryption key K3[1] stored in the double encryption key storage unit 113, and reads encrypted content portion EC2[1] and the read instruction from the encrypted content read unit 109. The double encryption unit 114 encrypts encrypted content portion EC2[1] using double encryption key K3[1] as an encryption key, to generate double encrypted content portion EEC2[1]. The double encryption unit 114 stores read double encryption key K3[1] to the temporary storage area. The double encryption unit 114 outputs generated double encrypted content portion EEC2[1] and the write instruction including the read instruction read from the encrypted content read unit 109, to the double encrypted content write unit 115.

Upon receiving the encryption instruction with the value "m" (m = 2, 3, ... , N), the double encryption unit 114 reads double encryption key K3[m-1] stored in the temporary storage area, and reads encrypted content portion EC2[m] and the read instruction from the encrypted content read unit 109. The double encryption unit 114 applies one-way function F to double encryption key K3[m - 1], to generate double encryption key K3[m]. Which is to say, K3[m] = F (K3[m - 1]). The double encryption unit 114 encrypts encrypted content portion EC2[m] using generated K3[m] as an encryption key, to generate double encrypted content portion EEC2[m]. The double encryption unit 114 stores read double encryption key K3[m] to the temporary storage area. The double encryption unit 114 outputs generated double encrypted content portion EEC2[m] and the write instruction including the read instruction read from the encrypted content read unit 109, to the double encrypted content write unit 115.

Thus, the double encryption unit 114 can generate double encryption key K3[n] by applying, "n - 1" times, one-way function F to double encryption key K3[1].
(4) The above modification (3) describes the case where encrypted content portion EC2[n] is encrypted using K3[n] which is generated by applying one-way function F to double encryption key K3[1] "n - 1" times, but the present invention is not limited to such.

For example, the recording/reproduction device 10 may generate double encryption key K3[0], store generated double encryption key K3[0] to the portable medium 20, and encrypt encrypted content portion EC2[n] using K3[n] which is generated by applying one-way function F to double encryption key K3[0] n times.
(5) The above embodiment describes the case where the recording/reproduction device 10 writes double encrypted content portion EEC2[n] over encrypted content portion EC2[n], but this is not a limit for the present invention.

The recording/reproduction device 10 may write double encrypted content portion EEC2[n] to an area different from encrypted content EC2 in the encrypted content storage unit 104, and then delete EC2[n].
(6) The above embodiment describes the case where the encrypted content read unit 109 in the recording/reproduction device 10 reads encrypted content portion EC2[n] of 128 bits, but the present invention is not limited to this.

For example, the encrypted content read unit 109 may read one or more consecutive encrypted content portions whose total reproduction time length is within a predetermined time (within 45 seconds), starting with the beginning of encrypted content EC2. In this case, the read encrypted content portions are encrypted using a same double encryption key.
In more detail, the encrypted content read unit 109 reads EC2[1], EC2 [2], ... , EC2[10] whose total reproduction time length is within the predetermined time (within 45 seconds). The first decryption unit 108 decrypts EC2[n1] (n1 = 1, 2, ... , 10, the same applies hereafter). The conversion unit 110 converts decrypted C2[n1] to C4[n1]. The second encryption unit 111 sequentially encrypts C4[n1] using medium recording key K2 to generate EC4[n1], and writes generated EC4[n1] to the portable medium 20. The double encryption key generation unit 112 generates double encryption key K3[1], and writes generated double encryption key K3[1] to the portable medium 20 and the double encryption key storage unit 113. The double encryption unit 114 sequentially encrypts encrypted content portions EC2[n1] using double encryption key K3[1], to generate double encrypted content portions EEC2[n1]. The double encrypted content write unit 115 sequentially writes double encrypted content portions EEC2[n1] over encrypted content portions EC2[n1].

The recording/reproduction device 10 repeats the above operation until encrypted content portion EC2[N] is overwritten by double encrypted content portion EEC2[N].
(7) The above modification (6) may further be modified in such a way that only I pictures, which are contained in a combination of content portions corresponding to the encrypted content portions whose total reproduction time length is within the predetermined time (within 45 seconds), are subjected to double encryption.

A specific example of this modification is given below.
The double encryption unit 114 in the recording/reproduction device 10 combines content portions C2[n1] decrypted by the first decryption unit 108 to generate content portion set CC2[1]. The double encryption unit 114 acquires one or more I pictures from content portion set CC2[1], encrypts the acquired I pictures using device recording key K1 to generate ECI2[1], and further encrypts generated ECI2[1] using the double encryption key to generate EECI2[1]. Also, the recording/reproduction device 10 acquires one or more B pictures and one or more P pictures from content portion set CC2[1], encrypts the acquired B pictures using device recording key K1 to generate ECB2[1], and encrypts the acquired P pictures using device recording key K1 to generate ECP2[1]. The recording/reproduction device 10 replaces encrypted content portions EC2[1], ..., , EC2[10] with double encrypted content portions made up of EECI2[1], ECB2[1], and ECP2[1].

When receiving the move back instruction, the recording/reproduction device 10 deletes encrypted content EC4 and encrypted medium recording key EK2 stored on the portable medium 20, and then decrypts each double encrypted content portion to generate content C2. The recording/reproduction device 10 encrypts generated content C2 in units of 128 bits to generate EC2[1], EC2[2], ... , EC2[N], and replaces the double encrypted content with encrypted content EC2.

(8) The above embodiment describes the case where encrypted content EC2 is decrypted, downconverted, and stored to the portable medium 20 in units of content portions, but the present invention should not be limited to this.
For example, each content portion EC4[n] may be stored to the portable medium 20 in the following way.
The recording/reproduction device 10 decrypts encrypted content EC2 to generate content C2, and downconverts generated content C2 to generate content C4. The recording/reproduction device 10 divides generated content C4 into content portions (e.g. 128 bits), encrypts the content portions to EC4[n], and sequentially stores generated content portions EC4[n] to the portable medium 20.

### 2. Second Embodiment

The following describes a copyright protection system 2 as a second embodiment of the present invention, with reference to drawings.

### 2.1. Overview of the Copyright Protection System 2

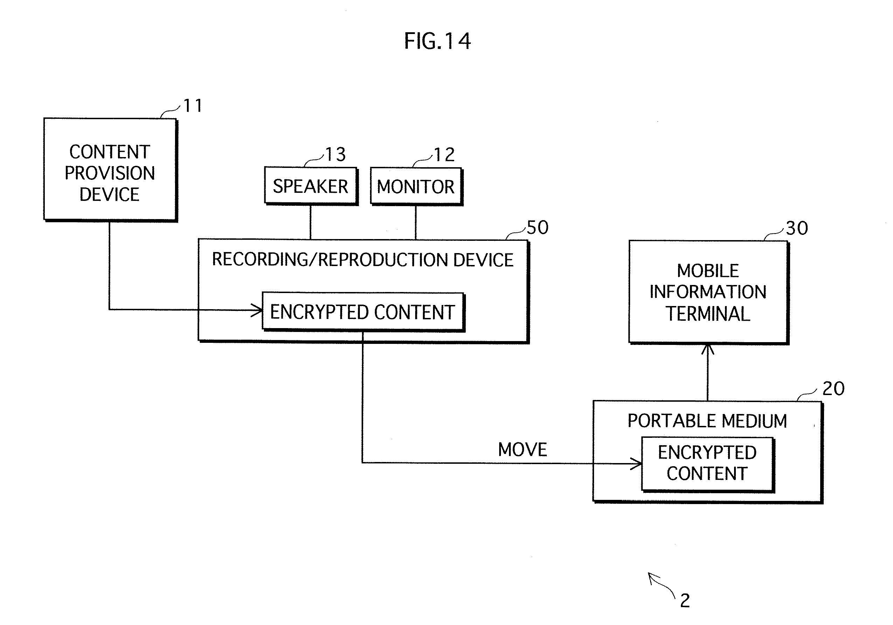

The copyright protection system 2 is roughly made up of a recording/reproduction device 50, the content provision device 11, the monitor 12, the speaker 13, the portable medium 20, and the mobile information terminal 30, as shown in FIG. 14.

The copyright protection system 2 has the following function similar to the copyright protection system 1. Content which is a digital broadcast program broadcast from the content provision device 11 installed in a broadcast station is received by the recording/reproduction device 50, and the received content is recorded and reproduced by the recording/reproduction device 50. The recorded content is also moved to the portable medium 20, and reproduced by the mobile information terminal 30. Further, the content is moved from the portable medium 20 back to the recording/reproduction device 50.

The content provision device 11, the monitor 12, the speaker 13, the portable medium 20, and the mobile information terminal 30 have the same functions and constructions as the corresponding devices in the copyright protection system 1, so that their explanation has been omitted here.
The following describes the recording/reproduction device 50 which is the difference of the copyright protection system 2 from the copyright protection system 1.

### 2.2. Recording/reproduction Device 50

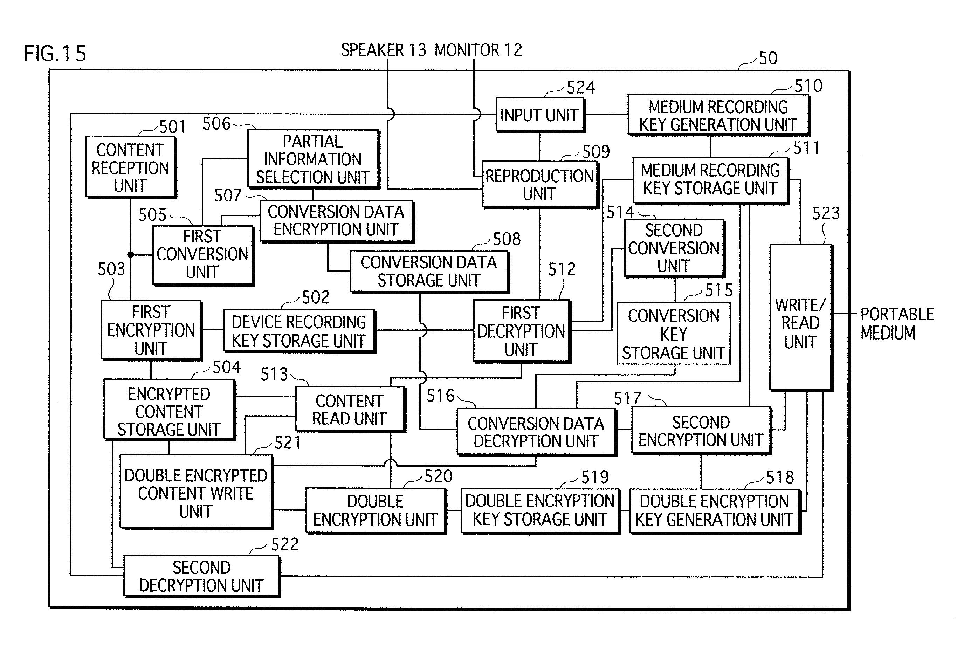

As shown in FIG. 15, the recording/reproduction device 50 includes a content reception unit 501, a device recording key storage unit 502, a first encryption unit 503, an encrypted content storage unit 504, a first conversion unit 505, a partial information selection unit 506, a conversion data encryption unit 507, a conversion data storage unit 508, a reproduction unit 509, a medium recording key generation unit 510, a medium recording key storage unit 511, a first decryption unit 512, a content read unit 513, a second conversion unit 514, a conversion key storage unit 515, a conversion data decryption unit 516, a second encryption unit 517, a double encryption key generation unit 518, a double encryption key storage unit 519, a double encryption unit 520, a double encrypted content write unit 521, a second decryption unit 522, a write/read unit 523, and an input unit 524.

The recording/reproduction device 50 is a computer system provided with a microprocessor, a ROM, a RAM, a hard disk unit, and the like. A computer program is stored on the ROM or the hard disk unit. Functions of the recording/reproduction device 50 can be realized by the microprocessor operating in accordance with this computer program.
As one example, the recording/reproduction device 50 is assumed here to be a hard disk recorder.

### (1) Content Reception Unit 501

The content reception unit 501 includes an antenna. The content reception unit 501 receives content C2 broadcast from the content provision device 11 via the antenna, and outputs received content C2 to the first encryption unit 503 and the first conversion unit 505. The content received by the content reception unit 501 is high-image-quality content which has been compression-coded according to MPEG-2.

### (2) Device Recording Key Storage Unit 502

The device recording key storage unit 502 is the same as the device recording key storage unit 102 in the first embodiment, and so its explanation has been omitted here.
In the following description, the device recording key stored in the device recording key storage unit 502 in advance is denoted by K1.

### (3) First Encryption Unit 503

The first encryption unit 503 receives content C2 from the content reception unit 501.
The first encryption unit 503 sequentially reads blocks C2[1], C2[2], C2[3], ... , C2[N] each of which has a data size (e.g. 128 bits) that corresponds to a reproduction time length within a predetermined time (e.g. within 45 seconds), starting with the beginning of content C2. Hereafter, these blocks are referred to as content portions. The reproduction time length of content portion C2[n] (n = 1, 2, ... , N, the same applies hereafter) is within the predetermined time (within 45 seconds).

Also, the first encryption unit 503 reads device recording key K1 from the device recording key storage unit 502, and applies encryption algorithm E1 to content portion C2[n] using device recording key K1 as an encryption key, to generate encrypted content portion EC2[n]. Which is to say, EC2[n] = E1 (C2[n], K1). As one example, encryption algorithm E1 used by the first encryption unit 503 is AES (Advanced Encryption Standard). AES is a known technique and so its explanation has been omitted here. Here, the size of data to be encrypted is the data size corresponding to the reproduction time length within the predetermined time (e.g. within 45 seconds).

The first encryption unit 503 stores generated encrypted content portions EC2[1], EC2[2], ... , EC2[N] to the encrypted content storage unit 504.
After completing the storage of encrypted content portions EC2[1], EC2[2], ... , EC2[N], the first encryption unit 503 deletes content C2 from the first encryption unit 503 itself.

### (4) Encrypted Content Storage Unit 504

The encrypted content storage unit 504 is the same as the encrypted content storage unit 104 in the first embodiment, and so its explanation has been omitted here.

In this embodiment, the encrypted content portions are denoted by EC2[1], EC2[2], ... , EC2[N] and the data composed of encrypted content portions EC2[1], EC2[2], ... , EC2[N] is denoted by encrypted content EC2, as in the first embodiment.
The following description uses the example of the sets of encrypted content EC2₁, EC2₂, EC2₃, ... shown in FIG. 3 according to need.

### (5) First Conversion Unit 505

The first conversion unit 505 is actually constituted by a downconverter for converting MPEG-2 data to MPEG-4 data, and the like.
The first conversion unit 505 receives content C2 from the content reception unit 501, and compression-converts content C2 to MPEG-4, thereby generating converted content C4.

The first conversion unit 505 sequentially reads blocks C4[1], C4[2], C4[3], ... , C4[N] each of which has a data size (e.g. 128 bits) that corresponds to a reproduction time length within a predetermined time (e.g. within 45 seconds), starting with the beginning of the content. Hereafter, these blocks are referred to as converted content potions. The reproduction time length of converted content portion C4[n] (n = 1, 2, ... , N, the same applies hereafter) is within the predetermined time (within 45 seconds).

The first conversion unit 505 temporarily stores converted content portion C4[n], and outputs a selection instruction to the partial information selection unit 506.
After generating converted content C4, the first conversion unit 505 deletes content C2.
Also, upon receiving a converted data deletion instruction from the conversion data encryption unit 507, the first conversion unit 50 deletes temporarily stored converted content portion C4[n].

Hereafter, converted content portions are simply referred to as content portions.

### (6) Partial Information Selection Unit 506

The partial information selection unit 506 receives the selection instruction from the first conversion unit 505, reads the beginning block of converted content C4 stored in the first conversion unit 505, i.e. content portion C4[1], and outputs read content portion C4[1] to the conversion data encryption unit 507 as partial information PC4.

After outputting partial information PC4, the partial information selection unit 506 deletes partial information PC4 from the partial information selection unit 506 itself. (7) Conversion Data Encryption Unit 507
The conversion data encryption unit 507 generates conversion data from converted content C4. The conversion data referred to here is a result of encrypting the converted content.

The conversion data encryption unit 507 receives partial information PC4 from the partial information selection unit 506, and sequentially reads content portions C4[n] from the first conversion unit 505.
The conversion data encryption unit 507 applies encryption algorithm E1_1 to read content portion C4[n] using received partial information PC4 as an encryption key, to generate encrypted converted content portion EC4_1[n]. Which is to say, EC4_1[n] = E1_1 (C4[n], PC4). Encryption algorithm E1_1 used by the conversion data encryption unit 507 is AES as one example. Since AES is a known technique, its explanation has been omitted here. Hereafter, encrypted converted content portions are simply referred to as encrypted content portions.

The conversion data encryption unit 507 stores generated encrypted content portions EC4_1[1], EC4_1[2], ... , EC4_1[N] to the conversion data storage unit 508.
After completing the storage of encrypted content portions EC4_1[1], EC4_1[2], ... , EC4_1[N], the conversion data encryption unit 507 deletes content portion C4[n] and partial information PC4 from the conversion data encryption unit 507 itself. The conversion data encryption unit 507 also outputs the conversion data deletion instruction to the first conversion unit 505.

### (8) Conversion Data Storage Unit 508

The conversion data storage unit 508 is actually a hard disk unit, and has an area for storing the encrypted converted content generated by encrypting converted content C4.
The conversion data storage unit 508 stores encrypted content portions EC4_1[n] from the conversion data encryption unit 507, and stores encrypted content portions EC4_1[n] in sequence. Data composed of encrypted content portions EC4_1[1], EC4_1[2], ... , EC4_1[N] is denoted by encrypted converted content EC4_1. Hereafter, encrypted converted content is simply referred to as encrypted content. Encrypted content EC4_1 serves as the conversion data mentioned earlier.

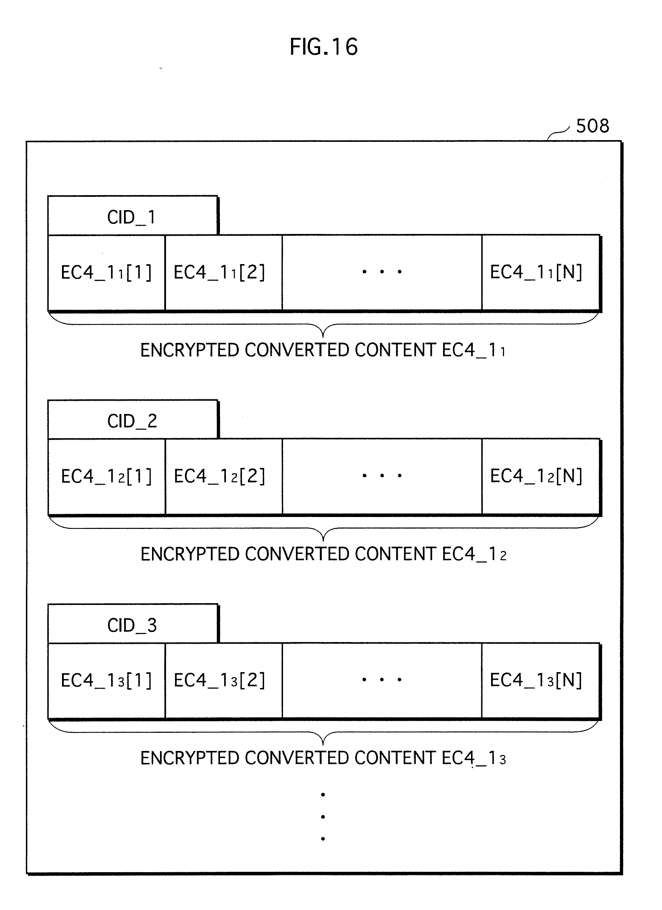

The conversion data storage unit 508 stores a plurality of sets of encrypted content EC4_1₁, EC4_1₂, EC4_1₃, ... , as shown in FIG. 16. Here, each subscript is used to identify a different one of the plurality of sets of encrypted content. Each set of encrypted content EC4_1 is associated with a content ID that is assigned to EC2 which is high-image-quality content corresponding to encrypted content EC4_1. In detail, a content ID "CID_1" of EC2₁ is associated with EC4_1₁, a content ID "CID_2" of EC2₂ is associated with EC4_1₂, and a content ID "CID_3" of EC2₃ is associated with EC4_1₃.

### (9) Reproduction Unit 509

The reproduction unit 509 is the same as the reproduction unit 105 in the first embodiment, and so its explanation has been omitted here.

### (10) Medium Recording Key Generation Unit 510

The medium recording key generation unit 510 is the same as the medium recording key generation unit 106 in the first embodiment, and so its explanation has been omitted here.

Here, the medium recording key generated by the medium recording key generation unit 510 is denoted by K2.

### (11) Medium Recording Key Storage Unit 511

The medium recording key storage unit 511 has a key storage area for storing medium recording key K2, and holds device key DK1.
The medium recording key storage unit 511 receives medium recording key K2 and the move instruction from the medium recording key generation unit 510, and stores received K2 in the internal key storage area. The medium recording key storage unit 511 also writes the content ID included in the received move instruction to the portable medium 20 via the write/read unit 523.

The medium recording key storage unit 511 reads a medium ID for identifying the portable medium 20 and an MKB (Media Key Block) from the portable medium 20 via the write/read unit 523, and generates medium unique key K0 using the read medium ID and MKB and device key DK1 stored in advance. The medium recording key storage unit 511 encrypts medium recording key K2 using generated medium unique key K0, to generate encrypted medium recording key EK2. Here, the generation of medium unique key K0 and the generation of encrypted medium recording key EK2 are conducted based on CPRM.

The medium recording key storage unit 511 writes encrypted medium recording key EK2 to the portable medium 20 via the write/read unit 523. Afterwritingencryptedmedium recording key EK2, the medium recording key storage unit 511 deletes encrypted medium recording key EK2 from the medium recording key storage unit 511 itself.
The medium recording key storage unit 511 outputs the received move instruction to the first decryption unit 512.
Also, upon receiving an instruction notifying of a failure to read an encrypted content portion from the first decryption unit 516, the medium recording key storage unit 511 deletes medium recording key K2 stored in the key storage area.

### (12) First Decryption Unit 512

The first decryption unit 512 receives the move instruction from the medium recording key storage unit 511, and reads device recording key K1 from the device recording key storage unit 502.
The first decryption unit 512 outputs a beginning read instruction to read a content portion at the beginning of the designated encrypted content from the encrypted content storage unit 504, to the content read unit 513. As one example, the beginning read instruction is the content ID included in the move instruction.

The first decryption unit 512 receives encrypted content portion EC2[1] from the content read unit 513, and applies decryption algorithm D1 to encrypted content portion EC2[1] using device recording key K1 read from the device recording key storage unit 502 as a decryption key, to generate content portion C2[1]. Which is to say, C2[1] = D1 (EC2[1], K1). Decryption algorithm D1 used here is an algorithm for converting ciphertext, which is generated by encryption according to encryption algorithm E1, to plaintext.

The first decryption unit 512 outputs generated content portion C2[1] to the second conversion unit 514.
After outputting content portion C2[1] to the second conversion unit 514, the first decryption unit 512 deletes decrypted C2[1] from the first decryption unit 512 itself.
A specific example is given below. Upon receiving the content ID "CID_1" as the designation of the content, the first decryption unit 512 outputs the content ID "CID_1" to the content read unit 513 as the beginning read instruction. The first decryption unit 512 receives encrypted content portion EC2₁[1] from the content read unit 513, and generates content portion C2₁[1]. The first decryption unit 512 outputs generated content portion C2₁[1] and the content ID included in the move instruction received from the medium recording key storage unit 511, to the second conversion unit 514.

Also, when reproducing content, the first decryption unit 512 receives an instruction from the reproduction unit 509, and decrypts encrypted content EC2 read from the encrypted content storage unit 504 via the content read unit 513 using device recording key K1. The first decryptionunit 512 outputs decrypted content C2 to the reproduction unit 509.

### (13) Content Read Unit 513

The content read unit 513 receives the beginning read instruction from the first decryption unit 512, and reads the encrypted content portion at the beginning of the designated encrypted content. Also, the content read unit 513 temporarily stores the received beginning read instruction. In detail, the content read unit 513 receives the content ID from the first decryption unit 512, and reads encrypted content portion EC2[1] whose content ID matches the received content ID from the encrypted content storage unit 504. The content read unit 513 outputs EC2[1] to the first decryption unit 512. After outputting EC2[1] to the first decryption unit 512, the content read unit 513 deletes read encrypted content portion EC2[1] from the content read unit 513 itself.

Also, when receiving a content read instruction to read encrypted content portion EC2[n] which is the nth encrypted content portion of the designated content from the double encryption unit 520, the content read unit 513 reads the nth content portion EC2[n] designated by the received content read instruction, out of the encrypted content portions of the encrypted content whose content ID matches the content ID included in the temporarily stored beginning read instruction. The content read unit 513 outputs read encrypted content portion EC2[n] to the double encryption unit 520.

When receiving a first deletion instruction to delete the storage contents from the double encrypted content write unit 521, the content read unit 513 deletes read encrypted content portions EC2[n].

### (14) Second Conversion Unit 514

The second conversion unit 514 is actually constituted by a downconverter for converting MPEG-2 data to MPEG-4 data, and the like.

The second conversion unit 514 receives content portion C2[1] and the content ID from the first decryption unit 512, and compression-converts received content portion C2[1] to MPEG-4, to generate content portion C4[1].
The second conversion unit 514 stores generated content portion C4[1] to the conversion key storage unit 515 as partial information PC4, and outputs the content ID to the conversion key storage unit 515. Partial information PC4 serves as a conversion key for generating a converted content portion from an encrypted converted content portion.

After storing partial information PC4 (= C4[1]) to the conversion key storage unit 515, the second conversion unit 514 deletes generated C4[1] from the second conversion unit 514 itself.

### (15) Conversion Key Storage Unit 515

The conversion key storage unit 515 has an area for storing partial information PC4.
The conversion key storage unit 515 receives the content ID from the second conversion unit 514.

The conversion key storage unit 515 also receives partial information PC4 from the second conversion unit 514, and stores received partial information PC4.
The conversion key storage unit 515 outputs a decryption instruction to decrypt EC4_1[n], to the conversion data decryption unit 516. The decryption instruction here includes the content ID received from the second conversion unit 514.

Upon receiving an instruction notifying of a failure to read the encrypted content portion from the conversion data decryption unit 516, the conversion key storage unit 515 deletes stored decryption key PC4 (= C4[1]).

### (16) Conversion Data Decryption Unit 516

The conversion data decryption unit 516 receives the decryption instruction from the conversion key storage unit 515, and sequentially reads encrypted content portions EC4_1[1], EC4_1[2], ... , EC4_1[N] from the conversion data storage unit 508.

The conversion data decryption unit 516 applies decryption algorithm D1_1 to read encrypted content portion EC4_1[n] using partial information PC4 (= C4[1]) stored in the conversion key storage unit 515 as a decryption key, to generate content portion C4[n]. Which is to say, C4[n] = D1_1 (EC4_1[n], PC4). Decryption algorithm D1_1 is an algorithm for converting ciphertext, which is generated by encryption according to encryption algorithm E1_1, to plaintext.

The conversion data decryption unit 516 outputs generated content portion C4[n] to the second encryption unit 517.
When the reading of the encrypted content portion is not successful, the conversion data decryption unit 516 outputs an instruction notifying of a reading failure, to the medium recording key storage unit 511 and the conversion key storage unit 515.
Also, upon receiving the first deletion instruction from the double encrypted content write unit 521, the conversion data decryption unit 516 deletes decrypted C4[n].

In this way, the conversion data decryption unit 516 can decrypt the conversion data, i.e., encrypted content EC4_1, by sequentially decrypting encrypted content portions EC4_1[n]. Also, the conversion data decryption unit 516 can sequentially output decrypted content portions C4[1], C4[2], ... , C4[N] to the second encryption unit 517.

A specific operation is explained below.
The conversion data decryption unit 516 has counter n.
The conversion data decryption unit 516 receives the decryption instruction from the conversion key storage unit 515, and sets counter n to 1.
The conversion data decryption unit 516 reads encrypted content portion EC4_1[n] which is the nth encrypted content portion of the designated encrypted content from the conversion data storage unit 508.

The conversion data decryption unit 516 judges whether the reading of encrypted content portion EC4_1[n] is successful.
If the reading is judged as successful, the conversion data decryption unit 516 reads partial information PC4 from the conversion key storage unit 515, and decrypts encrypted content portion EC4_1[n] read from the conversion data storage unit 508 using partial information PC4 as a decryption key, to-generate content portion C4[n]. The conversion data decryption unit 516 outputs generated content portion C4[n] to the second encryption unit 517.

The conversion data decryption unit 516 adds 1 to counter n. The conversion data decryption unit 516 then reads encrypted content portion EC4_1[n] from the conversion data storage unit 508 and judges whether the reading of encrypted content portion EC4_1[n] is successful.
If the reading is judged as not successful, the conversion data decryption unit 516 outputs an instruction notifying of a reading failure to the medium recording key storage unit 511 and the conversion key storage unit 515.

For example, when counter n is N + 1, the reading of the encrypted content portion will end up being a failure because there is no encrypted content portion EC4_1[N + 1]. In other words, when counter n is in a range of 1 to N, encrypted content portion EC4_1[n] exists, so that the conversion data decryption unit 516 succeeds in reading the encrypted content portion. Thus, encrypted content portions EC4_1[1], EC4_1[2], ... , EC4_1[N] can be read sequentially.

As a specific example, the conversion data decryption unit 516 sequentially reads EC4_1₁[1], EC4_1₁[2], ..., EC4_1₁[N] corresponding to the content ID "CID_1" from the conversion data storage unit 508 and decrypts them to generate C4₁[1], C4₁[2], ... , C4₁[N]. The conversion data decryption unit 516 sequentially outputs generated C4₁[1], C4₁[2], ..., C4₁[N] to the second encryption unit 517.

### (17) Second Encryption Unit 517

The second encryption unit 517 sequentially receives content portions C4[1], C4[2], ... , C4[N] from the conversion data decryption unit 516.
Having received content portion C4[n] from the conversion data decryption unit 516, the second encryption unit 517 reads medium recording key K2 stored in the medium recording key storage unit 511, and applies encryption algorithm E2 to content portion C4[n] using read medium recording key K2 as an encryption key, to generate encrypted content portion EC4[n]. Which is to say, EC4[n] = E2 (C4[n], K2). Encryption algorithm E2 used by the second encryption unit 517 is AES as one example.

The second encryption unit 517 moves encrypted content portion EC4[n] to the portable medium 20 via the write/read unit 523. That is, the second encryption unit 517 writes encrypted content portion EC4[n] to the portable medium 20, and deletes encrypted content portion EC4[n] from the second encryption unit 517 itself.
Also, the second encryption unit 517 outputs a generation instruction to generate a double encryption key used for encrypting encrypted content portion EC2[n], to the double encryption key generation unit 518. One example of the generation instruction is a value indicating a portion number assigned to the encrypted content portion subjected to double encryption. When the encrypted content portion subjected to double encryption is EC2[n], the generation instruction is "n".

In this way, the second encryption unit 517 can sequentially move encrypted content portions EC4[1], EC4[2], ... , EC4[N] to the portable medium 20.
As a specific example, the second encryption unit 517 sequentially receives content portions C4₁[1], C4₁[2], ... , C4₁[N] from the conversion data decryption unit 516 and generates EC4₁[1], EC4₁[2],..., EC4₁[N]. The second encryption unit 517 sequentially moves generated encrypted content portions EC4₁[1], EC4₁[2], ... , EC4₁[N] to the portable medium 20 via the write/read unit 523.

### (18) Double Encryption Key Generation Unit 518

The double encryption key generation unit 518 is the same as the double encryption key generation unit 112 in the first embodiment, and so its explanation has been omitted here.

### (19) Double Encryption Key Storage Unit 519

The double encryption key storage unit 519 is the same as the double encryption key storage unit 113 in the first embodiment, and so its explanation has been omitted here.

Hereafter, the double encryption key stored in the double encryption key storage unit 519 is denoted by K3[n].

### (20) Double Encryption Unit 520

The double encryption unit 520 sequentially receives values 1, 2, ... , N which are each the encryption instruction from the double encryption key storage unit 519.

Having received the encryption instruction (the value n), the double encryption unit 520 reads double encryption key K3[n] stored in the double encryption key storage unit 519, and the beginning read instruction from the content read unit 513.
The double encryption unit 52 0 outputs the received value n which is the encryption instruction, to the content read unit 513 as a content read instruction.

The double encryption unit 520 receives encrypted content portion EC2[n] from the content read unit 513, and applies encryption algorithm E3 to encrypted content portion EC2[n] using double encryption key K3[n] as an encryption key, to generate double encrypted content portion EEC2[n]. Which is to say, EEC2[n] = E3 (EC2[n], K3[n]). Encryption algorithm E3 used by the double encryption unit 520 is AES as one example.

After generating double encrypted content portion EEC2[n], the double encryption unit 520 deletes double encryption key K3[n] from the device. As a result, double encryption key K3[n] in the double encryption unit 520 and double encryption key K3[n] in the double encryption key storage unit 519 are deleted.
The double encryption unit 520 outputs generated double encrypted content portion EEC2[n] and a write instruction including the beginning read instruction read from the content read unit 513, to the double encrypted content write unit 521. One example of the write instruction is information that includes the content ID and the value indicating the portion number of the encrypted content portion corresponding to the double encrypted content portion.

In this way, the double encryption unit 520 can sequentially generate double encrypted content portions EEC2[1], EEC2[2], ... , EEC2[N] and output double encrypted content portions EEC2[1], EEC2[2], ... , EEC2[N] to the double encrypted content write unit 521.

### (21) Double Encrypted Content Write Unit 521

The double encrypted content write unit 115 is the same as the double encrypted content write unit 115 in the first embodiment, except for the output destination of the first deletion instruction.

The double encrypted content write unit 521 outputs the first deletion instruction to the content read unit 513, the conversion data decryption unit 516, and the double encryption unit 520.

### (22) Second Decryption Unit 522

The second decryption unit 522 is the same as the second decryption unit 116 in the first embodiment, and so its explanation has been omitted here.

### (23) Write/read Unit 523

The write/read unit 523 is the same as the write/read unit 117 in the first embodiment, and so its explanation has been omitted here.

### (24) Input Unit 524

The input unit 524 is the same as the input unit 118 in the first embodiment, and so its explanation has been omitted here.

### 2.3. Overall Operation of the Copyright Protection System 2

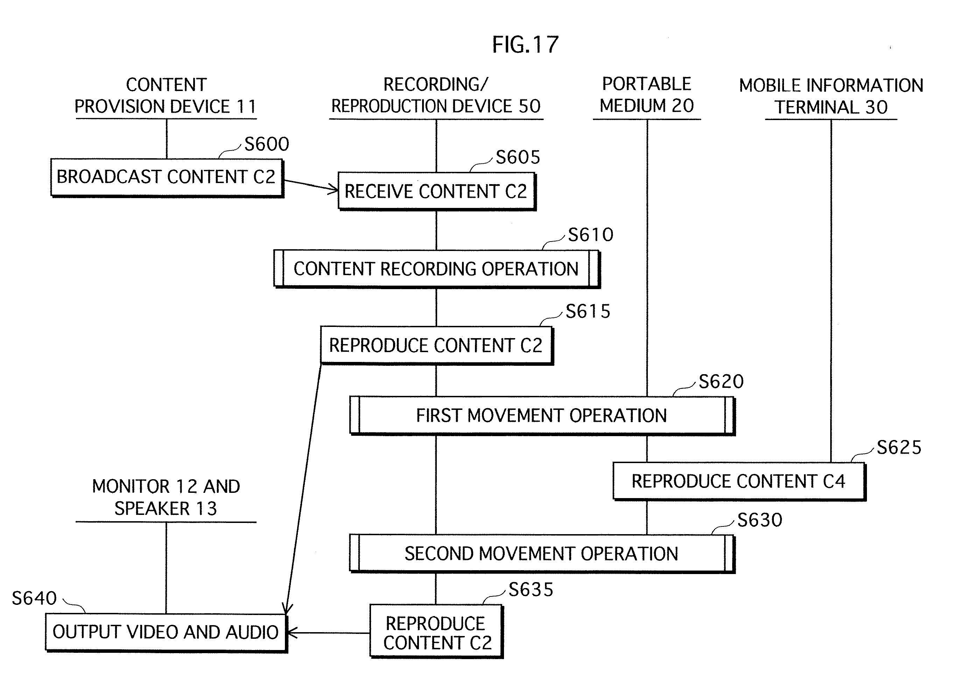

An overall operation of the copyright protection system 2 is explained below, with reference to a flowchart of FIG. 17.
The content provision device 11 broadcasts content C2 (step S600). The recording/reproduction device 50 receives content C2 (step S605).

The recording/reproduction device 50 performs a content recording operation, to generate encrypted content EC2 and encrypted content EC4_1 for received content C2 and store them (step S610).
Upon receiving the reproduction instruction for content C2, the recording/reproduction device 50 decrypts stored encrypted content EC2 using device recording key K1 as a decryption key, to generate content C2. The recording/reproduction device 50 decodes generated content C2 to generate a video signal and an audio signal, and outputs the generated video signal to the monitor 12 and the generated audio signal to the speaker 13 to reproduce content C2 (step S615).

The monitor 12 receives the video signal from the recording/reproduction device 50, and outputs video based on the received video signal. The speaker 13 receives the audio signal from the recording/reproduction device 50, and outputs audio based on the received audio signal (step S640).
Upon receiving the move instruction in a state where the portable medium 20 is inserted in the memory card slot of the recording/reproduction device 50, the recording/reproduction device 50 performs a first movement operation to move the stored content to the portable medium 20 inserted in the memory card slot (step S620). As a result, encrypted content portions EC4[n] (n = 1, 2, ... , N, the same applies hereafter), which are generated by encrypting content portions C4[n] compression-coded from content portions C2[n] according to MPEG-4 using medium recording key K2, encrypted medium recording key EK2, double encryption keys K3[n], and the content ID are stored on the portable medium 20.

In a state where the portable medium 20 is inserted in the memory card slot of the mobile information terminal 30, the mobile information terminal 30 generates medium unique key K0, and decrypts encrypted medium recording key EK2 stored on the portable medium 20 using generated medium unique key K0, to generate medium recording key K2. The mobile information terminal 30 sequentially decrypts encrypted content portions EC4[n] using generated medium recording key K2 as a decryption key, to generate content portions C4[n]. The mobile information terminal 30 sequentially decodes generated content portions C4[n], to generate a video signal and an audio signal. The mobile information terminal 30 outputs video and audio based on the generated video signal and audio signal, thereby reproducing content C4 (step S625).

Upon receiving the move back instruction in a state where the portable medium 20 is inserted in the memory card slot of the recording/reproduction device 50, the recording/reproduction device 50 performs a second movement operation to move the content stored on the portable medium 20 to the recording/reproduction device 50 (step S630). As a result, encrypted content potions EC2[n] (n = 1, 2, ..., N, the same applies hereafter), which are generated by encrypting content portions C2[n] compression-coded according to MPEG-2 using device recording key K1, are stored in the recording/reproduction device 50.

Upon receiving the reproduction instruction for content C2, the recording/reproduction device 50 decrypts stored encrypted content EC2 using device recording key K1 as a decryption key, to generate content C2. The recording/reproduction device 50 decodes generated content C2 to generate a video signal and an audio signal, and outputs the generated video signal to the monitor 12 and the generated audio signal to the speaker 13, thereby reproducing content C2 (step S635). The monitor 12 and the speaker 13 output video and audio based on the video signal and audio signal received from the recording/reproduction device 50, respectively (step S640).

### 2.4. Content Recording Operation

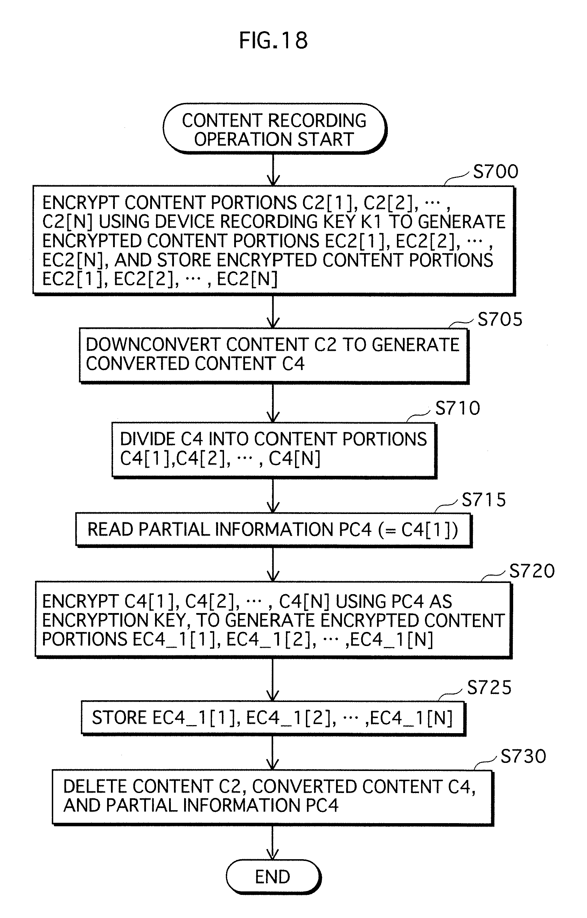

The content recording operation performed in step S610 in FIG. 17 is explained below, with reference to a flowchart of FIG. 18.
The first encryption unit 503 in the recording/reproduction device 50 receives content C2 from the content reception unit 501, and divides content C2 from the beginning into content portions C2[1], C2[2], ... , C2[N] each of which has a reproduction time length within the predetermined time (e.g. within 45 seconds). The first encryption unit 503 reads device recording key K1 from the device recording key storage unit 502, and encrypts content portion C2[n] using device recording key K1 as an encryption key, to generate encrypted content portion EC2[n]. The first encryption unit 503 sequentially stores generated encrypted content portions EC2[n] to the encrypted content storage unit 504 (step S700).

The first conversion unit 505 in the recording/reproduction device 50 receives content C2 from the content reception unit 501, and downconverts received content C2 to generate converted content C4 (step S705).
The first conversion unit 505 divides converted content C4 from the beginning into converted content portions C4[1], C4[2], ... , C4[N] each of which has a reproduction time length within the predetermined time (e.g. within 45 seconds) (step S710).

The partial information selection unit 506 in the recording/reproduction device 50 receives the selection instruction from the first conversion unit 505, reads content portion C4[1] at the beginning of converted content C4 stored in the first conversion unit 505, and sets read content portion C4[1] as partial information PC4 (step S715).
The conversion data encryption unit 507 in the recording/reproduction device 50 receives partial information PC4 from the partial information selection unit 506, and sequentially reads content portions C4[n] from the first conversion unit 505. The conversion data encryption unit 507 encrypts read content portion C4[n] using received partial information PC4 as an encryption key, to generate encrypted content portion EC4_1[n] (step S720). The conversion data encryption unit 507 sequentially stores generated encrypted content portions EC4_1[1], EC4_1[2], ... , EC4_1[N] to the conversion data storage unit 508 (step S725).

The first encryption unit 503 in the recording/reproduction device 50 deletes content C2 from the first encryption unit 503 itself. The first conversion unit 505 deletes content C2 and converted content portions C4[n] from the first conversion unit 505 itself. The partial information selection unit 506 deletes PC4 from the partial information selection unit 506 itself. The conversion data encryption unit 507 deletes content portions C4[n] and partial information PC4 from the conversion data encryption unit 507 itself (step S730).

### 2.5. First Movement Operation

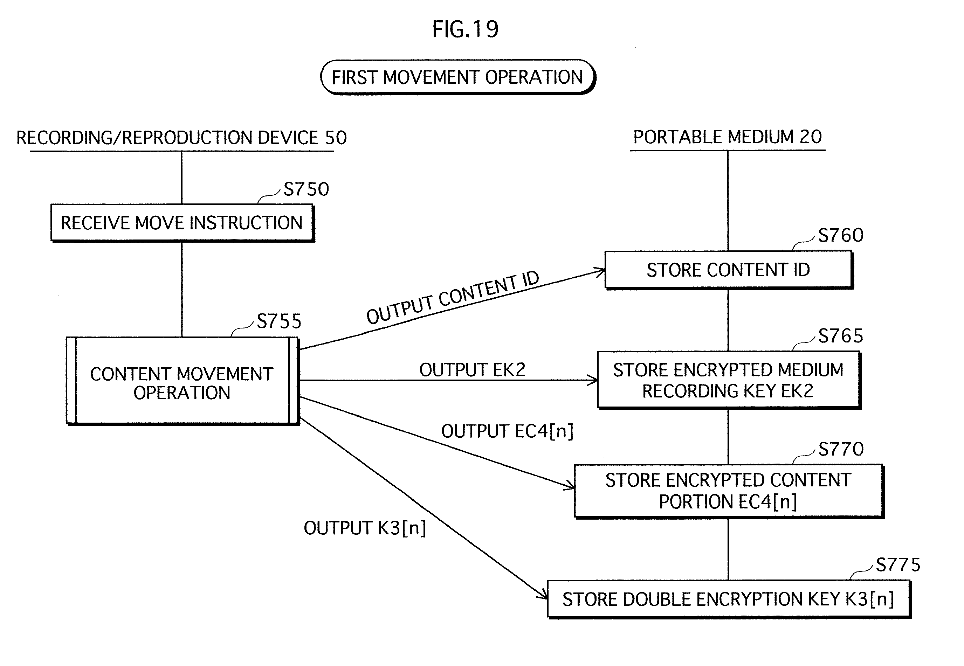

The first movement operation performed in step S620 in FIG. 17 is explained below, with reference to a flowchart of FIG. 19.
Upon receiving the move instruction in the input unit 524 in a state where the portable medium 20 is inserted in the memory card slot of the recording/reproduction device 50 (step S750), the recording/reproduction device 50 performs a content movement operation to move the stored content to the portable medium 20 (step S755). In the content movement operation, the recording/reproduction device 50 outputs the content ID, encrypted medium recording key EK2, encrypted content portions EC4[n] (n = 1, 2, ..., N, the same applies hereafter), and double encryption keys K3[n] to the portable medium 20.

The portable medium 20 receives the content ID from the recording/reproduction device 50, and stores the received content ID to the content ID storage area 213 (step S760).
The portable medium 20 receives encrypted medium recording key EK2 from the recording/reproduction device 50, and stores received encrypted medium recording key EK2 to the medium recording key storage area 211 (step S765).

The portable medium 20 receives encrypted content portion EC4[n] from the recording/reproduction device 50, and writes received encrypted content portion EC4[n] to the encrypted content storage area 210 (step S770).
The portable medium 20 receives double encryption key K3[n] from the recording/reproduction device 50, and writes received double encryption key K3[n] to the double encryption key storage area 212 (step S775).

### 2.6. Content Movement Operation

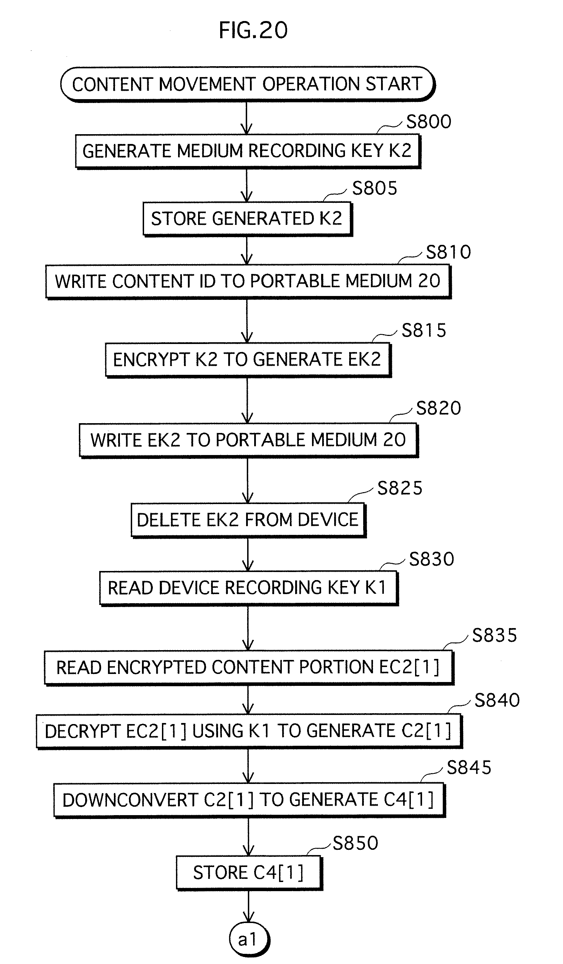

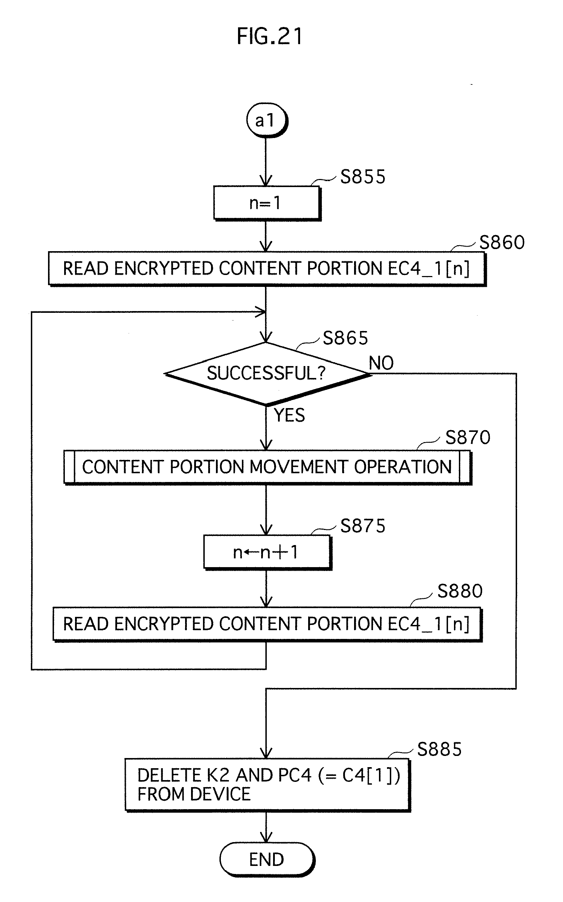

The content movement operation performed in step S755 in FIG. 19 is explained below, with reference to flowcharts of FIGS. 20 and 21.
The medium recording key generation unit 510 in the recording/reproduction device 50 receives the move instruction from the input unit 524, and generates medium recording key K2 (step S800).

The medium recording key storage unit 511 in the recording/reproduction device 50 receives medium recording key K2 and the move instruction from the medium recording key generation unit 510, and stores received K2 to the internal key storage area (step S805). Also, the medium recording key storage unit 511 writes the content ID included in the received move instruction to the portable medium 20 (step S810). At this time, the portable medium 20 performs step S760 shown in FIG. 19.

The medium recording key storage unit 511 reads the medium ID and the MKB from the portable medium 20, and generates medium unique key K0 using the read medium ID and MKB and device key DK1 stored beforehand. The medium recording key storage unit 511 encrypts medium recording key K2 using generated medium unique key K0, to generate encrypted medium recording key EK2 (step S815).
The medium recording key storage unit 511 writes generated encrypted medium recording key EK2 to the portable medium 20 (step S820). At this time, the portable medium 20 performs step S765 shown in FIG. 19.

After writing encrypted medium recording key EK2 to the portable medium 20, the medium recording key storage unit 511 deletes generated encrypted medium recording key EK2 (step S825).
The first decryption unit 512 in the recording/reproduction device 50 receives the move instruction from the medium recording key storage unit 511, and reads device recording key K1 (step S830).
The first decryption unit 512 outputs the beginning read instruction to read from the encrypted content storage unit 504, to the content read unit 513. The content read unit 513 receives the beginning read instruction from the first decryption unit 512, and reads encrypted content portion EC2[1] at the beginning of encrypted content EC2 designated by the beginning read instruction (step S835).

The first decryption unit 512 receives encrypted content portion EC2[1] from the content read unit 513, and decrypts received encrypted content portion EC2[1] using device recording key K1 read in step S830 as a decryption key, to generate content portion C2[1] (step S840).
The second conversion unit 514 in the recording/reproduction device 50 receives content portion C2[1] and the content ID from the first decryption unit 512, and downconverts received content portion C2[1] to generate content portion C4[1] (step S845).

The second conversion unit 514 stores generated content portion C4[1] to the conversion key storage unit 515 as partial information PC4 (step S850).
The conversion data decryption unit 516 receives the decryption instruction from the conversion key storage unit 515, and sets counter n to 1 (step S855).
The conversion data decryption unit 516 reads encrypted content portion EC4_1[n] which is the nth encrypted content portion of the designated encrypted content from the conversion data storage unit 508 (step S860).

The conversion data decryption unit 516 judges whether the reading of encrypted content portion EC4_1[n] is successful (step S865).
If the reading is judged as successful (step S865: YES), the recording/reproduction device 50 performs a content portion movement operation to move encrypted content portion EC4[n], which is generated from read encrypted content portion EC2[n], to the portable medium (step S870).

The conversion data decryption unit 516 adds 1 to counter n (step S875). The conversion data decryption unit 516 reads encrypted content portion EC4_1[n] from the conversion data storage unit 508 (step S880) and performs step S865 onward.
If the reading is judged as not successful (step S865: NO), the conversion data decryption unit 516 outputs an instruction notifying of a reading failure to the medium recording key storage unit 511 and the conversion key storage unit 515. As a result, the medium recording key storage unit 511 deletes medium recording key K2, and the conversion key storage unit 515 deletes partial information PC4 (step S885).

### 2.7. Content Portion Movement Operation

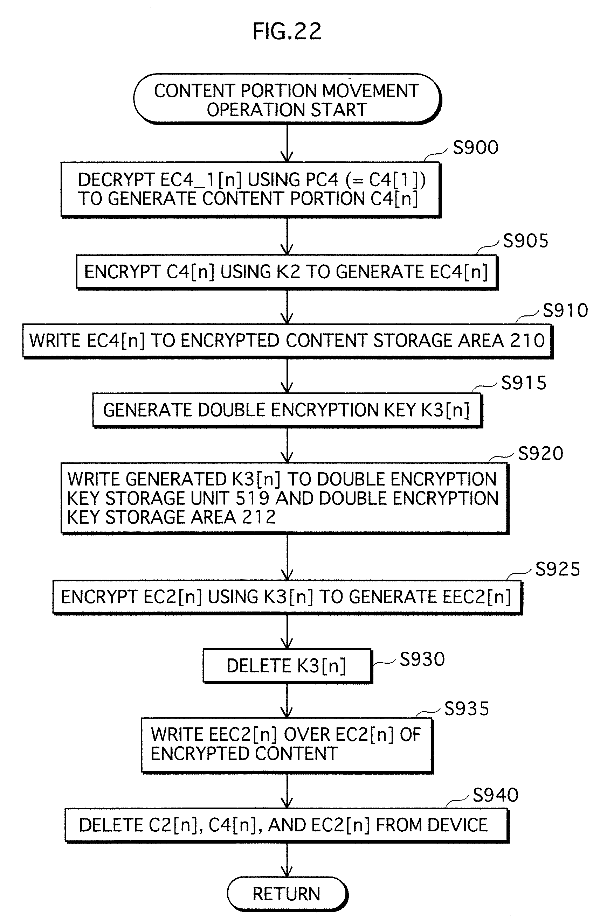

The content portionmovement operation performed in step S870 in FIG. 21 is explained below, with reference to a flowchart of FIG. 22.
The conversion data decryption unit 516 in the recording/reproduction device 50 reads partial information PC4 from the conversion key storage unit 515, and decrypts encrypted content portion EC4_1[n] read from the conversion data storage unit 508 using partial information PC4 as a decryption key, to generate content portion C4[n] (step S900).

The second encryption unit 517 in the recording/reproduction device 50 receives content portion C4[n] from the conversion data decryption unit 516, and reads medium recording key K2 stored in the medium recording key storage unit 511. The second encryption unit 517 encrypts content portion C4[n] using read medium recording key K2 as an encryption key, to generate encrypted content portion EC4[n] (step S905).

The second encryption unit 517 writes encrypted content portion EC4[n] to the portable medium 20 (step S910). At this time, the portable medium 20 performs step S770 shown in FIG. 19. The second encryption unit 517 deletes encrypted content portion EC4[n] from the second encryption unit 517 itself.
The double encryption key generation unit 518 receives the generation instruction (the value n), and generates double encryption key K3[n] (step S915).

The double encryption key generation unit 518 stores generated double encryption key K3[n] to the double encryption key storage unit 519 and the double encryption key storage area 212 in the portable medium 20 (step S920). At this time, the portable medium 20 performs step S775 shown in FIG. 19.
The double encryption unit 520 receives the encryption instruction (the value n), and reads double encryption key K3[n] from the double encryption key storage unit 519 and the beginning read instruction from the content read unit 513. The double encryption unit 520 outputs the received value n which is the encryption instruction, to the content read unit 513 as the content read instruction. The double encryption unit 520 receives encrypted content portion EC2[n] from the content read unit 513, and applies encryption algorithm E3 to encrypted content portion EC2[n] using double encryption key K3[n] as an encryption key, to generate double encrypted content portion EEC2[n] (step S925). The double encryption unit 520 then deletes double encryption key K3[n] (step S930).

The double encrypted content write unit 521 in the recording/reproduction device 50 receives the write instruction and double encrypted content portion EEC2[n] from the double encryption unit 520, and records received EEC2[n] to the encrypted content storage unit 504, by writing EEC2[n] over EC2[n] which is stored in the encrypted content storage unit 504 and corresponds to the content ID and portion number included in the write instruction (step S935).

The double encrypted content write unit 521 outputs the first deletion instruction to the content read unit 513, the conversion data decryption unit 516, and the double encryption unit 520. The content read unit 513 receives the first deletion instruction, and deletes encrypted content portion EC2[n] read from the encrypted content storage unit 504. The conversion data decryption unit 516 receives the first deletion instruction, and deletes decrypted C4[n]. The double encryption unit 520 receives the first deletion instruction, and deletes encrypted content EC2[n] (step S940).

### 2.8. Second Movement Operation

The second movement operation performed in step S630 in FIG. 17 is the same as the one shown in FIG. 12 in the first embodiment, and so its explanation has been omitted here.

### 2.9. Content Decryption Operation

The content decryption operation performed in the recording/reproduction device 50 during the second movement operation performed in step S630 in FIG. 17 is the same as the one shown in FIG. 13 in the first embodiment, and so its explanation has been omitted here.

### 2.10. Modifications to the Second Embodiment

The second embodiment describes the case where converted content C4 is divided into converted content portions C4[1], C4[2], ... , C4[N] and each converted content portion C4[n] is encrypted to generate and store encrypted content portion EC4_1[n]. However, the present invention is not limited to this.
The recording/reproduction device may apply encryption algorithm E1_2 to converted content C4 using partial information PC4 (= C4[1]) as an encryption key to generate encrypted converted content EC4_2, and store encrypted converted content EC4_2. Which is to say, EC4_2 = E1_2 (C4, PC4). Encryption algorithm E1_2 is AES as one example. Since AES is a known technique, its explanation has been omitted here.

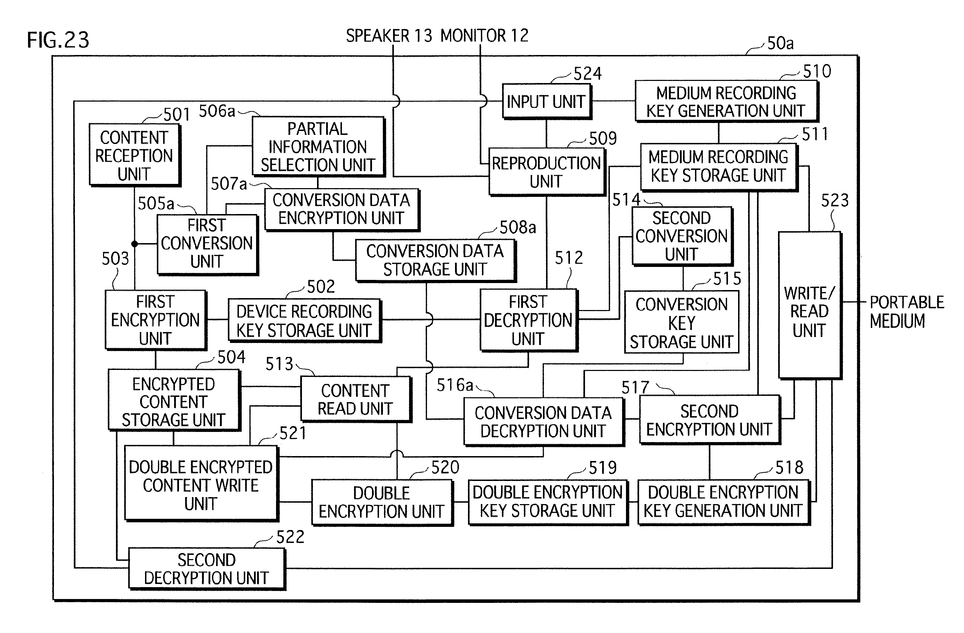

A construction and an operation of a recording/reproduction device 50a according to this modification is explained below, focusing on the difference from the above recording/reproduction device 50.
As shown in FIG. 23, the recording/reproduction device 50a differs from the recording/reproduction device 50 in that the first conversion unit 505, the partial information selection unit 506, the conversion data encryption unit 507, the conversion data storage unit 508, and the conversion data decryption unit 516 have been changed to a first conversion unit 505a, a partial information selection unit 506a, a conversion data encryption unit 507a, a conversion data storage unit 508a, and a conversion data decryption unit 516a described later.

The following explains the first conversion unit 505a, the partial information selection unit 506a, the conversion data encryption unit 507a, the conversion data storage unit 508a, and the conversion data decryption unit 516a. The other construction elements have the same operations and functions as in the second embodiment and so their explanation has been omitted here.

### (1) First Conversion Unit 505a

The first conversion unit 505a is actually constituted by a downconverter for converting MPEG-2 data to MPEG-4 data, and the like.

The first conversion unit 505a receives content C2 from the content reception unit 501, and compression-converts received content C2 to MPEG-4, thereby generating converted content C4.
The first conversion unit 505a temporarily stores converted content C4, and outputs the selection instruction to the partial information selection unit 506a.

After generating converted content C4, the first conversion unit 505a deletes content C2.
Further, upon receiving the conversion data deletion instruction from the conversion data encryption unit 507a, the first conversion unit 505a deletes temporarily stored converted content C4.

### (2) Partial Information Selection Unit 506a

The partial information selection unit 506a receives the selection instruction from the first conversion unit 505a, reads converted content C4 stored in the first conversion unit 505a, and acquires content portion C4[1] whose reproduction time length is within the predetermined time (e.g. within 45 seconds) from the beginning of read converted content C4.

The partial information selection-unit 506a outputs acquired content portion C4[1] to the conversion data encryption unit 507a as partial information PC4.
After outputting partial information PC4, the partial information selection unit 506a deletes converted content C4 and partial information PC4 from the partial information selection unit 506a itself.

### (3) Conversion Data Encryption Unit 507a

The conversion data encryption unit 507a receives partial information PC4 from the partial information selection unit 506a, and reads converted content C4 from the first conversion unit 505a.

The conversion data encryption unit 507a applies encryption algorithm E1_2 to read converted content C4 using received partial information PC4 as an encryption key, to generate encrypted converted content EC4_2.
The conversion data encryption unit 507a stores encrypted converted content EC4_2 to the conversion data storage unit 508a.

After completing the storage of encrypted converted content EC4_2, the conversion data encryption unit 507a deletes converted content C4 and partial information PC4 from the conversion data encryption unit 507a itself. The conversion data encryption unit 507a also outputs the conversion data deletion instruction to the first conversion unit 505a.

### (4) Conversion Data Storage Unit 508a

The conversion data storage unit 508a is actually a hard disk unit, and has an area for storing encrypted converted content EC4_2.

The conversion data storage unit 508a receives encrypted converted content EC4_2 from the conversion data encryption unit 507a, and stores received encrypted converted content EC4_2.
Here, encrypted converted content EC4_2 is associated with the content ID assigned to EC2 which is high-image-quality content corresponding to encrypted content EC4_2.

### (5) Conversion Data Decryption Unit 516a

The conversion data decryption unit 516a receives the decryption instruction from the conversion key storage unit 515, and reads encrypted converted content EC4_2 from the conversion data storage unit 508a.

The conversion data decryption unit 516a applies decryption algorithm D1_2 to read encrypted converted content EC4_2 using partial information PC4 (= C4[1]) stored in the conversion key storage unit 515 as a decryption key, to generate converted content C4. Which is to say, C4 = D1_2 (EC4_2, PC4). Decryption algorithm D1_2 is an algorithm for converting ciphertext, which is generated by encryption according to encryption algorithm E1_2, to plaintext.

The conversion data decryption unit 516a divides converted content C4 from the beginning into converted content portions C4[1], C4[2], C4[3], ... , C4[N] each of which has a reproduction time length within the predetermined time (e.g. within 45 seconds). The reproduction time length of converted content portion C4[n] (n = 1, 2, ... , N, the same applies hereafter) is within the predetermined time (within 45 seconds).

The conversion data decryption unit 516a sequentially outputs generated converted content portions C4[n] to the second encryption unit 517.
The conversion data decryption unit 516a receives the first deletion instruction from the double encrypted content write unit 521, and deletes C4[n] output to the second encryption unit 517.
After decrypting encrypted converted content EC4_2 to generate converted content C4, the conversion data decryption unit 516a deletes encrypted converted content EC4_2 from the conversion data decryption unit 516a itself.

Also, after outputting content portions C4[1], C4[2], ... , C4[N] to the second encryption unit 517, the conversion data decryption unit 516a outputs an instruction notifying of the completion of the output of all content portions, to the medium recording key storage unit 511 and the conversion key storage unit 515. Upon receiving the instruction, the medium recording key storage unit 511 deletes medium recording key K2, and the conversion key storage unit 515 deletes partial information PC4.

In this way, the conversion data decryption unit 516a can sequentially output content portions C4[1], C4[2], ... , C4[N] to the second encryption unit 517.

### (6) Operation of the Recording/reproduction Device 50a when Recording Content

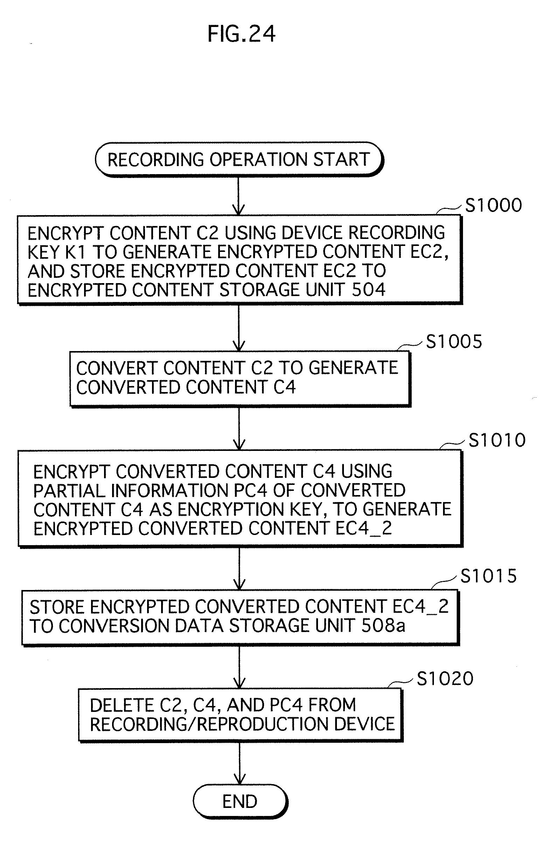

When recording content, the recording/reproduction device 50a performs a recording operation shown in FIG. 24, instead of the operation of step S610 shown in FIG. 17, i.e. content recording operation shown in FIG. 18. This recording operation is explained below, with reference to a flowchart of FIG. 24.

The first encryption unit 503 in the recording/reproduction device 50a receives content C2 from the content reception unit 501, and reads device recording key K1 from the device recording key storage unit 502. The first encryption unit 503 encrypts received content C2 using device recording key K1 to generate encrypted content EC2, and stores generated encrypted content EC2 to the encrypted content storage unit 504 (step S1000). The detailed operation of the first encryption unit 503 has already been shown in the second embodiment and so has been omitted here.

The first conversion unit 505a in the recording/reproduction device 50a receives content C2 from the content reception unit 501, and downconverts received content C2 to generate converted content C4 (step S1005).
The partial information selection unit 506a in the recording/reproduction device 50a receives the selection instruction from the first conversion unit 505a, acquires content portion C4[1] at the beginning of converted content C4, and sets acquired content portion C4[1] as partial information PC4. The conversion data encryption unit 507a in the recording/reproduction device 50a receives partial information PC4 from the partial information selection unit 506a, and reads converted content C4 from the first conversion unit 505a. The conversion data encryption unit 507a encrypts read converted content C4 using received partial information PC4 as an encryption key, to generate encrypted converted content EC4_2 (step S1010).

The conversion data encryption unit 507a stores generated encrypted converted content EC4_2 to the conversion data storage unit 508a (step S1015).
The first encryption unit 503 in the recording/reproduction device 50a deletes content C2 from the first encryption unit 503 itself. The first conversion unit 505a deletes content C2 and converted content C4 from the first conversion unit 505a itself. The partial information selection unit 506a deletes PC4 (= C4[1]) from the partial information selection unit 506a itself. The conversion data encryption unit 507a deletes converted content C4 and partial information PC4 from the conversion data encryption unit 507a itself (step S1020).

### (7) Operation of the Recording/reproduction Device 50a when Receiving the Move Instruction

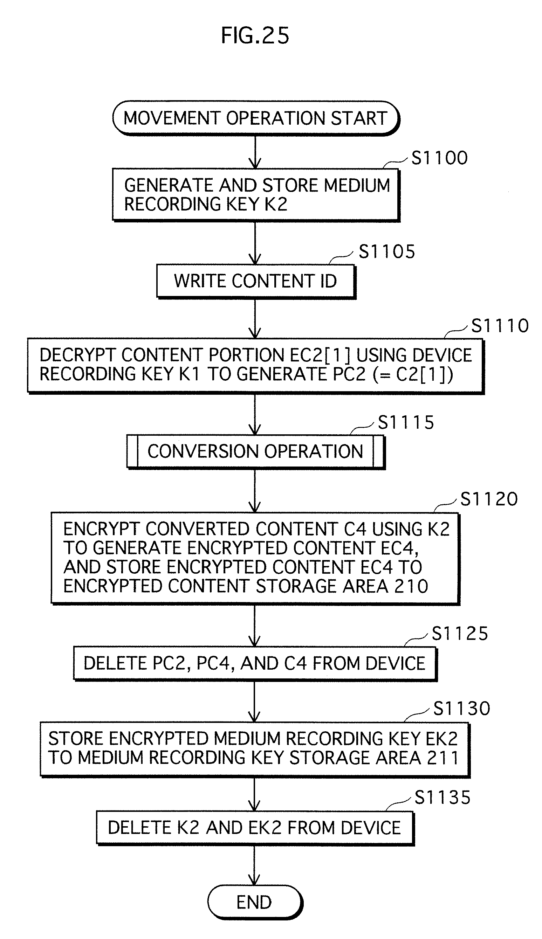

When moving content to the portable medium 20, the recording/reproduction device 50a performs a movement operation shown in FIG. 25, instead of the operation of step S755 in FIG. 19, i.e. the content movement operation shown in FIGS. 20 and 21. The following explains the content movement operation with reference to a flowchart of FIG. 25.

The medium recording key generation unit 510 in the recording/reproduction device 50a receives the move instruction from the input unit 524, and generates medium recording key K2. The medium recording key storage unit 511 in the recording/reproduction device 50a receives medium recording key K2 and the move instruction from the medium recording key generation unit 510, and stores received K2 to the internal key storage area (step S1100).
Also, the medium recording key storage unit 511 writes the content ID included in the received move instruction to the portable medium 20 (step S1105).

The first decryption unit 512 in the recording/reproduction device 50a receives the move instruction from the medium recording key storage unit 511, and reads device recording key K1. The first decryption unit 512 decrypts encrypted content portion EC2[1] at the beginning of encrypted content EC2 using read K1, to generate partial information PC2 (= C2[1]) (step S1110).
The recording/reproduction device 50a performs a conversion operation to generate converted content C4 (step S1115).

The second encryption unit 517 in the recording/reproduction device 50a encrypts converted content C4 using medium recording key K2 to generate encrypted content EC4, and stores generated encrypted content EC4 to the encrypted content storage area 210 in the portable medium 20 (step S1120). A detailed operation of this step is described later.
The recording/reproduction device 50a deletes partial information PC2 and PC4 and converted content C4 from the recording/reproduction device 50a itself (step S1125).

The medium recording key storage unit 511 generates medium unique key K0, and encrypts medium recording key K2 using generated medium unique key K0 to generate encrypted medium recording key EK2. The medium recording key storage unit 511 stores generated EK2 to the medium recording key storage area 211 in the portable medium 20 (step S1130).
The recording/reproduction device 50a deletes medium recording key K2 and encrypted medium recording key EK2 form the recording/reproduction device 50a itself (step S1135).

### (8) Conversion Operation

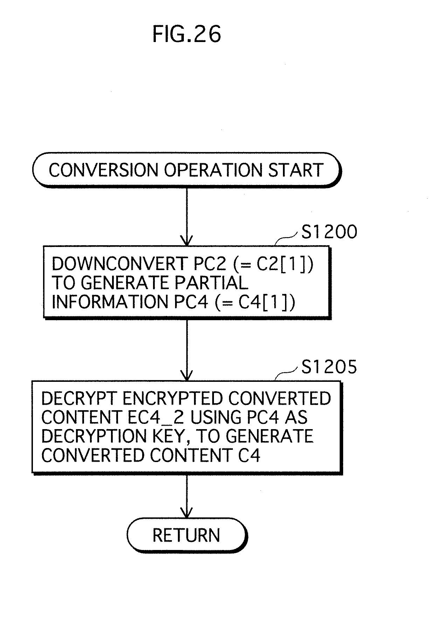

The conversion operation performed in step S1115 in FIG. 25 is explained below, with reference to a flowchart of FIG. 26.
The second conversion unit 514 in the recording/reproduction device 50a downconverts partial information PC2 to generate partial information PC4 (= C4[1]) (step S1200). The second conversion unit 514 stores generated partial information PC4 to the conversion key storage unit 515.

The conversion data decryption unit 516a in the recording/reproduction device 50a receives the decryption instruction from the conversion key storage unit 515, and decrypts encrypted converted content EC4_2 using partial information PC4 as a decryption key to generate converted content C4 (step S1205). The conversion data decryption unit 516a divides converted content C4 from the beginning into converted content portions C4[1], C4[2], C4[3], ... , C4[N] each of which has a reproduction time length within the predetermined time (e.g. within 45 seconds).

### (9) Operation of the Recording/reproduction Device 50a when Encrypting a Converted Content Portion

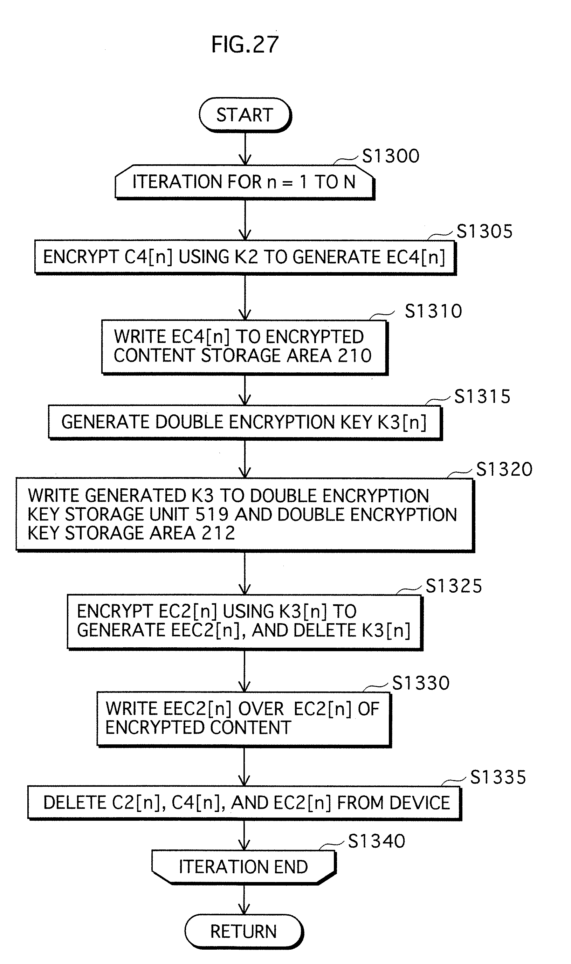

The detailed operation of step S1120 in FIG. 25 is explained below, with reference to a flowchart of FIG. 27.
The recording/reproduction device 50a performs steps S1305 to S1340 for each of n = 1, 2, ... , N (step S1300).

The second encryption unit 517 in the recording/reproduction device 50a receives content portion C4[n] from the conversion data decryption unit 516a, and reads medium recording key K2 stored in the medium recording key storage unit 511. The second encryption unit 517 encrypts content portion C4[n] using read medium recording key K2 as an encryption key, to generate encrypted content portion EC4[n] (step S1305).

The second encryption unit 517 writes encrypted content portion EC4[n] to the portable medium 20 (step S1310). The second encryption unit 517 deletes encrypted content portion EC4[n] from the second encryption unit 517 itself.
The double encryption key generation unit 518 receives the generation instruction (the value n) from the second encryption unit 517, and generates double encryption key K3[n] (step S1315).

The double encryption key generation unit 518 stores generated double encryption key K3[n] to the double encryption key storage unit 519 and the double encryption key storage area 212 in the portable medium 20 (step S1320).
The double encryption unit 520 receives the encryption instruction (the value n), and reads double encryption key K3[n] from the double encryption key storage unit 519 and the beginning read instruction from the content read unit 513. The double encryption unit 520 outputs the received encryption instruction, i.e. the value n, to the content read unit 513 as the content read instruction. The double encryption unit 520 receives encrypted content portion EC2[n] from the content read unit 513, and applies encryption algorithm E3 to encrypted content portion EC2[n] using double encryption key K3[n] as an encryption key, to generate double encrypted content portion EEC2[n]. The double encryption unit 520 then deletes double encryption keyK3[n] (step S1325).

The double encrypted content write unit 521 in the recording/reproduction device 50a receives the write instruction and double encrypted content portion EEC2[n] from the double encryption unit 520, and stores received EEC2[n] to the encrypted content storage unit 504 by writing EEC2[n] over EC2[n] which is stored in the encrypted content storage unit 504 and corresponds to the content ID and portion number included in the write instruction (step S1330).

The double encrypted content write unit 521 outputs the first deletion instruction to the content read unit 513, the conversion data decryption unit 516a, the second encryption unit 517, the double encryption key storage unit 519, and the double encryption unit 520. The content read unit 513 receives the first deletion instruction, and deletes encrypted content portion EC2[n] read from the encrypted content storage unit 506. The conversion data decryption unit 516a receives the first deletion instruction, and deletes C4[n] output to the second encryption unit 517. The second encryption unit 517 receives the first deletion instruction, and deletes encrypted content portion EC4[n]. The double encryption key storage unit 519 receives the first deletion instruction, and deletes double encryption key K3[n]. The double encryption unit 520 receives the first deletion instruction, and deletes encrypted content EC2[n] (step S1335).

### 3. Other Modifications

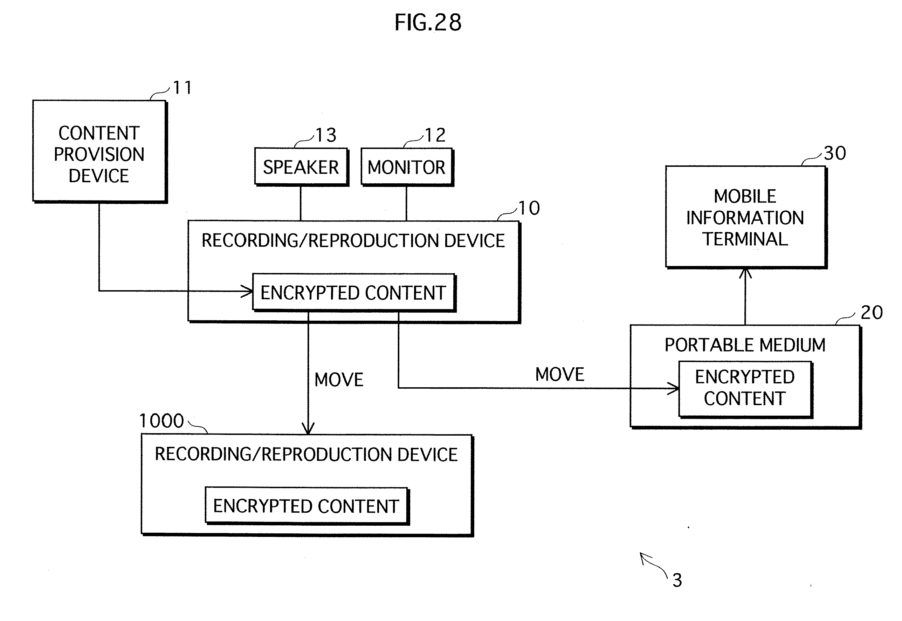

Although the present invention has been described based on the above embodiments, it should be obvious that the present invention is not limited to the above. Example modifications are given below.
(1) The above embodiments describe a construction of moving content from the recording/reproduction device to the portable medium, but the present invention is not limited to this. For example, the content may be moved from the recording/reproduction device to another recording/reproduction device. An example system construction in this case is shown in FIG. 28 as a copyright protection system 3, which is a modification to the copyright protection system 1. When moving content from the recording/reproduction device 10 to a recording/reproduction device 1000, the recording/reproduction device 10 checks (authenticates) whether the recording/reproduction device 1000 which is the move destination of the content is authorized, before the movement of the content. After completing the movement of the content, the recording/reproduction device 10 makes the content stored therein unusable. For example, the authentication can be performed according to an authentication procedure prescribed by DTCP. The DTCP authentication is a known technique and so its detailed explanation has been omitted here.

The content provision device 11, the monitor 12, the speaker 13, the portable medium 20, and the mobile information terminal 30 are the same as those in the first embodiment, and so their explanation has been omitted here.
The recording/reproduction device 1000 is a device for reproducing content which has been compression-coded according to MPEG-4. The recording/reproduction device 1000 includes the construction elements of the portable medium 20 and the control unit 303 of the mobile information terminal 30 shown in the first embodiment. The recording/reproduction device 1000 stores a device ID for identifying the recording/reproduction device 1000, instead of the medium ID.

In addition to the operations and functions described in the first embodiment, the recording/reproduction device 10 has an operation and function of moving content to the recording/reproduction device 1000, and an operation and function of moving the content back from the recording/reproduction device 1000. The operation and function of moving content to the recording/reproduction device 1000 are the same as the operation and function of moving content to the portablemedium20 in the first embodiment, so that their explanation has been omitted here. Also, the operation and function of moving content from the recording/reproduction device 1000 back to the recording/reproduction device 10 are the same as the operation and function of moving content from the portable medium 20 back to the recording/reproduction device 10 in the first embodiment, so that their explanation has been omitted here. Note here that, when generating encryption key K0, the recording/reproduction device 10 uses device key DK1 and the MKB and the device ID read from the recording/reproduction device 1000.

(2) The above embodiments describe a construction of encrypting medium recording key K2, but the present invention is not limited to this. The recording/reproduction device may store medium recording key K2 to the portable medium 20 without encrypting it.
(3) The above embodiments describe the case where medium recording key K2 is generated by a random number generator, but the present invention is not limited to such.
The recording/reproduction device may generate medium recording key K2 using device key DK1 and the MKB and medium ID read from the portable medium 20. That is, medium unique key K0 may be used as medium recording key K2.

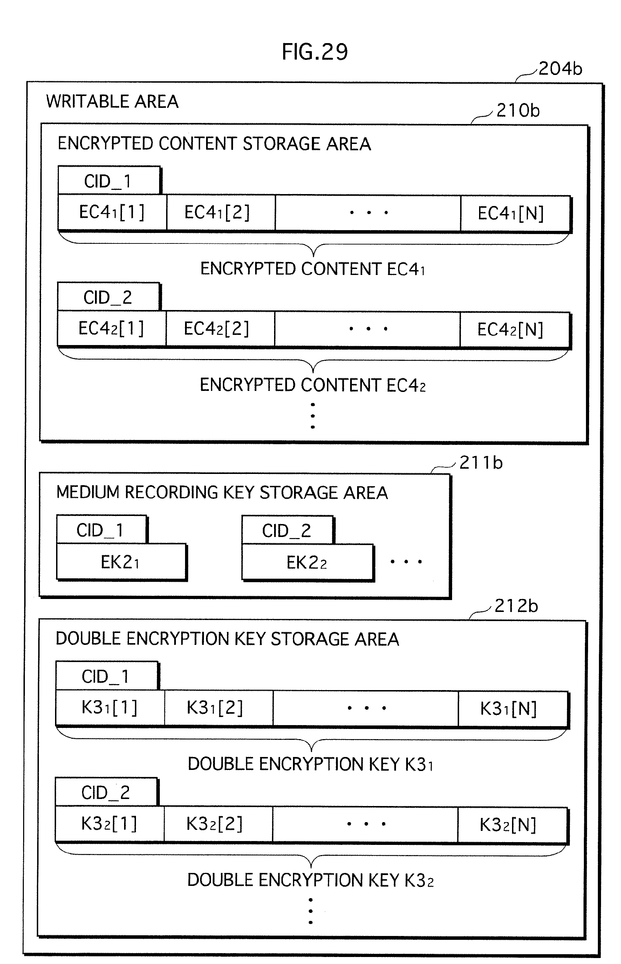

(4) The above embodiments describe the case where one set of encrypted content is stored on the portable medium 20, but this is not a limit for the present invention. A plurality of sets of encrypted content may be stored on the portable medium 20.
For example, the writable area 204 of the portable medium 20 may be changed to a writable area 204b shown in FIG. 29.

The writable area 204b is explained below.
The writable area 204b includes an encrypted content storage area 210b, a medium recording key storage area 211b, and a double encryption key storage area 212b.
The encrypted content storage area 210b has an area for storing at least one set of encrypted content EC4. As shown in FIG. 29, a plurality of sets of encrypted content EC4₁, EC4₂, ... are stored in the encrypted content storage area 210b. Here, each subscript is used to identify a different one of the plurality of sets of encrypted content. Each set of encrypted content EC4 is associated with a content ID assigned to EC2 which is high-image-quality content corresponding to encrypted content EC4. In detail, a content ID "CID_1" of EC2₁ is associated with EC4₁, and a content ID "CID_2" of EC2₂ is associated with EC4₂.

The medium recording key storage area 211b has an area for storing at least one encrypted medium recording key EK2. As shown in FIG. 29, a plurality of encrypted medium recording keys EK2₁, EK2₂, ... are stored in the medium recording key storage area 211b. Here, each subscript is used to identify a different one of the plurality of encrypted medium recording keys. Each encrypted medium recording key EK2 is associated with a content ID that is assigned to corresponding encrypted content EK4. In detail, the content ID "CID_1" of EC4₁ is associated with EK2₁, and the content ID "CID_2" of EC4₂ is associated with EK2₂.

The double encryption key storage area 212b has an area for storing at least one double encryption key K3.
As shown in FIG. 29, a plurality of double encryption keys K3₁, K3₂, ... are stored in the double encryption key storage area 212b. Here, double encryption key K3₁ is data composed of double encryption keys K3₁[1], K3₁[2], ... , K3₁[N], and double encryption key K3₂ is data composed of double encryption keys K3₂[1], K3₂[2], ... , K3₂[N]. Each subscript is used to identify a different one of the plurality of double encryption keys. Each double encryption key K3 is associated with a content ID that is assigned to corresponding encrypted content EC4. In detail, the content ID "CID_1" of EC4₁ is associated with K3₁, and the content ID "CID_2" of EC4₂ is associated with K3₂.

When receiving the move back operation, the recording/reproduction device 10 also receives the content IDof the content to be moved back. The recording/reproduction device 10 deletes encrypted content EC4 and encrypted medium recording key EK2 corresponding to the received content ID. The recording/reproduction device 10 sequentially reads double encryption keys K3[n] corresponding to the received content ID from the double encryption key storage area 212b in the portable medium 20, and decrypts encrypted content portions EEC2[n] which are stored in the encrypted content storage unit 104 and correspond to the received content ID, using read double encryption keys K3[n].

(5) The above embodiments describe the case where the portable medium 20 is an SD card, but this is not a limit for the present invention. For example, the portable medium 20 may be a rewritable DVD or a writable DVD. In such a case, data writing and deletion on the DVD are performed by the recording/reproduction device 10 directly on an area of the DVD.
(6) The above embodiments describe the case where the reproduction time length of each content portion is 45 seconds, but the present invention is not limited to this, so long as the reproduction time length of each content portion is within one minute.

(7) The above embodiments describe a construction of moving content from the recording/reproduction device to the portable medium or from the portable medium to the recording/reproduction device, but the present invention should not be limited to such. For instance, the content may be moved from the recording/reproduction device to another recording/reproduction device.
(8) The above embodiments describe the case where, when moving content from the portable medium to the recording/reproduction device, various data on the portable medium is deleted. However, the present invention is not limitedtosuch. Forexample, the key necessary for decrypting the encrypted content may deleted so as to make the encrypted content unusable, instead of deleting the encrypted content stored on the portable medium. As an alternative, part of the data may be destroyed so as to make the data unusable, instead of deleting the data.

(9) In the above embodiments, the recording/reproduction device may include a storage unit which stores a state transition in the content movement operation. In this case, when the content movement operation was not completedproperly, the recording/reproduction device may judge whether the content movement operation is to be continued or to be performed from the beginning again, based on the state transition stored in the storage unit. Also, the recording/reproduction device may include a notification unit which notifies the user of the state transition stored in the storage unit. In this case, the recording/reproduction device may notify the user that the content movement operation was not completed properly, and determine whether the content movement operation is to be continued or to be performed from the beginning again based on an instruction from the user.

(10) In the above embodiments, when the recording/reproduction device or the portable medium deletes the key after moving the key, the receiver of the key may notify the sender of the key that the key has been received properly, so that the sender deletes the key after confirming the reception based on the notification.
(11) The above embodiments may be modified in the following manner. Content is given an identifier for uniquely identifying the content. When moving the content from the portable medium back to the recording/reproduction device, the recording/reproduction device judges whether the identifier of the encrypted content stored in the portable medium matches an encrypted content identifier held in the recording/reproduction device, and permits the movement of the content back to the recording/reproduction device only when the two identifiers match. Also, instead of the identifier for uniquely identifying the content, the content may be given an identifier for uniquely identifying the recording/reproduction device which is the move source of the content. In such a case, the recording/reproduction device judges whether the recording/reproduction device identifier assigned to the content matches the identifier of the recording/reproduction device itself, and permits the movement of the content back to the recording/reproduction device only when the two identifiers match.

(12) The above embodiments describe the case where content is provided from the external content provision device, but this is not a limit for the present invention. For instance, the content may be read from a storage medium inserted in the recording/reproduction device.
(13) The above embodiments may be modified such that the recording/reproduction device 10 writes encrypted medium recording key EK2 to the portable medium 20 after the reading of the encrypted content portion from the encrypted content storage unit 104 is judged as not successful. After writing encrypted medium recording key EK2 to the portable medium 20, encrypted medium recording key EK2 and medium recording key K2 are deleted from the recording/reproduction device 10.

(14) The above embodiments may be modified such that the recording/reproduction device 10 writes double encryption key K3[n] to the portable medium 20 after the double encrypted content write unit 115 writes double encrypted content portions EEC2[n] over encrypted content portions EC2[n]. After writing double encryption key K3[n] to the portable medium 20, double encryption key K3[n] is deleted from the device.

(15) The second embodiment describes the case where content portion C4[1] is used as an encryption key when the recording/reproduction device 50 generates encrypted converted content EC4_1, but this is not a limit for the present invention. The recording/reproduction device 50 may use any one of content portions C4[1], C4[2], ... , C4[N] as an encryption key.
(16) The second embodiment describes the case where the recording/reproduction device 50 applies double encryption to each of encrypted content portions EC2[1], EC2[2], ... , EC2[N], but the present invention is not limited to this. The recording/reproduction device 50 may apply double encryption to at least the partial information for decrypting encrypted content EC4_1.

(17) The second embodiment describes the case where the conversion data decryption unit 516 in the recording/reproduction device 50 reads encrypted content portion EC4[n] of 128 bits, but the present invention is not limited to this.
The conversion data decryption unit 516 may sequentially read one or more encrypted content portions whose total reproduction time length is within the predetermined time (within 45 seconds), from the beginning of encrypted content EC4.

This is explained using a specific example below.
The conversion data decryption unit 516 reads EC4_1[1], EC4_2[2], ... , EC4_1[10] whose total reproduction time length is within the predetermined time (within 45 seconds), and decrypts read EC4_1[n1] (n1 = 1, 2, ... , 10, the same applies hereafter). The second encryption unit 517 sequentially encrypts C4[n1] using medium recording key K2 to generate EC4[n1], and writes generated EC4[n1] to the portable medium 20. The double encryption key generation unit 518 generates double encryption key K3[1], and writes generated double encryption key K3[1] to the portable medium 20 and the double encryption key storage unit 519. The double encryption unit 520 acquires encrypted content portions EC2[1], EC2[2], ... , EC2[10] corresponding to EC4_1[1], EC4_1[2], ... , EC4_1[10] via the content read unit 513. The double encryption unit 520 sequentially encrypts encrypted content portions EC2[n1] using double encryption key K3[1], to generate double encrypted content portions EEC2[n1]. The double encrypted content write unit 521 sequentially writes double encrypted content portions EEC2[n1] over encrypted content portions EC2[n1].

The recording/reproduction device 50 repeats the above operation until encrypted content portion EC2[N] is overwritten by double encrypted content portion EEC2[N].
(18) The above embodiments describe the case where the recording/reproduction device encrypts content C2 using device recording key K1 and stores encrypted content C2, but the present invention is not limited to this.
The recording/reproduction device may store content C2 without encrypting it using the device recording key. In this case, upon receiving the move instruction, the recording/reproduction device encrypts each C2[n] using double encryption key K3 to generate an encrypted content portion, and writes the generated encrypted content portion over corresponding content portion C2[n].

(19) The above embodiments describe the case where the recording/reproduction device encrypts content C4 using medium recording key K2 and stores encrypted content EC4 to the portable medium, but the present invention is not limited to this. The recording/reproduction device may store content C4 to the portable medium.
(20) The second embodiment describes the case where the recording/reproduction device 50 decrypts and downconverts only content portion EC2[1] corresponding to the partial information used for decrypting encrypted content EC4_1 to generate partial information PC4 (= C4[1]), but this is not a limit for the present invention.

Each content portion EC4[n] maybe stored to the portable medium 20 by the following operation.
The recording/reproduction device 50 decrypts encrypted content EC2 to generate content C2, and downconverts generated content C2 to generate content C4. The recording/reproduction device 50 acquires partial information PC4 from generated content C4.

(21) The present invention also applies to a method described above. This method may be realized by a computer program that is executed by a computer. Such a computer program may be distributed as a digital signal.
   The present invention may be realized by a computer-readable storage medium, such as a flexible disk, a hard disk, a CD-ROM, an MO, a DVD, a DVD-ROM, a DVD-RAM, a BD (Blu-ray Disc), or a semiconductor memory, on which the above computer program or digital signal is recorded. Conversely, the present invention may also be realized by the computer program or digital signal that is recorded on such a storage medium.

The computer program or digital signal that achieves the present invention may also be transmitted via a network, such as an electronic communications network, a wired or wireless communications network, or an internet.
The present invention can also be realized by a computer system that includes a microprocessor and a memory. In this case, the computer program can be stored on the memory, with the microprocessor operating in accordance with this computer program.

The computer program or digital signal may be provided to an independent computer system by distributing a storage medium on which the computer program or digital signal is recorded, or by transmitting the computer program or digital signal via a network or the like. The independent computer systemmay then execute the computer program or digital signal to function as the present invention.
(22) The above embodiments and modifications may be freely combined.

### 4. Conclusion

Conventionally, standards such as DTCP (Digital Transmission Content Protection) have been used for content protection. DTCP is a technique for preventing unauthorized copying by means of content encryption or the like, when performing digital transfer of content. In the content protection technique such as DTCP, copy control information (CCI) such as "Copy No More" and "Copy One Generation" is attached to content. "Copy No More" indicates copying is prohibited, and "Copy One Generation" indicates copying is permitted only once. This being so, when the content whose copy control information is "Copy One Generation" is copied, content generated as a result of copying is given copy control information "Copy No More".

However, there are demands to move content to another storage medium or another device, even when the content has copy control information "Copy No More". For example, the user may want to move content recorded on an HDD (Hard Disk Drive) equipped in a digital television, to a DVD-RAM for long-term storage. In such a case (where the content is moved from the HDD to the DVD-RAM), the content recorded on the internal HDD of the digital television needs to be made unreproducible. For instance, this can be done by deleting the content on the internal HDD to nullify the content, i.e. to make the content unusable, after copying the content from the internal HDD to the DVD-RAM. However, if the user removes the internal HDD from the digital television and connects it to a personal computer to create a backup before moving the content, and returns the backup to the internal HDD after moving the content, the content can be moved over and over again. This makes it impossible to prevent unauthorized copying.

Also, if power discontinuity or the like occurs while moving the content, both the content in the move source and the content in the move destination may be lost, as a result of which the content becomes unusable. This imposes inconvenience on the user who uses the content. Also, the user suffers a financial loss if he needs to pay to repossess such unusable content.
This problem can be solved by a conventional technique of moving content without a loss of content, while preventing unauthorized copying.

However, in the case where the content in the move source is high-image-quality content and the storage capacity of the move destination is smaller when compared with the size of the content, the content is usually compression-converted to reduce its size by decreasing the image quality, before moving the content. This being so, if the content in the move source is nullified by deletion or the like as mentioned above, only the compression-converted content (with a lower image quality) is left for the user. Which is to say, when returning (moving) the content to the internal HDD having a large storage capacity, it is impossible to convert the low-image-quality content to the high-image-quality content. Since the original high-image-quality content cannot be recovered, the user who uses the content suffers inconvenience.

The copyright protection systemaccording to the present invention was conceived to solve the above problem, and aims to move content without a loss of content while preventing unauthorized copying, and, even after the content has been compression-converted to reduce its size, recover the original high-image-quality content when moving the content back to the move source.
The copyright protection systemaccording to the present invention includes a content provision device for providing content, a recording/reproduction device for acquiring the content, recording and reproducing the content, and moving the content, and a recording/reproduction device and a portable medium for acquiring the moved content, and moves the content by dividing it in a predetermined unit.

According to the present invention, even if content which has undergone image conversion is moved to another device, the original content can be restored. Hence the present invention can be used as a mechanism for protecting a copyright of content without causing a decrease in user-friendliness, in an industry for distributing content to users, an industry for manufacturing content recording/reproduction devices, and an industry for selling content recording/reproduction devices.

In the copyright protection system according to the present invention, the recording/reproduction device which is the move source of the content moves the content in units of blocks. This eliminates a danger of content loss caused by power discontinuity or the like during the content movement. Also, even if the user tries to unauthorizedly analyze the recording/reproduction device to acquire decrypted plaintext content during the content movement, he can acquire only one part of the whole content. Hence damage caused by such an unauthorized act is limited. Which is to say, the present invention has effects of safely obtaining moved plaintext content while preventing a loss of content during the movement, and is useful in achieving a copyright protection system which exhibits both user-friendliness and security.

According to the present invention, the recording/reproduction device which is the move source of the content moves partial information of the content when moving the content, so that the content stored in the recording/reproduction device is made unusable with there being no need to delete the content. When returning the moved content back to the recording/reproduction device, the partial information is returned (moved) to the recording/reproduction device, which enables the original high-image-quality content to be recovered (i.e. makes the original high-image-quality content usable).

The present invention is a copyright protection system capable of moving content of a first format held in a terminal device to a portable medium as content of a second format, and capable of a secondmovement operation of moving the content of the second format which has been moved to the portable medium to the terminal device as the content of the first format, the portable medium including a storage unit operable to store data, the terminal device including: a content storage unit operable to store the content of the first format; a format conversion unit operable to convert the content of the first format to the content of the second format; a restoration data generation unit operable to generate restoration data; a movement unit operable to move the content of the second format and the restoration data to the storage unit in the portable medium; and a deletion unit operable to delete the content of the first format, the content of the second format, and the restoration data after the movement by the movement unit.

Here, the terminal device may further include: a read unit operable to read the restoration data stored in the data storage unit in the portable medium; a restoration unit operable to restore the content of the first format based on the restoration data and store the restored content of the first format to the content storage unit; and a deletion unit operable to delete the content of the second format and the restoration data stored in the data storage unit in the portable medium.

Here, the terminal device may further include: a restoration base data generation unit operable to generate restoration base data from at least the restoration data and the content of the first format; and a restoration base data storage unit operable to store the restoration base data.
Here, the terminal device may further include: a read unit operable to read the restoration data stored in the data storage unit in the portable medium; a restoration unit operable to restore the content of the first format based on the restoration data and the restoration base data and store the restored content of the first format to the content storage unit; and a deletion unit operable to delete the content of the second format and the restoration data stored in the data storage unit in the portable medium.

Also, the present invention is a copyright protection system capable of moving content of a first format held in a terminal device to a portable medium as content of a second format, and capable of a second movement operation of moving the content of the second format which has been moved to the portable medium to the terminal device as the content of the first format, the portable medium including a storage unit operable to store data, the terminal device including: a content storage unit operable to store the content of the first format; a content portion extraction unit operable to extract, from the content of the first format stored in the content storage unit, a content portion of the first format having a predetermined data size that is determined based on the format of the content; a format conversion unit operable to convert the content portion of the first format to a content portion of the second format; a content portion restoration data generation unit operable to generate content portion restoration data corresponding to the content portion of the first format; a movement unit operable to move the content portion of the second format and the content portion restoration data to the storage unit in the portable medium; and a deletion unit operable to delete the content portion of the first format, the content portion of the second format, and the content portion restoration data from the terminal device.

Here, the terminal device may further include: a read unit operable to read the content portion restoration data stored in the data storage unit in the portable medium; a restoration unit operable to restore the content of the first format based on the content portion restoration data and store the restored content of the first format to the content storage unit; and a deletion unit operable to delete the content of the second format and the content portion restoration data stored in the data storage unit in the portable medium.

Here, the terminal device may further include: a content portion restoration base data generation unit operable to generate content portion restoration base data from at least the content portion restoration data and the content portion of the first format; and a content portion restoration base data storage unit operable to store the content portion restoration base data.
Here, the terminal device may further include: a read unit operable to read the content portion restoration data stored in the data storage unit in the portable medium; a restoration unit operable to restore the content of the first format based on the content portion restoration data and the content portion restoration base data and store the restored content of the first format to the content storage unit; and a deletion unit operable to delete the content of the second format and the content portion restoration data stored in the data storage unit in the portable medium.

Here, the content portion restoration data generation unit may generate a random number as the content portion restoration data, wherein the content portion restoration base data generation unit encrypts the content portion of the first format using the content portion restoration data to generate the content portion restoration base data.
Also, the present invention is a copyright protection system in which a terminal device for recording/reproducing content data of a first format provided from outside is capable of converting content of the first format to content of a second format and moving the content of the second format to a portable medium according to need, the terminal device including: a first encryption unit operable to encrypt the content data of the first format as encrypted content data; an encrypted content storage unit operable to store the encrypted content data; a format conversion unit operable to convert the content data of the first format to content data of the second format; a conversion key generation unit operable to generate a conversion key based on the content data of the second format; a second encryption unit operable to encrypt the content data of the second format using the conversion key to generate conversion data; and a storage unit operable to store the conversion data.

Also, the present invention is a terminal device capable of holding content and moving the content to a portable medium, including: a content storage unit operable to store content of a first format; a format conversion unit operable to convert the content of the first format to content of a second format; a restoration data generation unit operable to generate restoration data; a movement unit operable to move the content of the second format and the restoration data to a storage unit in the portable medium; and a deletion unit operable to delete the content of the first format, the content of the second format, and the restoration data after the movement by the movement unit.

Also, the present invention is a terminal device capable of holding content and moving the content to a portable medium, including: a content storage unit operable to store content of a first format; a content portion extraction unit operable to extract, from the content of the first format stored in the content storage unit, a content portion of the first format having a predetermined data size that is determined based on the format of the content; a format conversion unit operable to convert the content portion of the first format to a content portion of a second format; a content portion restoration data generation unit operable to generate content portion restoration data corresponding to the content portion of the first format; a movement unit operable to move the content portion of the second format and the content portion restoration data to a storage unit in the portable medium; and a deletion unit operable to delete the content portion of the first format, the content portion of the second format, and the content portion restoration data from the terminal device after the movement by the movement unit.

Also, the present invention is a copyright protection system for moving content from a terminal device to a portable storage medium, the terminal device including: an original content storage unit operable to store original content composed of a plurality of blocks; a converted content generation unit operable to perform an irreversible conversion on the original content, to generate converted content; a converted content write unit operable to write the converted content to the storage medium; an encryption unit operable to encrypt any of the plurality of blocks of the original content using an encryption key to generate an encrypted block, and replace the block in the original content storage unit with the encrypted block; a key write unit operable to write the encryption key to the storage medium; and a key deletion unit operable to delete the encryption key used for the encryption from the terminal device, and the storage medium including: a content storage unit operable to store the converted content.

According to this construction, the terminal device in the copyright protection system encrypts a block in the original content stored in the terminal device using the encryption key and writes the encryption key to the storage medium. This makes it possible to prevent the user from using the original content.
Also, the terminal device in the copyright protection system stores the original content with the encrypted block in the original content storage unit. Accordingly, even after the converted content is moved to the storage medium, the original content before the conversion can be restored by obtaining the encryption key from the storage medium.

Here, the original content storage unit may store the original content in a form of encrypted content with the plurality of blocks being in an encrypted form, wherein the converted content generation unit decrypts the encrypted content to generate the original content, and performs the irreversible conversion on the generated original content to generate the converted content, and the encryption unit encrypts the block in the encrypted form using the encryption key to generate a double encrypted block, and replaces the block in the encrypted form in the original content storage unit with the generated double encrypted block.

According to this construction, the terminal device in the copyright protection system double encrypts the block. This enhances the security of the original content.
Here, the converted content write unit may encrypt the converted content to generate encrypted converted content, and write the encrypted converted content and decryption key information for decrypting the encrypted converted content, to the storage medium, wherein the content storage unit stores the encrypted converted content and the decryption key information.

According to this construction, the terminal device in the copyright protection system writes the encrypted converted content to the storage medium. This enhances the security of the converted content.
Here, the copyright protection system may further include a mobile information terminal, wherein the mobile information terminal reads the encrypted converted content and the decryption key information from the storage medium, decrypts the read encrypted converted content using the decryption key information to generate the converted content, and reproduces the generated converted content.

According to this construction, the mobile information terminal in the copyright protection system can reproduce the converted content generated by performing the irreversible conversion on the original content, whereas the terminal device cannot reproduce the original content. In this way, the copyright of the original content can be protected.
Also, the terminal device for moving content to a portable storage medium, may include: an original content storage unit operable to store original content composed of a plurality of blocks including a decryption block; a non-original content storage unit operable to store non-original content generated by encrypting converted content which is generated by performing an irreversible conversion on the original content; a decryption block obtaining unit operable to obtain, from the original content, a converted decryption block included in the converted content and used for decrypting the non-original content; a converted content generation unit operable to decrypt the non-original content using the obtained converted decryption block, to generate the converted content; a converted content write unit operable to write the converted content generated by the converted content generation unit, to the storage medium; an encryption unit operable to encrypt any of the plurality of blocks of the original content using an encryption key to generate an encrypted block, and replace the block in the original content storage unit with the encrypted block; a key write unit operable to write the encryption key to the storage medium; and a key deletion unit operable to delete the encryption key used for the encryption from the terminal device, and the storage medium including a content storage unit operable to store the converted content.

According to this construction, the terminal device in the copyright protection system encrypts a block in the original content stored in the terminal device using the encryption key and writes the encryption key to the storage medium. This makes it possible to prevent the user from using the original content.
Also, the terminal device in the copyright protection system stores the original content with the encrypted block in the original content storage unit. Accordingly, even after the converted content is moved to the storage medium, the original content before the conversion can be restored by obtaining the encryption key from the storage medium.

Also, the terminal device in the copyright protection system stores the non-original content in advance. This saves the need to perform the irreversible conversion on the original content when moving the content to the storage medium. As a result, a processing load for content movement can be lightened.
Here, the non-original content may be generated by encrypting the converted content using the converted decryption block as an encryption key, wherein the converted decryption block is deleted from the terminal device after the generation of the non-original content, and the decryption block obtaining unit performs the irreversible conversion on the original content to generate the converted content, and obtains the converted decryption block from the generated converted content.

According to this construction, when decrypting the non-original content, the terminal device in the copyright protection system generates the converted decryption block included in the converted content, from the original content. This saves the need to store a decryption key for decrypting the non-original content in advance.
Here, the original content storage unit may store the original content in a form of encrypted content with the plurality of blocks being in an encrypted form, wherein the decryption block obtaining unit decrypts the decryption block in the encrypted form, and performs the irreversible conversion on the decrypted decryption block to generate the converted decryption block, and the encryption unit encrypts the block in the encrypted form using the encryption key to generate a double encrypted block, and replaces the block in the encrypted form in the original content storage unit with the double encrypted block.

According to this construction, the terminal device in the copyright protection system double encrypts the block. This enhances the security of the original content.
Here, the converted content write unit may encrypt the converted content to generate encrypted converted content, and write the encrypted converted content and decryption key information for decrypting the encrypted converted content, to the storage medium, wherein the content storage unit stores the encrypted converted content and the decryption key information.

According to this construction, the terminal device in the copyright protection system writes the-encrypted converted content to the storage medium. This enhances the security of the converted content.
Here, the copyright protection system may further include a mobile information terminal, wherein the mobile information terminal reads the encrypted converted content and the decryption key information from the storage medium, decrypts the read encrypted converted content using the decryption key information to generate the converted content, and reproduces the generated converted content.

According to this construction, the mobile information terminal in the copyright protection system can reproduce the converted content generated by applying the irreversible conversion to the original content, whilst the terminal device cannot reproduce the original content. Hence the copyright of the original content can be protected.

### Industrial Applicability

The copyright protection system described above can be used recurrently and continuously, in an industry for distributing content to users, an industry for manufacturing content recording/reproduction devices, and an industry for selling content recording/reproduction devices.

## Claims

1. A terminal device for moving content to a portable storage medium, comprising:
an original content storage unit operable to store original content composed of a plurality of blocks;
a converted content generation unit operable to perform an irreversible conversion on the original content, to generate converted content;
a converted content write unit operable to write the converted content to the storage medium;
an encryption unit operable to encrypt any of the plurality of blocks of the original content using an encryption key to generate an encrypted block, and replace the block in the original content storage unit with the encrypted block;
a key write unit operable to write the encryption key to the storage medium; and
a key deletion unit operable to delete the encryption key used for the encryption from the terminal device.

2. The terminal device of Claim 1,
wherein the original content storage unit stores the original content in a form of encrypted content with the plurality of blocks being in an encrypted form,
the converted content generation unit decrypts the encrypted content to generate the original content, and performs the irreversible conversion on the generated original content to generate the converted content, and
the encryption unit encrypts the block in the encrypted form using the encryption key to generate a double encrypted block, and replaces the block in the encrypted form in the original content storage unit with the generated double encrypted block.

3. The terminal device of Claim 2,
wherein the encryption unit encrypts the plurality of blocks in the encrypted form to generate a plurality of double encrypted blocks, and replaces the plurality of blocks in the encrypted form in the original content storage unit respectively with the generated plurality of double encrypted blocks.

4. The terminal device of Claim 3,
wherein the encryption unit generates a plurality of different encryption keys in a one-to-one correspondence with the plurality of blocks in the encrypted form, and encrypts the plurality of blocks in the encrypted form respectively using the plurality of encryption keys to generate the plurality of double encrypted blocks, and
the key write unit writes the plurality of encryption keys generated by the encryption unit, to the storage medium.

5. The terminal device of Claim 3,
wherein the encryption unit generates a predetermined number of encryption keys, and encrypts the plurality of blocks in the encrypted form using the predetermined number of encryption keys in turn to generate the plurality of double encrypted blocks, the predetermined number being less than a number of the plurality of blocks, and
-the key write unit writes the predetermined number of encryption keys generated by the encryption unit, to the storage medium.

6. The terminal device of Claim 3,
wherein the plurality of blocks in the encrypted form are stored in the original content storage unit in a reproduction order,
the encryption unit includes:
a function storage unit operable to store a one-way function in advance;
a first key generation unit operable to generate key data;
a second key generation unit operable to generate a plurality of ordinal encryption keys in a one-to-one correspondence with the plurality of blocks in the encrypted form, each of the plurality of ordinal encryption keys being generated by applying the one-way function to the key data a number of times which depends on a position of a corresponding block in the encrypted form in the reproduction order;
an encrypted block generation unit operable to encrypt the plurality of blocks in the encrypted form respectively using the plurality of ordinal encryption keys generated by the second key generation unit, to generate the plurality of double encrypted blocks; and
a block replacement unit operable to replace the plurality of blocks in the encrypted form in the original content storage unit respectively with the plurality of double encrypted blocks generated by the encrypted block generation unit, and
the key write unit writes the key data generated by the first key generation unit, to the storage medium.

7. The terminal device of Claim 2,
wherein the converted content write unit encrypts the converted content to generate encrypted converted content, and, instead of writing the converted content to the storage medium, writes the encrypted converted content and decryption key information for decrypting the encrypted converted content to the storage medium.

8. The terminal device of Claim 7,
wherein the converted content write unit generates the encrypted converted content and writes the encrypted converted content, by encrypting each of the plurality of blocks which have been converted in the generation of the converted content to generate an encrypted converted block, and writing the encrypted converted block to the storage medium.

9. The terminal device of Claim 8, after writing the encrypted converted content and the decryption key information to the storage medium and replacing the block in the encrypted form in the original content storage unit with the double encrypted block, further comprising:
a converted content deletion unit operable to perform control relating to deletion of the encrypted converted content and the decryption key information from the storage medium; and
a decryption unit operable to, after the converted content deletion unit performs the control relating to the deletion, read the encryption key from the storage medium, decrypt the double encrypted block using the read encryption key as a decryption key to generate the block in the encrypted form, and replace the double encrypted block in the original content storage unit with the generated block in the encrypted form.

10. The terminal device of Claim 9, further comprising:
a reproduction unit operable to reproduce the original content,
wherein the decryption unit decrypts the plurality of blocks in the encrypted form to generate the original content, and outputs the generated original content to the reproduction unit.

11. The terminal device of Claim 1,
wherein the original content storage unit stores the original content in a form of encrypted content with the plurality of blocks being in an encrypted form,
the plurality of blocks in the encrypted form are stored in the original content storage unit in a reproduction order,
the converted content generation unit decrypts the encrypted content to generate the original content, and performs the irreversible conversion on the generated original content to generate the converted content, and
the encryption unit encrypts a set of blocks in the encrypted formwhich are consecutive in the reproduction order using the encryption key to generate a set of double encrypted blocks, and replaces the set of blocks in the encrypted form in the original content storage unit with the generated set of double encrypted blocks, the set of blocks having a total reproduction time length within a predetermined time.

12. The terminal device of Claim 11,
wherein the original content contains a plurality of frames generated by compression-coding a moving image,
each frame is made up of at least one block,
the plurality of blocks in the encrypted form have been generated by encryption using a device key unique to the terminal device,
the terminal device further comprises:
a block decryption unit operable to decrypt the set of blocks in the encrypted form which are consecutive in the reproduction order using the device key as a decryption key to generate the set of blocks, the set of blocks having the reproduction time length within the predetermined time, and
the encryption unit generates the set of double encrypted blocks by, from among one or more frames contained in the set of blocks, encrypting an independent frame that does not depend on a remaining frame using the device key and the encryption key in the stated order, and encrypting the remaining frame using the device key, and replaces the set of blocks in the encrypted form in the original content storage unit with the generated set of double encrypted blocks.

13. The terminal device of Claim 1 for moving content to a portable storage medium, comprising:
an original content storage unit operable to store original content composed of a plurality of blocks including a decryption block;
a non-original content storage unit operable to store non-original content generated by encrypting converted content which is generated by performing an irreversible conversion on the original content;
a decryption block obtaining unit operable to obtain, from the original content, a converted decryption block included in the converted content and used for decrypting the non-original content;
a converted content generation unit operable to decrypt the non-original content using the obtained converted decryption block, to generate the converted content;
a converted content write unit operable to write the converted content generated by the converted content generation unit, to the storage medium;
an encryption unit operable to encrypt any of the plurality of blocks of the original content using an encryption key to generate an encrypted block, and replace the block in the original content storage unit with the encrypted block;
a key write unit operable to write the encryption key to the storage medium; and
a key deletion unit operable to delete the encryption key used for the encryption from the terminal device.

14. The terminal device of Claim 13,
wherein the non-original content is generated by encrypting the converted content using the converted decryption block as an encryption key,
the converted decryption block is deleted from the terminal device after the generation of the non-original content, and
the decryption block obtaining unit performs the irreversible conversion on the original content to generate the converted content, and obtains the converted decryption block from the generated converted content.

15. The terminal device of Claim 14,
wherein the original content storage unit stores the original content in a form of encrypted content with the plurality of blocks being in an encrypted form,
the decryption block obtaining unit, instead of performing the irreversible conversion on the original content to generate the converted content and obtaining the converted decryption block, decrypts the decryption block in the encrypted form, and performs the irreversible conversion on the decrypted decryption block to generate the converted decryption block, and
the encryption unit encrypts the block in the encrypted form using the encryption key to generate a double encrypted block, and replaces the block in the encrypted form in the original content storage unit with the double encrypted block.

16. The terminal device of Claim 15,
wherein the encryption unit encrypts the plurality of blocks in the encrypted form to generate a plurality of double encrypted blocks, and replaces the plurality of blocks in the encrypted form in the original content storage unit respectively with the generated plurality of double encrypted blocks.

17. The terminal device of Claim 16,
wherein the encryption unit generates a plurality of different encryption keys in a one-to-one correspondence with the plurality of blocks in the encrypted form, and encrypts the plurality of blocks in the encrypted form respectively using the plurality of encryption keys to generate the plurality of double encrypted blocks, and
the key write unit writes the plurality of encryption keys generated by the encryption unit, to the storage medium.

18. The terminal device of Claim 16,
wherein the encryption unit generates a predetermined number of encryption keys, and encrypts the plurality of blocks in the encrypted form using the predetermined number of encryption keys in turn to generate the plurality of double encrypted blocks, the predetermined number being less than a number of the plurality of blocks, and
the key write unit writes the predetermined number of encryption keys generated by the encryption unit, to the storage medium.

19. The terminal device of Claim 16,
wherein the plurality of blocks in the encrypted form are stored in the original content storage unit in a reproduction order,
the encryption unit includes:
a function storage unit operable to store a one-way function in advance;
a first key generation unit operable to generate key data;
a second key generation unit operable to generate a plurality of ordinal encryption keys in a one-to-one correspondence with the plurality of blocks in the encrypted form, each of the plurality of ordinal encryption keys being generated by applying the one-way function to the key data a number of times which depends on a position of a corresponding block in the encrypted form in the reproduction order;
an encrypted block generation unit operable to encrypt the plurality of blocks in the encrypted form respectively using the plurality of ordinal encryption keys generated by the second key generation unit, to generate the plurality of double encrypted blocks; and
a block replacement unit operable to replace the plurality of blocks in the encrypted form in the original content storage unit respectively with the plurality of double encrypted blocks generated by the encrypted block generation unit, and
the key write unit writes the key data generated by the first key generation unit, to the storage medium.

20. The terminal device of Claim 15,
wherein the converted content write unit encrypts the converted content to generate encrypted converted content, and writes the encrypted converted content and decryption key information for decrypting the encrypted converted content, to the storage medium.

21. The terminal device of Claim 20,
wherein the non-original content storage unit stores the non-original content which is generated by converting the plurality of blocks and then encrypting the converted plurality of blocks using the converted decryption block as an encryption key,
the converted content write unit includes:
a first generation unit operable to decrypt the plurality of encrypted converted blocks to generate the plurality of converted blocks;
a second generation unit operable to encrypt the plurality of converted blocks generated by the first generation unit, to generate a plurality of re-encrypted converted blocks; and
a write unit operable to write the plurality of re-encrypted converted blocks generated by the second generation unit to the storage medium.

22. The terminal device of Claim 21, after writing the encrypted converted content and the decryption key information to the storage medium and replacing the block in the encrypted form in the original content storage unit with the double encrypted block, further comprising:
a converted content deletion unit operable to perform control relating to deletion of the encrypted converted content and the decryption key information from the storage medium; and
a decryption unit operable to, after the converted content deletion unit performs the control relating to the deletion, read the encryption key from the storage medium, decrypt the double encrypted block using the read encryption key as a decryption key to generate the block in the encrypted form, and replace the double encrypted block in the original content storage unit with the generated block in the encrypted form.

23. The terminal device of Claim 22, further comprising:
a reproduction unit operable to reproduce the original content,
wherein the decryption unit decrypts the plurality of blocks in the encrypted form to generate the original content, and outputs the generated original content to the reproduction unit.

24. The terminal device of Claim 14,
wherein the original content storage unit stores the original content in a form of encrypted content with the plurality of blocks being in an encrypted form,
the plurality of blocks in the encrypted form are stored in the original content storage unit in a reproduction order,
the encryption unit encrypts a set of blocks in the encrypted form which are consecutive in the reproduction order using the encryption key to generate a set of double encrypted blocks, and replaces the set of blocks in the encrypted form in the original content storage unit with the generated set of double encrypted blocks, the set of blocks having a total reproduction time length within a predetermined time.

25. The terminal device of Claim 24,
wherein the original content contains a plurality of frames generated by compression-coding a moving image,
each frame is made up of at least one block,
the plurality of blocks in the encrypted form have been generated by encryption using a device key unique to the terminal device,
the terminal device further comprises:
a block decryption unit operable to decrypt the set of blocks in the encrypted form which are consecutive in the reproduction order using the device key as a decryption key to generate the set of blocks, the set of blocks having the reproduction time length within the predetermined time, and
the encryption unit generates the set of double encrypted blocks by, from among one or more frames contained in the set of blocks, encrypting an independent frame that does not depend on a remaining frame using the device key and the encryption key in the stated order, and encrypting the remaining frame using the device key, and replaces the set of blocks in the encrypted form in the original content storage unit with the generated set of double encrypted blocks.

26. A copyright protection system for moving content from a terminal device to a portable storage medium,
the terminal device comprising:
an original content storage unit operable to store original content composed of a plurality of blocks;
a converted content generation unit operable to perform an irreversible conversion on the original content, to generate converted content;
a converted content write unit operable to write the converted content to the storage medium;
an encryption unit operable to encrypt any of the plurality of blocks of the original content using an encryption key to generate an encrypted block, and replace the block in the original content storage unit with the encrypted block;
a key write unit operable to write the encryption key to the storage medium; and
a key deletion unit operable to delete the encryption key used for the encryption from the terminal device, and
the storage medium comprising:
a content storage unit operable to store the converted content.

27. A content movement method used in a terminal device for moving content to a portable storage medium, the terminal device including an original content storage unit operable to store original content composed of a plurality of blocks, the content movement method comprising steps of:
performing an irreversible conversion on the original content to generate converted content;
writing the converted content to the storage medium;
encrypting any of the plurality of blocks of the original content using an encryption key to generate an encrypted block, and replacing the block in the original content storage unit with the encrypted block;
writing the encryption key to the storage medium; and
deleting the encryption key used for the encryption from the terminal device.

28. A content movement program used in a terminal device for moving content to a portable storage medium, the terminal device including an original content storage unit operable to store original content composed of a plurality of blocks, the content movement program comprising steps of:
performing an irreversible conversion on the original content to generate converted content;
writing the converted content to the storage medium;
encrypting any of the plurality-of blocks of the original content using an encryption key to generate an encrypted block, and replacing the block in the original content storage unit with the encrypted block;
writing the encryption key to the storage medium; and
deleting the encryption key used for the encryption from the terminal device.

29. The content movement program of Claim 28, being stored on a computer-readable storage medium.
